Europäisches Patentamt

European Patent Office

Office européen des brevets

(19)

(11) **EP 0 838 063 B1**

(12) **EUROPEAN PATENT SPECIFICATION**

(45) Date of publication and mention
of the grant of the patent:
**14.04.1999 Bulletin 1999/15**

(21) Application number: **97902156.5**

(22) Date of filing: **03.02.1997**

(51) Int Cl.⁶: **G06F 17/60**

(86) International application number:
**PCT/DK97/00044**

(87) International publication number:
**WO 97/38383 (16.10.1997 Gazette 1997/44)**

(54) **METHOD AND DATA SYSTEM FOR DETERMINATION OF FINANCIAL INSTRUMENTS FOR THE USE OF FUNDING OF A LOAN WHICH IS AT LEAST PARTIALLY REFINANCED DURING ITS TERM TO MATURITY**

VERFAHREN UND COMPUTERSYSTEM ZUM BESTIMMEN EINES FINANZIELLEN INSTRUMENTS ZUR KONSOLIDIERUNG EINES WÄHREND SEINER LAUFZEIT ZUM TEIL REFINANZIERTEN KREDITS

PROCEDE ET SYSTEME INFORMATIQUE SERVANT A DETERMINER DES INSTRUMENTS FINANCIERS A UTILISER DANS LE FINANCEMENT D'UN EMPRUNT REFINANCE AU MOINS PARTIELLEMENT PENDANT SA DUREE JUSQU'A SON ECHEANCE

(84) Designated Contracting States:
**AT BE CH DE DK ES FI FR GB GR IE IT LI LU MC NL PT SE**
Designated Extension States:
**AL LT LV RO SI**

(30) Priority: **02.02.1996 DK 11496**
**15.02.1996 DK 16596**

(43) Date of publication of application:
**29.04.1998 Bulletin 1998/18**

(73) Proprietor: **Realkredit Danmark A/S**
**1590 Kobenhavn V. (DK)**

(72) Inventors:
- **ROHDE, Lars**
**DK-3460 Birkerod (DK)**
- **BORGERSEN, Borger**
**DK-2920 Charlottenlund (DK)**
- **PANDURO HANSEN, Liselotte, B.**
**DK-2100 Kobenhavn (DK)**
- **GRAVEN LARSEN, Bjarne**
**DK-2840 Holte (DK)**
- **DAHL, Jens**
**DK-4330 Hvalso (DK)**
- **MADSEN, Claus**
**DK-2100 Kobenhavn (DK)**
- **KURE, Jarl**
**DK-4600 Koge (DK)**

- **LINDAHL, Thomas**
**DK-2300 Kobenhavn S. (DK)**
- **HVID HANSEN, Thor**
**SE-200 11 Malmo 27 (SE)**
- **DYWREMOSE, Thomas**
**DK-4180 Soro (DK)**
- **BELTOFT, Karsten**
**DK-4000 Roskilde (DK)**
- **LARSEN, Arne**
**DK-4000 Roskilde (DK)**
- **ROSENKRANS, Mads**
**DK-2000 Frederiksberg (DK)**
- **SKJODT, Arne**
**DK-3660 Stenlose (DK)**
- **JORGENSEN, Ole**
**DK-4000 Roskilde (DK)**
- **MORTENSEN, Steen**
**DK-3450 Allerod (DK)**
- **TORNES-HANSEN, Stig**
**DK-2500 Valby (DK)**
- **KRISTIANSEN, Klaus**
**DK-1307 Kobenhavn K. (DK)**

(74) Representative:
**Plougmann, Vingtoft & Partners A/S**
**Sankt Annae Plads 11,**
**P.O. Box 3007**
**1021 Copenhagen K (DK)**

(56) References cited:
WO-A-91/11772          DE-A- 4 136 320
US-A- 4 742 457

• PROCEEDINGS OF THE 8TH ANNUAL
  CONFERENCE ON COMPUTERS AND
  INDUSTRIAL ENGINEERING, ORLANDO, FL,
  USA, 19-21 MARCH 1986, vol. 11, no. 1-4, ISSN
  0360-8352, COMPUTERS & INDUSTRIAL
  ENGINEERING, 1986, UK, pages 114-118,
  XP000615097 OH K H: "When is a good time to
  refinance? Illustrating income property cases on
  the computer"

• COMPUTERS IN AGRICULTURE 1994.
  PROCEEDINGS OF THE 5TH INTERNATIONAL
  CONFERENCE, PROCEEDINGS OF 5TH
  INTERNATIONAL CONFERENCE ON
  COMPUTERS IN AGRICULTURE, ORLANDO, FL,
  USA, 6-9 FEB. 1994, 1994, ST.JOSEPH, MI, USA,
  AMERICAN SOC. AGRIC. ENG, USA, pages
  570-573, XP000613423 CUDE B ET AL: "Home
  Ownership: Can You Afford It? (Software
  package)"
• IBM TECHNICAL DISCLOSURE BULLETIN, vol.
  38, no. 1, January 1995, NEW YORK, US, pages
  83-84, XP002021534 ANONYMOUS: "Personal
  Optimized Decision/Transaction Program"
• ACCOUNTING TECHNOLOGY, FEB. 1994, USA,
  vol. 10, no. 2, ISSN 0883-1866, pages 45-46,
  XP000613413 ZUCKERMAN L K: "Amortizer Plus
  for Windows and DOS"

**Description**

INTRODUCTION

This invention concerns a method and a data processing system for calculation of the type, the number and the volume of financial instruments for funding of a loan with equivalent proceeds to a debtor, the loan being designed to be at least partially refinanced during the remaining term to maturity of the loan. The results of the method according to the invention may be used by the creditor, i.e. a financial institution such as a mortgage credit institution in order to secure that such a loan is funded in such a way that the interest rate risks such as imbalances in the payment flow are avoided or minimized. Thus, by the use of the results of the method according to the invention the creditor has the possibility of creating a hedge between lending and funding.

In the refinancing of a loan other financial instruments than the instruments which have formed the basis of the principal of the original loan may be used, which is the reason why, in connection with refinancing, an adjustment of the interest rate on the loan may appear as compared to the interest level applicable at the time of the refinancing. Loans which are fully or partially refinanced during the term to maturity of the loan are thus termed Loans with Adjustable Interest Rates (LAIR). An example of the financial instruments is non-callable bullet bonds. In the following, financial instruments are also called funding instruments, just as funding principal is also used as a term for the financial instruments constituting the principal.

BACKGROUND FOR THE INVENTION AND INTRODUCTION TO THE INVENTION.

In the Danish mortgage credit market callable loans used to be far the dominating type of loans, and, therefore, callable bonds in a pure "pass through" form were also as dominating as bonds. For a number of years, up to the withdrawal of the permission to grant cash loans in 1985 by the Danish Ministry of Housing, mortgage credit institutions also offered the so-called loans with adjustable interest rates. The former loans with adjustable interest rates were characterized as follows:

1) Long-term credit commitment.
2) Funding by the issue of bonds with a term to maturity of 1 to 5 years every fifth year.
3) Fixed interest rate in successive periods of 5 years.
4) The underlying bonds with a term to maturity of 1 to 5 years are non-callable. This gives the debtor the possibility to terminate the loan at par prior to the first occurring interest rate adjustment.

The Danish loans with adjustable interest rates did not turn out very successfully meaning that only per milles of the total lending made by mortgage credit institutions was granted as loans with adjustable interest rates. The reasons were, probably, that the conversion premium was insignificant at that time due to a very large difference between interest at market price and coupon rate and in addition, the market of investors did not pay as much attention to the problem as today. Therefore, the difference in yields between callable and non-callable bonds was not sufficiently large in itself to make loans with adjustable interest rates attractive. In addition to that, the product was not transparent seen from the debtor's side. An aspect which might also have had some influence at times was that a continued rise in the Danish interest level was expected so that the debtor would not expect an interest rate adjusted loan to be advantageous in the long run. Finally, the former structure of loans with adjustable interest rates involved an arbitrary and unpredictable interest risk every fifth year. Most likely, these conditions explain the poor supply in these years.

In June 1993 certain Danish tax laws were changed so that the mortgage credit institutions were, in reality, once again given the opportunity to offer loans with adjustable interest rates.

This offers the possibility of changing the long-term mortgaging market so that in the future the funding products will be attractive to foreign investors in the future. A precondition is, probably, that bonds are offered in conformity with international practice, e.g. as non-callable bullet bonds. It has therefore been of interest to examine whether varieties of loans with adjustable interest rates can be made attractive to the debtors.

It must be assumed that many debtors - especially in the segment comprising private customers - still think that the interest risk in connection with the traditional design of loans with adjustable interest rates is unacceptably high, the traditional loans with adjustable interest rates being connected with a risk of, in principle, unlimited, intermittent increases in the interest rate. Therefore, it is of interest to examine whether the design behind loans with adjustable interest rates may be combined with a gradual interest rate adjustment over time.

A characteristic feature of traditional loans with adjustable interest rates was a match between the term to maturity of the funding instrument having the longest term to maturity and the period between interest rate adjustments, viz. 5 years. If this precondition is abolished a wide range of opportunities as to funding and interest rate adjustment will, in principle, appear.

Thus, an opportunity arises as to secure a gradual adjustment of the borrowing costs in relation to the market interest rate with an adjustment time depending on the maximum term to maturity of the underlying bond used for the interest rate adjustment and of the weight with which the individual bond used for the interest rate adjustment is included.

If the short-term interest rate is systematically lower than the long-term interest rate it will be possible to reduce debtor's long-term borrowing costs. Furthermore, borrowing costs may, as mentioned above, be reduced compared to callable bonds due to the absence of the call right and through increased liquidity and internationalization of sales.

In connection with loans with adjustable interest rates, relations to the balance principle must be mentioned. It is a leading principle in the legal regulation of the activities of Danish mortgage credit institutions that the institutions must not undertake an interest and funding risk. On the face of it, designs of loans with adjustable interest rates are contrary to these basic principles as the funding side has a substantially shorter term to maturity than has the lending side. The traditional loans with adjustable interest rates are nevertheless regarded as lying within the balance principle seen in the perspective that debtor accepts to pay any interest rate that may occur in connection with a future refinancing. In principle, we are here dealing with a "pass through" which does not incur any risk to the creditor.

In connection with funding of a new type of loans with adjustable interest rates with a variety of e.g. non-callable bullet bonds, three conditions must be fulfilled according to Danish practice and legislation:

1. The volumes of the individual amounts of each funding instrument must be determined in such a way that the market price of the funding instruments equals the principal of the loan.

2. Debtor's borrowing rate must be determined in such away that the borrowing rate equals the yield of the funding portfolio, the yield being based on the interest where the present value of a future payment flow of funding instruments equals the remaining debt on debtor's loan.

3. In addition, the requirements as to a balance between payments from debtor and payments to creditor must be fulfilled.

Former calculations of principals to traditional loans with adjustable interest rates did not take the above mentioned requirement to the interest rate into consideration.

As to funding of traditional loans with adjustable interest rates there was an unambiguous connection between the maximum term to maturity of funding instruments and the interest rate adjustment period. This structure may briefly be explained like this: The funding principle was based on a 5 year period in which debtor's interest rate was fixed. The traditional loans with adjustable interest rates were funded by debtor by issuing underlying bonds with a term to maturity of 1 to 5 years.

This funding principle is, however, not compatible with the desire to issue a range of e.g. 10 non-callable bullet bonds with terms to maturity of 1 to 10 years and at the same time keep the duration of the interest rate adjustment period at e.g. 1-2 years.

Therefore, in Denmark there is a demand for a general funding principle comprising funding with the above-mentioned range of non-callable bullet bonds or other financial instruments suitable for that purpose. In international financial markets there is, at the moment, no tradition of a close connection between lending and funding of loans. During recent years the development has, however, been towards a larger attention on financial risks including the possibility of eliminating these risks so that it must be supposed that there will also be an international interest as to a general funding principle of the type described herein.

A technical problem in connection with such general funding principle is, however, that there is no knowledge of an efficient general calculation method for a computerized calculation of the volume of financial instruments or funding principals for the funding of a loan where at least a partial refinancing of a loan during the remaining term to maturity of the loan is made under the condition that the calculation result must partly fulfil the requirement that loan issuing institutions must not undertake interest or funding risk or at least they must or will not undertake such risks above a certain maximum, partly be able to contribute to minimize costs of the debtor so that the loan with adjustable interest rates gets as inexpensive as possible within the given preconditions.

BRIEF DESCRIPTION OF THE INVENTION

This problem has been solved by means of the present invention which provides a method for the processing of data by means of a computer, a computer system or a data processing system, in the following called a computer system according to which method the type, the number and the volume of financial instruments with regard to their function which may also be called funding principals, for the funding of a loan with equivalent proceeds to a debtor are determined, the loan being designed to be at least partially refinanced during the remaining term to maturity of the loan, requirements having been determined as to a maximum difference in proceeds between the total of the market price of the volume of the financial instruments used for the funding of the loan on the one hand and on the other hand the principal of the loan, and requirements having been determined as to a maximum difference between the interest rate and the yield of the financial instruments used for the funding, which method comprises:

(a) loading and storing, in a memory or a storage medium of the computer system, a first set of data indicating the parameters: principal of the loan, term to maturity, and profile of repayment of the loan,

(b) loading and storing, in a memory or a storage medium of the computer system, a second set of data indicating a desired/intended profile of refinancing, such as one or more point(s) in time at which refinancing is to be performed, and indicating the amount of the remaining debt to be refinanced at said point(s) in time,

and/or which second set of data indicating a desired/intended profile of funding such as a desired/intended number of financial instruments applied for the funding with their type and volume,

(c) loading and storing, in a memory or a storage medium of the computer system, a third set of data indicating a maximum difference in balance within a predetermined period, a maximum difference in proceeds and a maximum difference in interest rate equivalent to the difference between the interest rate on the loan and the yield of the financial instruments applied for the funding,

(d) determining and storing, in a memory or a storage medium of the computer system, a fourth set of data indicating a selected number of financial instruments with inherent characteristics such as type, price/market price, and date of the price/market price,

(e) determining and storing, in a memory or a storage medium of the computer system, a fifth set of data representing a first interest rate on the loan,

(f) calculating and storing, in a memory or a storage medium of the computer system, a sixth set of data representing a first profile of repayment and interest corresponding to repayment and interest for debtor as well as a first profile of remaining debt, the first profile of repayment and interest and the first profile of remaining debt being calculated on the basis of the principal of the loan, term to maturity, and profile of repayment loaded under (a), the profile of refinancing and/or profile of funding loaded under (b), and the interest rate on the loan determined under (e),

(g) selecting a number of financial instruments of the financial instruments under (d) stored, and calculating and storing a seventh set of data indicating the selected financial instruments with their volumes to be used in the funding of the loan, which seventh set of data is calculated on the basis of the under (f) determined first profile of repayment and interest and first profile of remaining debt, the under (b) indicated profile of refinancing, and/or the under (b) indicated profile of funding as well as the under (c) determined requirements to the maximum difference in balance, the maximum difference in proceeds, and/or the maximum difference in interest rate, and, in case of refinancing, where financial instruments from a previous funding have not yet matured, the type, the number and volume of these instruments, performing one or more recalculations, if necessary, including selecting a new number of the financial instruments stored under (d), if necessary, storing in a memory or a storage medium of the computer system after each recalculation, the recalculated interest rate, the recalculated profile of repayment and interest, the recalculated profile of remaining debt, and the selected financial instruments with their calculated volumes, until all under (c) indicated requirements have been fulfilled,

followed by, if desired, transcribing, transferring to a storage medium or transmitting to another computer system the combination so determined of the type, the number, and the volumes of financial instruments for funding of the loan, preferably together with the calculated interest rate, preferably together with the calculated profile of repayment and interest, and preferably together with the calculated profile of remaining debt.

Further to the loaded, determined and/or calculated data being stored in a memory or on a storage medium they may be transcribed to a display or a printer. The applied memories may e.g. be electronic memories such as ROM, PROM, EEPROM or RAM and the storage media may e.g. be tapes, discs or CD-ROM.

It will also be possible to load data for the use of or resulting from the data processing according to the invention in one set of memories or storage media which may be part of the first or second computer system and to transfer these data onto a second set of memories or storage media which may be part of the second or first computer system, these data being transferred e.g. via a data transmission line or net combining the first and the second computer system, or wireless e.g. electro-magnetically or optically.

The method according to the invention calculates the volumes of the individual financial instruments which are to be sold to finance the loan. Normally, these volumes will not be whole or round figures, and in certain cases they may be fairly small. The loan issuing institution solves the divisibility problem by adding together many small loans when financial instruments are sold in the market. The essential part is, naturally, that the loan issuing institution of the individual loan makes an exact registration of the volume of each individual financial instruments applied for the funding.

It will be appreciated that the order of the above-mentioned loadings/determinations/storages (a)-(d) is arbitrary, and, therefore, that the sequence in letters does not indicate an equivalent, compulsory sequence in the steps. Step (e) may also be carried out anywhere else in the sequence, unless, which is often preferred, the computer system is selected to calculate a first guess at the interest rate in which case step (e) will follow at least step (d). Instead of the expression that data are loaded/determined and stored in the individual steps, it may simply be expressed (and should be regarded as an equivalent to the first expression form) in that the method according to the invention by means of the computer system is calculated on the basis of stored input of data set (a) - (e), the first interest rate (e) as mentioned above may be a guess, naturally, which is also made by means of the computer system according to predefined rules, and which is then stored.

The requirement as to the maximum difference in balance is related to a period in which according to the legislation or practice forms the basis in connection with the calculations, may be a calendar year, a year which does not follow the calendar year, but comprises the date of an interest and repayment to a creditor or another period either comprising or not comprising the date of an interest and repayment to a creditor. In Denmark a strict balance requirement must be fulfilled per calendar year.

In the calculation of data corresponding to the volumes of the financial instruments applied for the funding, the requirement as to a maximum difference in balance according to Danish rules of mortgage loans is given by a strict balance, i.e. that no substantial difference in balance occurs or expressed differently, the difference is practically zero. The method according to the invention may also be used in connection where a certain difference in balance is tolerated or perhaps even desired, this tolerance or positive difference in balance being stored as a part of the data set in (c).

In connection with the calculation according to the invention both the requirement as to the difference in proceeds and the requirement as to the difference in interest rates and the requirement as to the difference in balance may be indicated in different ways. For example, data indicating a direct maximum difference between the total amount of the market price of the volumes of the financial instruments applied for the funding and the principal of the loan may be loaded, just as data indicating a direct maximum difference between interest rate and the yield of the financial instruments applied for the funding may be loaded, and data directly indicating a maximum difference in balance allowed. In a preferred embodiment of the method, the requirement as to a maximum difference in proceeds is, however, loaded as data indicating a convergence condition for the difference in proceeds and/or the requirement as to the maximum difference in balance between interest rate and the yield is given by the storing of data indicating a condition of convergence for the difference in interest rate and/or the requirement as to the maximum difference in balance is given by means of a condition for convergence for the difference in balance.

Usually, in connection with the raising of the loan there is no coincidence of on the one hand the receipt date and/or repayment date of the loan and on the other hand the payment date of the financial instruments which is the reason why the calculation according to the method is preferably adjusted as to a possible difference between on the one hand the disbursement date of the loan and/or repayment date and on the other hand the payment date of the financial instruments in that a proportional adjustment is made as to the already past part or the remaining part of the payment period and redemption period, respectively. Data may here be loaded or calculated e.g. indicating an adjustment factor for the use of the calculation.

The calculation method according to the present invention may also be used in cases where the loaded data indicate that more than one payment will be made by the debtor within one creditor payment period.

In order to be able to calculate the volume of financial instruments, information is loaded or presented under (b) as to which point(s) in time refinancing is desirable and how much should be refinanced at the said points in time. In one case, which is important in practice, the loaded data indicate that full refinancing of the remaining debt is made by the end of a predetermined period which period is shorter than the term to maturity of the loan and in a second important case the loaded data indicate that a refinancing of the remaining debt is made with a fixed annual quota.

The method according to the invention may be used both for the determination of the number and the volume of financial instruments in cases where the loan is to be calculated for the first time, i.e. the first funding situation as in the situation where a refinancing is calculated. The expression funding thus both comprises "new funding" and "refinancing". Apart from parameters mentioned under (a)-(e), in the refinancing situation calculations include information on type, number and volume of the financial instruments, provided that they have not matured at the points in time of the refinancing. This information is usually stored in the computer system from the previous calculation, but it is, of course, within the scope of the invention to load this information. It is appreciated that the parameters under (a)-(e) are parameters relating to the said funding situation, so that in cases where a refinancing is calculated the parameters will, naturally, relate to the remaining debt of the loan relating to the principal of the loan, and the parameters will relate to the remaining term to maturity relating to the term to maturity.

In the present description and claims, the expression "financial instruments" has the ordinarily applied meaning and thus covers, among others, all types of interest related debts, i.a. all types of bonds including zero-coupon bonds and derivatives like options, interest swaps, CAPS and FLOORS.

When in the method according to the invention calculation is made as to derivatives which are not directly interest bearing, it is appropriate to begin by making a calculation of the expected payment flows in order to be able to calculate an internal interest rate, whereby the payment flow or flows or the likely payment flow/flows is/are expressed in parameters corresponding to the above-mentioned parameters for interest bearing debts first and foremost a yield.

An option at a price of DKK 100 has a probability of 50 % to result in proceeds amounting to DKK 210 at the end of a term to maturity of 1 year as well as a probability of resulting in proceeds of DKK 0 based on a purely statistic calculation of the average proceeds amounting to DKK 105 and an expression of the relevant parameters as a price of DKK 100, a market price of 100 and an interest rate of 5% per year which - together with the interest rate on other applied financial instruments - must form the basis, when it is being checked whether the requirement as to maximum difference in interest rate has been fulfilled. Then these parameters may be loaded in the computer system. Alternatively, and often desired, the data which are loaded as characteristics for the instruments in (d) above may be data defining the said financial instruments directly, and the computer system may be prepared to make a recalculation of parameters characterizing an interest bearing debt according to predetermined principles. In case of CAPS or FLOORS the same procedure may be used as the same payment flows may be expressed by means of equivalent interest bearing instruments the characteristics of which may then be stored as indicated in (d), or the computer system may preferably be prepared to make a recalculation of the parameters characterising an interest bearing claim according to predetermined principles. It is appreciated that in the individual case a calculation may be made on the basis that in the individual funding or refinancing situation a mixture of different types of financial instruments may be used, each type of instrument indicating the characteristics to be applied for the calculation. In this situation the fulfilment of the requirement as to a maximum permitted difference in interest rate is checked preferably on the basis of a total calculation which is based on the total payment flows from all financial instruments applied. Alternatively, a weighted average of interest rates of the individual instruments may be used.

Thus, in connection with the method according to the invention calculations may be made on the basis of different types of financial instruments or funding principals, but in one case, which is important in practice, a calculation is made on the basis of bonds with a maximum term to maturity corresponding to the refinancing period. The bonds are usually non-callable bullet bonds including zero coupon bonds. As explained above, the method according to the invention may be used for the calculation in connection with other types of financial instruments like e.g. bonds used for serial loans, bonds used for annuity loans, options, CAPS or FLOORS.

The conventional meaning of the type of a financial instrument is the combination of all basic information or basic data altogether defining the said financial instrument unambiguously, so for mortgage bonds it is the nominal principal, face value, date of maturity, all dates fixed for payment of interest and the ex-coupon date, i.e. the deadline for the person to receive the first occurring yield on the bond as well as possibly the call yield, i.e. the formula used for the calculation of the payment flow of the bond to an annual yield. The number of financial instruments indicates how many different financial instruments should be indicated as having been applied. The volume indicates how many entities of the individual financial instrument or how large a nominal sum of the individual financial instruments should be indicated as having been applied.

The expressions "profile of repayment", "profile of remaining debt" and "profile of repayment and interest" indicate the development over time of repayment, remaining debt and repayment and interest, respectively, according to normal practice.

The expressions "profile of financing" and "profile of funding", respectively, indicate the type, the number and the volume of the financial instruments applied for funding. In the present description and claims, the expression may be used for both the desired or intended profile of funding loaded and stored under (b) and which may not be fulfilled, and for the exact profile of funding which is the result of the calculations after the application of the method according to the invention.

The expression "profile of refinancing" indicates which points in time and with which amounts the loan must be refinanced.

It should be noted that the desired/intended profile of refinancing which is stored as a second set of data under (b) above, may in some cases be rewritten as a profile of funding, i.e. as a number of financial instruments with their type and volume. An indication of a desired annual interest rate adjustment percentage of 100 may, for example, be rewritten in such a way that the loan is to be funded desirably only through sales of bullet bonds with a term to maturity of 1 year. It is appreciated that the invention also comprises the case where a rewriting has taken place in the data loaded under (b).

The method according to the invention determines data representing an interest rate and forming the starting point of the calculations.

In cases where in (d) no instrument has been selected having payment within the period of the first occurring point in time when according to the profile of refinancing loaded under (b) a refinancing must be performed, the calculations concern a situation where the result of at least one of the financial instruments for the funding will be negative, i.e. that the debtor in the first occurring period must buy one or more financial instruments in order for the balance requirement to be fulfilled. As it appears from the following, it is presently preferred that measures are made to change the calculations so that they do not result in negative volumes of the financial instruments.

In cases where it is indicated in the loaded profile of refinancing that full refinancing is to be made, the financial instruments applied for the funding e.g. may be calculated in the same way as the initial financial instruments, in other words, a new calculation may be made according to the method of the volume of financial instruments for the funding of a new loan, where the principal of the new loan is equivalent to the principal of the loan to be refinanced.

In another embodiment of the invention it may be indicated in the loaded data equivalent to the profile of refinancing that a partial refinancing of the remaining debt must be made. Thus, according to the present calculation method a solution as to the volume of the financial instruments constituting the principal may be found, if e.g. it has been loaded that a refinancing is desired periodically with a predetermined period, the period being shorter than the term to maturity of the loan. A solution may also be calculated if it is indicated that a periodical refinancing of a fraction of the remaining debt of the loan, the denominator corresponding to the total number of years of the financial instrument having the longest term to maturity when the loan was raised. Here the selected period may be e.g. 1 year, but other periods like 2, 4, 5, 6 or 10 years may be selected. Furthermore, periods corresponding to a total number of months, e.g. 2, 3, 4 and 6 months may be selected.

In connection with full or partial refinancing, normally one or several new refinancing instruments will be needed which are not comprised in the range of initial financial instruments forming the range of funding principals applied when the loan was raised, or when a previous refinancing of the loan was made. Normally, these new refinancing instruments will have a term to maturity, so that they mature at a later point in time than the points in time at which the range of initial financial instruments mature.

In case of partial refinancing, the refinancing may also include a funding by the use of an additional funding to the financial instruments or funding principals remaining at the points in time of the refinancing. In the following, the volume of such additional funding and new refinancing instruments are also indicated as the additions to the volume of the financial instruments.

The calculation method according to the present invention may also provide a solution as to the volume of the additions to the financial instruments used in the funding. In connection with calculation of the amount of these additions, data comprising possible new refinancing instruments within the range of selected financial instruments must be loaded. In case of calculation of refinancing the requirements to proceeds may e.g. be given as a requirement to the difference between on the one hand a funding demand based on the balance requirement, and on the other hand, the sum of the market price of the additions to the financial instruments.

As mentioned before, a refinancing may be made by the issue of new financial instruments as well as an additional issue of already applied financial instruments. However, it will also be possible to repurchase already applied financial instruments. In cases where a repurchase is permitted, the volume of the financial instruments may be calculated as a calculation in the start or initial situation.

The Danish mortgage credit institutions usually prefer that no repurchase is made. In this case the amount of the additions to the financial instruments according to a preferred embodiment of the method will be calculated taking into consideration the volumes of the previously applied financial instruments at the points in time of the refinancing, data being loaded indicating that no repurchase must be made within the applied ranges of financial instruments.

In an important embodiment of the invention, in the following detailed description also called Type F, the set of data under (b) indicates that a calculation has to be made in the case where a full refinancing of the remaining debt is to be performed periodically with a predetermined period, which period is shorter than the term to maturity of the loan, which method for determination of the indicated volumes of financial instruments in step (g) comprises calculating the difference in proceeds for the calculated volumes of the financial instruments applied for the funding and/or calculation of a change in the interest rate on the loan, said change in the interest rate preferably being calculated taking into consideration the calculated difference in proceeds, and calculating as to whether the change in the interest rate is so small that the interest rate on the loan fulfils the requirement as to a maximum difference in interest rate or a convergence condition of the difference in interest rate, or whether the change in the interest rate is so small that the requirement as to a maximum difference of proceeds or a convergence condition for the difference in proceeds is fulfilled.

In case the difference in proceeds or the difference in the interest rate is not fulfilled, the recalculations as to Type F include one or more interest rate iterations, each interest rate iteration including

calculating and storing, in a memory or a storage medium of the computer, data indicating a new interest rate, which is preferably based on the previous interest rate on the loan and the calculated change in the interest rate, calculating and storing, in a memory or a storage medium of the computer, data indicating a new profile of repayment and interest and new profile of remaining debt for debtor, which new profile of repayment and interest and new profile of remaining debt are calculated taking into consideration the new interest rate on the loan, the principal of the loan, term to maturity and profile of repayment loaded under (a) and the profile of refinancing and/or the profile of funding loaded under (b), and calculating and storing, in a memory or a storage medium of the computer system, data indicating a new set of volumes for the financial instruments applied for the funding.

The interest rate iteration is preferably made by using a numeric optimization algorithm or by "grid search".

Examples of numeric optimization algorithms are a Gauss-Newton algorithm, a Gauss algorithm, a Newton-Rampson algorithm, a quadratic hill climbing algorithm, a quasi-Newton algorithm, a maximum likelihood algorithm, a method of scoring algorithm and a BHHH algorithm. A Gauss-Newton algorithm has proved to be very appropriate as it appears from the detailed description of Type F.

When the relevant requirement(s) as to a maximum difference in proceeds and/or the requirement as to a maximum difference in interest is/are being fulfilled as to the Type F embodiment, it is appropriate to determine whether all the calculated volumes of financial instruments are positive. In case the calculated set of volumes comprises at least one negative volume, a selection may be to apply the result as such, meaning that the calculation indicates that the debtor is to buy one or more financial instruments in order to fulfil the balance requirement. As mentioned above, this is usually not preferable, and therefore the method according to the invention usually in this case further comprises either

i) selection of a new number of financial instruments among the under (d) stored financial instruments, in that one or more of the instruments in the new number of instruments is/are determined in such a way that the payment on this/these falls due relatively later in relation to the original number of financial instruments, whereafter a recalculation is made as indicated in connection with the description of the Type F embodiment now and in the following, or

ii) the negative volume or the negative volumes is/are set equal to 0, whereafter recalculation is made as indicated in connection with the description of the Type F embodiment now and in the following.

In case the loaded data indicate that a partial refinancing is to be made, the volumes of the financial instruments in a preferred embodiment applied for the funding or the refinancing is to be calculated to follow the remaining debt development appearing from the profile of the remaining debt. This calculation may include the use of a first function adapted to the remaining debt profile as explained in the following. For example, in case the loaded data indicate a difference between on the one hand the payment date of the loan and/or repayment date of the loan, and on the other hand the payment date of the financial instruments, it is possible in connection with the calculation according to a preferred embodiment of the invention to determine the volume or volumes of one or more financial instruments in such a manner that this instrument or these instruments does/do not follow the polynomial function, but contribute(s) to a solution to the above marginal conditions.

In a preferred embodiment of the invention a determination is made as to whether the calculated volumes of financial instruments fulfil one or more predetermined convergence condition(s). If such condition or condition(s) is/ are not fulfilled in connection with the method according to the present invention one or more iterations may be calculated until the new set of data of financial instruments fulfils one or more convergence condition(s).

In a preferred embodiment of the method according to the invention, the function coefficients are to be calculated on the basis of a difference in calculated proceeds and/or a difference in a calculated profile of refinancing, preferably corresponding to the difference between on the one hand a funding demand based on the balance requirement, and on the other hand a desired refinancing.

In case that the calculation according to this embodiment of the method determines that the calculated volumes of financial instruments applied for the funding or refinancing do not fulfil the determined requirements from the loaded data as to a difference in proceeds or a difference in the interest rate, then one or more recalculation(s) in the form of interest iterations will be made in a preferred embodiment, determining or calculating a new interest rate, whereafter a new set of financial instruments is calculated. An interest iteration is made until the requirements as to a difference in proceeds or difference in the interest rate is fulfilled. In chapters 3 and 4 examples provide a detailed explanation as to this embodiment of the method according to the invention.

The following is a detailed description of the case where a set of data (b) indicates a calculation in case that a partial refinancing of the remaining debt is to be made periodically within a predetermined period, the period being shorter than the term to maturity of the loan, e.g. in the way that the refinancing equals a fixed fraction of the remaining debt of the loan. In connection with this embodiment, which is called P in the following detailed description, some or all of the financial instruments applied for the funding are calculated in the first calculation in step (g) so that they primarily follow a shifted-level profile of remaining debt, whereafter, if necessary, recalculations are made until all under (c) indicated conditions are fulfilled.

The adjustment into a shifted-level profile of remaining debt appropriately occur in that the volume of some or all of the financial instruments in the calculation in step (g) and possibly in one or more recalculations made in step (g) are calculated by using a function which is adapted to a shifted-level profile of remaining debt. The appropriate function is a polynomial function with a maximum degree equivalent to the number of financial instruments applied.

The polynomial function is appropriately calculated by the use of a statistic curve fit method. It has been found that the method of the least squares is an appropriate statistic curve fit method, but other statistic curve fit methods like other maximum likelihood methods or cubic splines methods are also interesting methods for this use.

In the embodiment called Type P, a recalculation of all of or some of the in (f) and (g) mentioned data, and/or one or more function coefficient(s) to this function representing the shifted-level profile of remaining debt, and/or the interest rate takes place by use of iteration made by using numeric optimization algorithms or by grid search. Also in this case, as an optimization algorithm, one of the above optimization algorithms mentioned in connection with Type F may be used, and also in this case the optimization algorithm is, appropriately, a Gauss-Newton algorithm.

In case that the determined requirements as to the difference in proceeds and/or the difference in interest rates and/or the difference in balance calculated, taking into consideration the profile of refinancing loaded under (b) are not fulfilled, then the recalculations in connection with Type P embodiments may include one or more iterations, each iteration comprising

calculating and storing data indicating a new interest rate and/or
calculating and storing data indicating a new profile of repayment and interest and profile of remaining debt for debtor, which profile of repayment and interest and profile of remaining debt are calculated taking into consideration the new interest rate, the principal of the loan, term to maturity and repayment arrangement loaded under (a) and the profile of refinancing and/or the profile of funding loaded under (b), and/or
calculating and storing data indicating a new set of coefficients for the function which is adapted to the shifted-level profile of remaining debt, and/or
calculating and storing data indicating a new set of volumes of the financial instruments applied for the funding, which new set of volumes is calculated on the basis of the financial instruments already determined for the funding, and the new profile of repayment and interest, and the profile of remaining debt as well as the requirement as to the maximum difference in balance.

In the example mentioned below in the detailed description it has been chosen to iterate as to the proceeds requirement and taking into consideration the extended difference in balance of the profile of refinancing loaded under (b), and only when the two requirements are fulfilled, iteration is carried out as to the interest rate. It is appreciated that the iteration may be made in an arbitrary order, also including the iteration of the applied function, the so-called trend function.

In this case, the method in step (g) comprises determination of whether the calculated volumes of financial instruments fulfil at least two of two or more predetermined convergence conditions, which are preferably calculated taking into consideration a difference in calculated proceeds and a difference in calculated balance taking into consideration the profile of refinancing loaded under (b), and in the case that the calculated volumes of financial instruments do not fulfil these conditions, then the recalculations may include one or more iteration(s) of the coefficients for the function which is adjusted to a shifted-level profile of remaining debt, each iteration comprising

calculating and storing data indicating two or more new function coefficients for the function representing the shifted-level profile of remaining debt,
calculating and storing data indicating a new set of volumes for the financial instruments applied for the funding, which new set of volumes is calculated taking into consideration the new function representing the shifted-level profile of remaining debt,
determining whether the new set of calculated volumes of financial instruments fulfils the at least two or more predetermined convergence conditions,

until the new set of calculated volumes of financial instruments fulfils these conditions. This or these new function coefficient(s) is/are appropriately calculated taking into consideration the difference in calculated proceeds and a difference in balance calculated taking into consideration the profile of refinancing loaded under (b).

A calculation may be made as to the difference between the interest rate on the loan and the yield on the calculated volumes of the financial instruments, in that it is calculated whether the difference in interest rate is so small that it fulfils the requirement as to a maximum difference in interest rate or a convergence condition for the difference in interest rate, and in case the determined requirements as to the interest rate difference are not fulfilled, then the recalculations may comprise one or more interest iteration(s), each interest iteration comprising

calculating and storing a change in the interest rate, which change in the interest rate is preferably calculated taking into consideration the difference between the interest rate on the loan and the yield on the calculated volumes of the financial instruments, for instance by use of a Gauss-Newton algorithm,
calculating and storing data indicating a new interest rate which is preferably based on the previous interest rate and the calculated change in the interest rate to the interest rate,
calculating and storing data indicating a new profile of repayment and interest and profile of remaining debt for debtor, which profile of repayment and interest, and profile of remaining debt are calculated taking into consideration the new interest rate, the principal of the loan, term to maturity, and profile of repayment loaded under (a), and the profile of refinancing and/or the profile of funding loaded under (b),

calculating and storing data indicating a new set of coefficients for the function adapted to the shifted-level profile of remaining debt, and

calculating and storing data indicating a new set of volumes for financial instruments applied for the funding.

It is also within the scope of the invention in connection with the calculations as to Type P to determine all in one whether the calculated volumes of financial instruments fulfil at least three of three or more predetermined convergence conditions which are preferably calculated taking into consideration a difference in calculated proceeds, a difference in balance calculated taking into consideration the profile of refinancing loaded under (b) and a maximum difference in interest rates, and in case the calculated volumes of financial instruments do not fulfil these conditions, then allowing the recalculations to comprise one or more iteration(s), each iteration comprising

calculating and storing a change in the interest rate, which change in the interest rate is preferably calculated taking into consideration the difference between the interest rate on the loan and the yield of the financial instruments,

calculating and storing data indicating a new interest rate preferably based on the previous interest rate and the calculated change in the interest rate to the interest rate,

calculating and storing data indicating a new profile of repayment and interest and a profile of remaining debt for debtor, which profile of repayment and interest and profile of remaining debt for the debtor are calculated taking into consideration the new interest rate, the principal of the loan, term to maturity, and profile of repayment loaded under (a), and the profile of refinancing, and/or the profile of funding loaded under (b),

calculating and storing data indicating a new set of coefficients for the function adapted to the shifted-level profile of remaining debt, and

calculating and storing data indicating a new set of volumes for financial instruments applied for the funding, which new set of volumes is calculated taking into consideration the new function representing the shifted- level profile of remaining debt,

determining whether the new set of calculated volumes of financial instruments fulfils the at least three or more predetermined convergence conditions.

Also in this connection the iterations may be made by the use of one numeric optimization algorithm, preferably a three-dimensional Gauss-Newton algorithm.

In case the calculated set of volumes includes at least one negative volume when calculating type P, this or the negative volumes may preferably be set equal to 0, whereafter the calculations continue on the basis of the so determined volumes of financial instruments - to avoid negative volumes in the result, cf. the above comments concerning the normally undesired fact that debtor is to buy financial instruments.

According to an embodiment of the invention it will also be possible to determine the volumes of the applied financial instruments for the loan in cases where data are loaded corresponding to the profile of funding desired by the debtor comprising the desired financial instruments. In this case the calculations may also comprise the calculation as to whether the volumes of financial instruments in the indicated profile of funding fulfils the requirement as to a maximum difference in proceeds, and in case the indicated volumes do not fulfil this requirement, then according to a preferred embodiment of the invention one or more changes of the previously indicated volumes is/are carried out, carrying out changes until the new set of financial instruments fulfils the requirement as to a maximum difference in proceeds.

Further to the calculation of the proceeds requirement, it is preferred that a calculation is made as to whether the requirement for a maximum difference in balance is fulfilled, and in case the calculated volumes do not fulfil this requirement, one or more calculation(s) of the new financial instruments which do not fulfil the requirement as to a maximum difference in balance is/are made.

Preferably, a calculation of new financial instruments will be made for one or more financial instrument(s), to which repayments are to be made for a period, in which the requirement as to maximum difference in balance has not been fulfilled. In a preferred embodiment according to the invention, the calculation will perform for one or more financial instrument(s), to which repayments are to be made in the last period when the requirement as to a maximum difference in balance has not been fulfilled. Preferably, the calculation of new financial instruments is based on the difference in balance for the periods in which the corresponding previous financial instruments do not fulfil the requirement as to a maximum difference in balance.

In general, it applies according to the method according to the invention that it is often possible after the result has been reached to make a new calculation on the basis of other instruments with the intention of finding out whether a cheaper loan is obtainable.

The range of financial instruments determined under (d) is selected among a number of available financial instruments. It is appreciated that, if desired, this number of instruments may be loaded into a data base in the computer system or be available via a net and that, if desired, the determination may be performed automatically or semi-automatically by means of a computer system according to the previously determined criteria or functions.

The invention also relates to a data processing system such as a computer system for the determination of the type, the number and the volume of financial instruments for the funding of a loan with equivalent proceeds to a debtor, the loan being designed to be at least partially refinanced during the remaining term to maturity, requirements having been determined as to a maximum difference in balance between on the one hand payments on the loan and refinancing of remaining debt and on the other hand net payments to the owner of the financial instruments applied for the funding, requirements having been determined as to a maximum difference in proceeds between on the one hand the sum of the market price of the volumes of the financial instruments applied for the funding of the loan and on the other hand the principal of the loan, and requirements having been determined as to a maximum difference between the interest rate on the loan and the yield of the financial instruments applied for the funding, which data processing system comprises:

(a) means for loading and storing a first set of data which indicates the parameters: principal of the loan, term to maturity, and profile of repayment of the loan.
(b) means for loading and storing a second set of data which indicates a desired/intended profile of refinancing such as one or more point(s) in time at which refinancing is to be performed, and which profile indicates the part of the remaining debt to be refinanced at the said point(s) in time,
and/or which second set of data indicates a desired/intended profile of funding such as a for desired/intended number of financial instruments for the funding and/or the volumes of such said financial instruments,
(c) means for loading and storing a third set of data which indicates a maximum difference in balance within a predetermined period, a maximum difference in proceeds and a maximum difference between the interest rate on the loan and the yield of the financial instruments applied for the funding,
(d) means for loading and storing a fourth set of data which indicates a selected number of financial instruments with inherent characteristics such as type, price/market price, and date of price/market price,
(e) means for loading and storing a fifth set of data which represents a first interest rate on the loan,
(f) means adjusted for calculating and storing a sixth set of data which represents a first profile of repayment and interest equivalent to interest and repayment for debtor as well as a first profile of remaining debt, the means being adapted to calculate the first profile of repayment and interest, and the first profile of remaining debt on the basis of the principal of the loan, term to maturity, and profile of repayment loaded under (a), the profile of refinancing and/or profile of funding loaded under (b), and the interest rate on the loan determined under (e),
(g) means adjusted for selection of a number of financial instruments among the financial instruments stored under (d) and which means are adapted for calculating and storing of a seventh set of data indicating the volumes of these selected financial instruments for the funding of the loan, which means are furthermore adapted for calculation of the seventh set of data on the basis of the first profile of repayment and interest and the first profile of remaining debt determined under (f), the under (b) indicated profile of refinancing, and/or the profile of funding indicated under (b) as well as the determined requirements to a maximum difference in balance, a maximum difference in proceeds, and/or a maximum difference in interest rate determined under (c), and in case of refinancing where there is still non-matured financial instruments from a previous funding, the type, the number and the volume of these financial instruments, the means for calculation being adjusted, if necessary, to carry out one or more recalculation(s), comprising, if necessary, selecting a new number of the financial instruments stored under (d), the means being further adapted, after each recalculation, to store the recalculated interest rate, the recalculated profile of repayment and interest, and the recalculated profile of remaining debt, and the selected financial instruments with their calculated volumes, until all conditions indicated under (c) have been fulfilled,

means for transcribing the combination of the type, the number, and the volumes of financial instruments for the funding of the loan so determined, preferably together with the calculated interest rate, preferably together with the calculated profile of repayment and interest, and preferably together with the calculated profile of remaining debt or for transferring the combination to a storage medium or sending it to another data processing system.

The system according to the present invention thus comprises means for loading and storing the necessary data for the calculation. The means for loading may comprise a keyboard, but may also comprise means for electronic loading via a storage medium or via a network. As mentioned above, the means for storing may be electronic memories like ROM, PROM, EEPROM or RAM or storage media like tapes, discs or CD-ROM.

Furthermore, the system comprises means for calculation adapted to make calculations which are necessary for the method. In this connection, the means for calculation typically comprise one or more micro processor(s).

A system according to the present invention may be a computer system programmed in a way that enables the system to make calculations which are necessary in order to accomplish the method according to the invention. In this connection it should be noted that according to the present invention different embodiments of the system have been provided, corresponding to the fact that the different embodiments are designed to perform the calculations indicated in the above mentioned embodiments and embodiments of the method according to the invention as claimed.

Embodiments and details of the method and the system according to the present invention further appear from the claims and the detailed description in connection with the drawing and the examples in chapters 1-6.

BRIEF DESCRIPTION OF THE DRAWINGS

Fig. 1 shows an example of the variation in the bond yield as a function of the term to maturity,

Figs. 2 and 3 show an example of a loan which financial instruments constituting the principal have been calculated according to a method of the present invention, in which Fig. 2 shows the development in the interest rate and Fig. 3 shows the development in the repayment and interest after tax,

Fig. 4 shows a schematic flow chart describing a data processing method for the calculation of the volumes of funding principals of the funding of a loan according to a first embodiment of the invention, called Type F,

Fig. 5 shows a step in the iteration process in the Gauss-Newton algorithm used for calculation of the interest rate,

Fig. 6 shows a schematic flow chart describing a data processing method for the calculation of the volumes of the funding principals for a loan according to an embodiment of the invention called Type F+, which is a continuation of Type F, if the latter leads to one or more negative funding principal(s),

Fig. 7 shows a schematic flow chart describing the first steps in a second embodiment, called Type $P_a$, Type $P_b$, Type $P_c$, and Type $P_d$, for calculation of the amount of funding principals of a loan,

Fig. 8 shows a schematic flow chart describing the steps not included in Fig. 7 for the calculation of the volumes of the funding principals of a loan according to the embodiment called Type $P_a$, Type $P_b$, Type $P_c$, and Type $P_d$,

Fig. 9 shows a schematic flow chart describing an embodiment called Type P for the calculation of the funding of principals of a loan,

Fig. 10 shows an example of a trend function to be used in the embodiment called Type P,

Fig. 11 shows an example of an initial trend function and an adjusted trend function as used in the embodiment called Type P,

Fig. 12 shows a schematic flow chart describing the different steps in a third embodiment, termed the special product, for the calculation of the volume of funding principals, and

Fig 13 shows a computer system to be used in the performing of the methods according to the invention.

GENERAL DESCRIPTION OF LOANS WITH ADJUSTABLE INTEREST RATES

Now follows a general description of the new type of loans with adjustable interest rates allowing an exact calculation of the principals by an embodiment according to the present invention, which loan is also termed LAIR.

The debtor receives exact calculations of different alternatives concerning the combination of a loan as to term to maturity and repayment arrangement. For example, debtor may decide for himself/herself how often and when a LAIR is to be refinanced and the part of the debt he/she wants to refinance.

As an important element, an investor wants to combine portfolios where the return is known with a reasonable certainty. Internationally, the most well-known type of bond is non-callable bullet bonds. They fulfil the wish for a stable return which is also known in advance. However, this is not the case with callable Danish bullet bonds.

The principle of LAIR seeks to combine the desires of the debtor and the creditor. Debtor may want a loan with a term to maturity of 30 years, where the investor may have an maximum investment period of 5 years. When a loan of a term to maturity of 30 years is funded only by means of a bond series of 30 years, as is the case at the moment, it is difficult to combine the desires of the two parties.

The two parties meet, the principle of LAIR permitting funding with a range of e.g. non-callable bullet bonds with maturities from 1 to 10 years irrespective of the debtor's desire of a loan with a term to maturity of 10, 20 or 30 years.

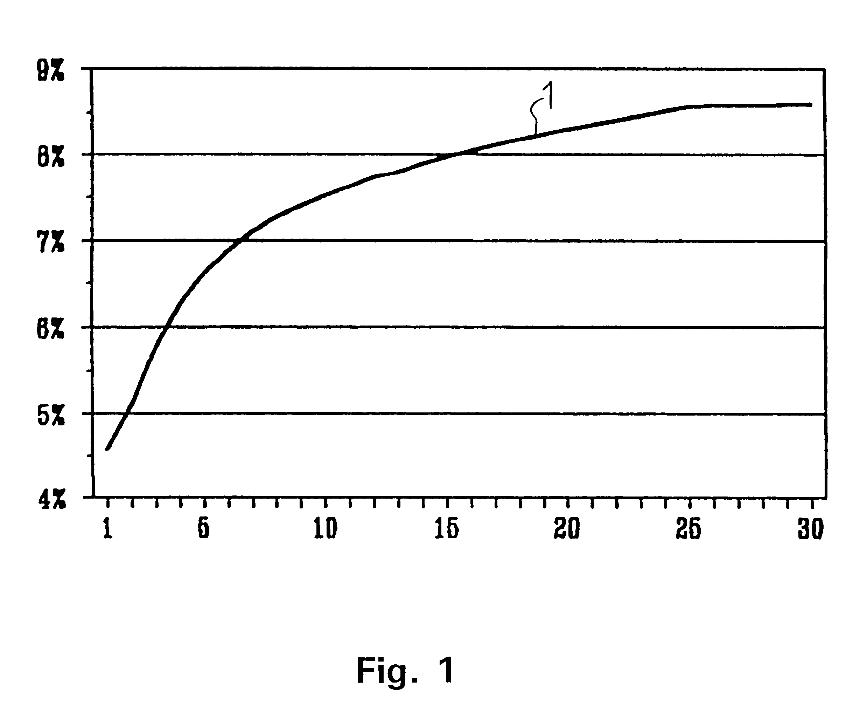

In case of an interest structure where the short-term interest rate is lower than the long-term interest rate, see the example in Fig. 1, in which the curve 1 shows the interest rate as a function of the term to maturity of the loan, it is cheaper for the debtor to provide funding by the issue of short-term bonds instead of a long-term bond with a term to maturity of e.g. 30 years. From the example in Fig. 1 it appears that the interest rate on a 1 year loan as of 15 January 1996 was approx. 4 points lower than the interest rate of 30 years.

LAIR can also be used in connection with loans of e.g. 12 payment periods, i.e. a loan where debtor makes monthly payments of interest and repayments.

It may also be possible to raise bullet loans with maturities of 1 or 10 years as well as different combinations of bullet loans matching the funding need of the individual debtor.

When calculating the principals of a loan according to the principle as to LAIR it is aimed that the profile of repayment and the profile of repayment and interest by the debtor follow the profile of e.g. an annuity loan with a term to maturity of 30 years irrespective of the refinance percentage and the intervals between the refinancing.

In case the debtor wants a LAIR with a term to maturity of 30 years this may thus be funded by issuing e.g. up to 10 bullet bonds with maturities of 1 to 10 years. Thus, as the term to maturity of the debtor loan is longer than the funding, the loan is to be fully or partially refinanced on its way. However, a loan with more than 10 financial instruments with maturities of more than 10 years may also be selected.

Here, the debtor has different options. The debtor may choose to refinance 10% of the remaining debt each year, 50 % every second year, 100% every fifth year etc.

In cases where loans are refinanced by means of bullet bonds, debtor's selection of refinancing percentage and refinancing point in time determine the number of bullet bonds with which the creditor is to refinance the loan. If, therefore, the debtor selects a refinancing of 20 % each year, the creditor will fund a LAIR by issuing of 5 bullet bonds with maturities from 1 to 5 years, if a refinancing of 10% is selected, the creditor issues 10 bullet bonds with maturities from 1 to 10 years.

As the loan is to be refinanced, the debtor's interest and repayments, and interest rate may change upwards as well as downwards. By each refinancing, debtor's interest rate may change depending on the market price at that point in time. The extent of the change in interest rate depends on the percentage of the remaining debt in which the debtor wants to refinance and the frequency. The larger percentage and the higher frequency, the more the interest and repayment and interest rate may change. Therefore, the largest effect of a difference in interest rate is reached if debtor selects 100 % refinancing of the remaining debt each year.

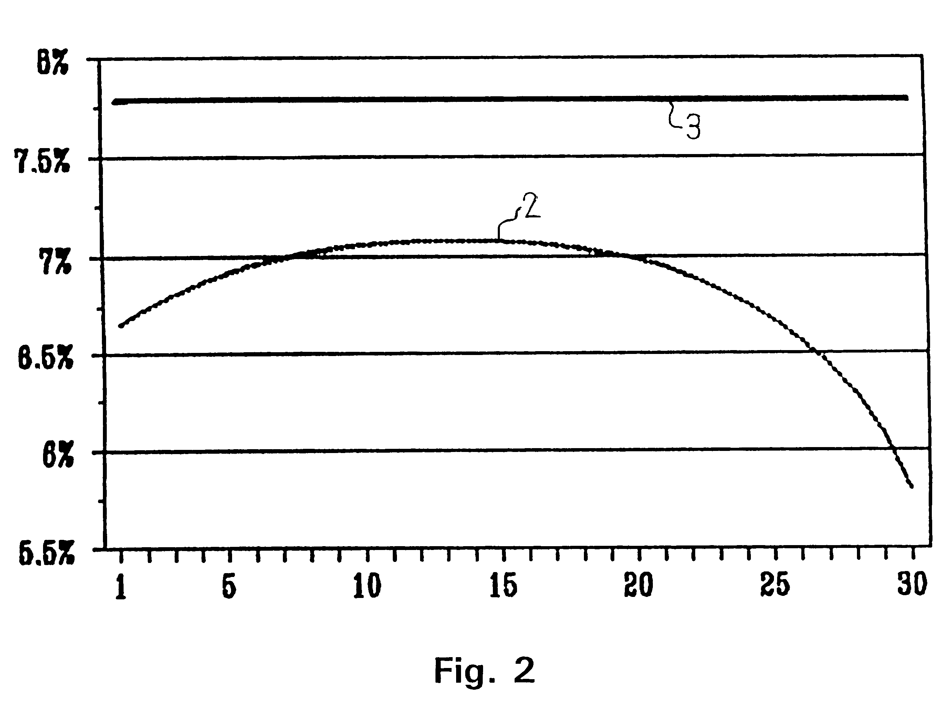

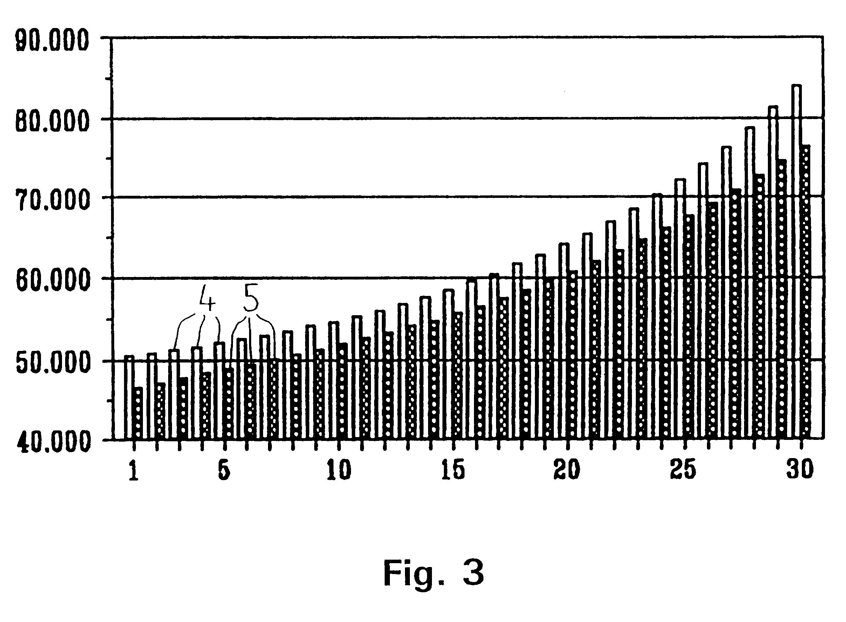

Figs. 2 and 3 show an example of a LAIR of 1 million DKK, the debtor selecting a 10 % refinancing of the remaining debt each year. Thus, at the time of a disbursement, the creditor issues 10 bullet bonds with maturities of 1 to 10 years. In the example, the debtor repays a LAIR as an annuity loan with a term to maturity of 30 years. In the example the interest structure is presumed unchanged during all 30 years and is equal to the interest structure shown in Fig. 1.

Fig. 2 shows the development in the interest rate, and Fig. 3 shows the development in annual repayments and interest after tax calculated according to Danish tax legislation. In Fig. 2, curve 2 shows the interest rate on a LAIR with a term to maturity of 30 years, while curve 3 shows the interest rate of a 6 % mortgage credit loan with a term to maturity of 30 years. It appears from Fig. 2 that the interest rate of a LAIR will not be stable, as a part of the loan is to be refinanced each year, and the yield of a term to maturity of 1 to 10 years varies. In the example, in year 1 the refinancing amount is DKK 100,000, in year 2 - DKK 98,873, in year 10 - DKK 87,141, and in year 20 - DKK 60,408.

In Fig. 3 the columns 4 show the annual repayments and interest after tax, calculated according to the Danish tax legislation, as to the mortgage credit loan with a term to maturity of 30 years shown in Fig. 2, while columns 5 show equivalent annual repayments and interest after tax as to the LAIR with a term to maturity of 30 years shown in Fig. 2. As it appears from Fig. 3 a LAIR is cheaper throughout all 30 years than an equivalent mortgage credit loan with a term to maturity of 30 years. Seen throughout all years, the saving is approx. DKK 60,000 after tax, converted into 1996 value.

After the first year, the bullet bond of 1 year matures simultaneously with the refinancing of 10 % of the remaining debt. Refinancing is implemented by the issue of a new bullet bond with a term to maturity of 10 years as well as an additional issue within 9 other maturities. The same refinancing procedure is repeated year 2 and onwards.

Thus, a LAIR will be funded by means of 10 bullet bonds until year 21. From years 21 to 30 the number of bullet bonds will be reduced by 1 every year for the loan to mature after the agreed 30 years. The reduction takes place in connection with the refinancing.

DESCRIPTION OF PREFERRED EMBODIMENTS

In a preferred embodiment according to the method the principal is calculated as a range of financial instruments equivalent to a range of bullet bonds. In the following chapters 1-8 a detailed explanation of preferred embodiments is given for calculation of loan according to methods of the present invention, data being loaded equivalent to a range of financial instruments consisting of bullet bonds. Calculations according to the method may, however, also be used for the application of bonds with several annual payment periods. Similarly, the calculation method may also be used when data equivalent to other financial instruments are loaded. Thus, the embodiments mentioned in chapters 1-8 only serve as examples, as other embodiments according to the invention may be conceivable.

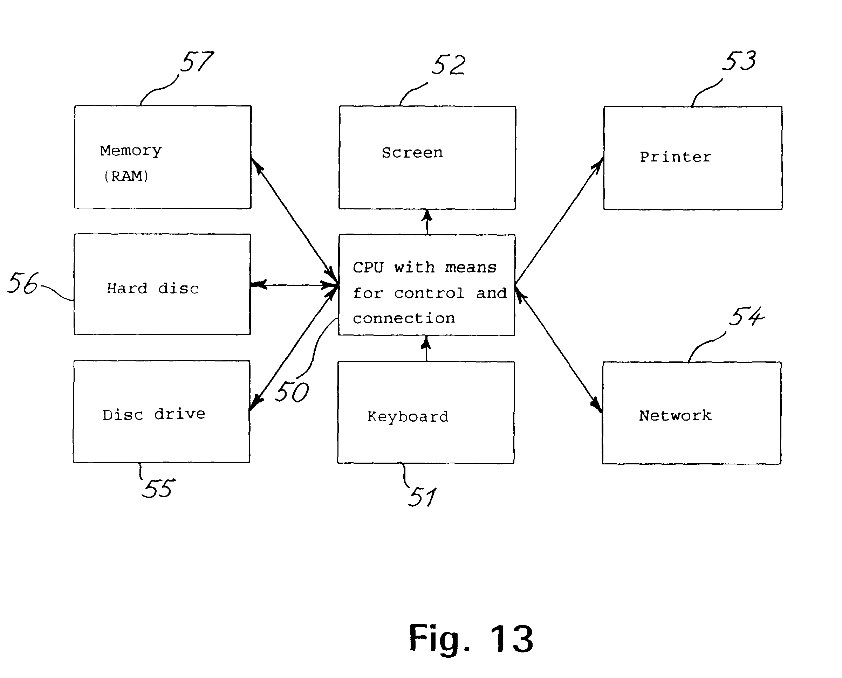

A computer system which may be applied in connection with the accomplishment of the methods according to the invention is shown in Fig. 13. The computer system comprises a CPU with means for control and connection. The CPU 50 is connected to a RAM-memory 57, a Hard Disc 56 and a disc drive 55. The CPU 50 may write to and read from these storage entities by the aid of the means for control and connection. Via the keyboard 51 it is possible to enter data for CPU 50, and data entered for the CPU 50 or calculated by the CPU 50 may be shown on the display screen 52. Likewise, the CPU 50 may print entered and/or calculated data from the printer 53. The CPU 50 may be connected to a network 54 of computer systems, e.g. an intranet or Internet, enabling the CPU 50 to communicate with other computers, e.g. to collect data from the network or print data to the network. Data communicated between the computer system and the remote entities may be data describing financial instruments by means of their type, or it may be data entered and/or calculated during the accomplishment of the methods according to the invention.

CHAPTER 1

In this chapter an example of a preferred embodiment is described, in the following called the Type F model.
The general problem:
Loans which principals are calculated according to the Type F model are characterized in that all the remaining debt of the debtor is refinanced at predetermined points in time. In case the debtor chooses to refinance his/her loan e.g. every fifth year, no purchase of bonds nor issue of bonds will be performed from the loan is raised until the end of year 5.
Debtor's borrowing need is covered by the issue of bullet bonds with maturities of 1 year and onwards until the first refinancing year.
In order to have payments on the loan which comprise repayments and payments of interest complying with payments on the bond for each year, bullet bonds are issued with all maturities up to the duration of the interest rate adjustable intervals so that bonds mature each year until the next interest rate adjustment.
In the period until the refinancing, i.e. in the above example until year 5 - there will be full compliance between the debtor's repayments and interest as well as the principal term to maturity and interest payments to be delivered to the bond holders.
In the year of the refinancing, payment to the bond holder will exceed payment from the debtors.
The Danish act on mortgage credit loans requires that there is a balance each year between payments to the bond holders and payments from the debtors
The annual payments of the model may be illustrated as follows: (the strict balance principle is used)

each year:          Payments from debtors =
                        Payments to the bond holders

or:                   Debtor's interest and repayments =
                        Bond redemptions +
                        interest payments to bond holders

At any point in time the following applies for the first occurring year:

$$YD(j) = H(j) + \sum_{i=j}^{m} R^N(i)H(i), \quad j<m \quad (A)$$

where:

YD(j)           is debtor's repayment and interest in year j.

H(i)  is the ith bond principal at a given point in time i.

$R^N$ (i)  is the nominal yield on the ith bond principal. The fact that there may be more than one coupon rate is not taken into account.

m  is the number of bonds at the beginning of the interest rate adjustment period and at the same time the following interest rate adjustment period.

j  indicates the number of years within the interest rate adjustment period and numbers the funding principals. j is thus set to zero after each interest rate adjustment.

In the notation, there is a direct compliance between year and the bond maturing that year.

That j in one time may indicate year and funding principals is alone due to the fact that the bonds only have one annual creditor payment date on 1 January. If the number of annual creditor payment dates is changed, the notation must be changed as well.

As to loans, 1 or 4 annual debtor payment dates may be selected. Thus, j cannot also indicate debtor payment dates without further notice. In order to facilitate the notation, debtor's repayment and interest within one year is, nevertheless, called YD(j), just summing up the payments made on payment dates within the year. Let n indicate the number of debtor's payment dates per year,

$$YD(j) = \sum_{i=1}^{n} AFD(i) + \sum_{i=1}^{n} \frac{R^K}{n} RG(i-1)$$

where

$R^K$  is the interest rate

RG(j)  is the remaining debt at the end of year j

AFD (i)  is debtor's repayment in the payment date i

i  indicates the payment date in year i=1, 2,..., n

In connection with the method corresponding to the Type F model, formula A must be fulfilled during all years from the raising of a loan until and including the year in which the loan is to be refinanced. However, there are two years in which formula A is to be modified - the first year and the year when the loan is refinanced.

If, in connection with the calculation corresponding to the Type F model, it is indicated that debtor's repayments and interest comprise quarterly payments, the sum of the four payments from debtor in a given year must be equal to the creditor payment.

In the first year the sum of debtor's interest and repayments must be equivalent to the sum of the principal payment on the bond having the shortest term to maturity H(1) and interest on all bonds lying behind debtor's loan. In addition, in year 1 an adjustment must be made so that the first creditor interest payment is only paid in full by the debtor, if the loan is raised exactly at a creditor's payment date.

As of year 1 it applies:

$$YD(1) = H(1) + REG \sum_{j=1}^{m} R^N H(j) \qquad (B)$$

REG is here the regulation factor determining how much the creditor should receive from the debtor's interest payment at the first occurring payment date. REG is determined as the part of the year in which the loan has existed, and may therefore assume values between 1/12 and 13/12 because the bonds mature ex-coupon 30 November. The remaining part of the creditor interest payment is paid by the creditor, who receives accrued interest upon the issue of the bonds. In connection with calculation according to the method of the invention REG is a figure or a set of data determined in advance or loaded for the use of the calculations.

In the year of the refinancing of the remaining debt (here called year m) the total payments on the loan comprise the remaining debt at the end of the year corresponding to the interest rate adjustment amount apart from debtor's repayment and interest. As to bonds these payments correspond to payments on the one bond which have not yet matured. As to the years in which the loan is interest rate adjusted, (A) may therefore be formulated as follows:

$$YD(m) + RG(m) = H(m) + R^N(m)H(m) \qquad \text{(C)}$$

Thus, the total balance requirement may be written down as (seen from the point in time 0):

$$\text{Year 1:} \qquad YD(1) = H(1) + REG \sum_{j=1}^{m} R^N(j)H(j)$$

$$\text{Year 2:} \qquad YD(2) = H(2) + \sum_{j=2}^{m} R^N(j)H(j)$$

$$.$$
$$.$$
$$.$$

$$\text{Year m:} \qquad YD(m) + RG(m) = [1 + R^N(m)]H(m)$$

The set of equations applies in the period from the raising of the loan until the first refinancing date. Hereafter, a new set of equations may be prepared for the period between the first and the second refinancing dates.

The formulae written above are here called the balance requirement.

If the equation system (the m equations above) is solved it applies:

$$H(m) = \frac{YD(m) + RG(m)}{1 + R^N(m)}$$

$$H(m-1) = \frac{YD(m-1) - R^N(m)H(m)}{1 + R^N(m-1)}$$

$$H(1) = \frac{YD(1) - REG\sum_{j=2}^{m} R^N(j)H(j)}{1 + REG * R^N(1)}$$

Apart from the fact that the balance requirement must be fulfilled, the market price of the bonds issued must exactly cover the principal of debtor's loan (in the following called the proceeds criteria), i.e.:

$$RG(0) = \sum_{j=1}^{m} K(j)H(j)$$

were K(j) is the price of the jth funding instrument at the point in time 0. Accordingly it applies at any refinancing point in time that debtor's remaining debt must be equivalent to the market price of the underlying bonds, i.e:

$$RG(m) = \sum_{j=1}^{m} K(j)H(j),$$

where K(j) is the market price of the jth funding instrument at the point in time m.

Thus, the calculation problem solved according to the method corresponding to the Type F model comprises the m equations which occurred as a result of the balance requirement as well as the proceeds criteria.

As it is required that the interest rate R(L) is equal to or approximately equal to the yield of the funding portfolio, the calculations get relatively comprehensive. This means that R(L) and thus all RG-values on the left in the expressions of the balance requirements depend on variables (i.e. the funding principals) on the right. In other words the problem must be solved simultaneously. This is done by fixing the interest rate on the loan. If the point of departure is taken in an "arbitrary" interest rate, debtor's repayment and interest may be determined. They determine the funding with regard to the balance requirement. The proceeds from the issue of the funding may then be compared to the desired proceeds of the loan. In case of a deficit, more bonds must be sold, and the interest rate must be raised so that the larger payments on the bonds - more bonds are sold -are covered by the payments on the loan. If, on the other hand, there is an surplus from the issuing of the bond, the interest rate may be lowered.

The Type F model - step by step:

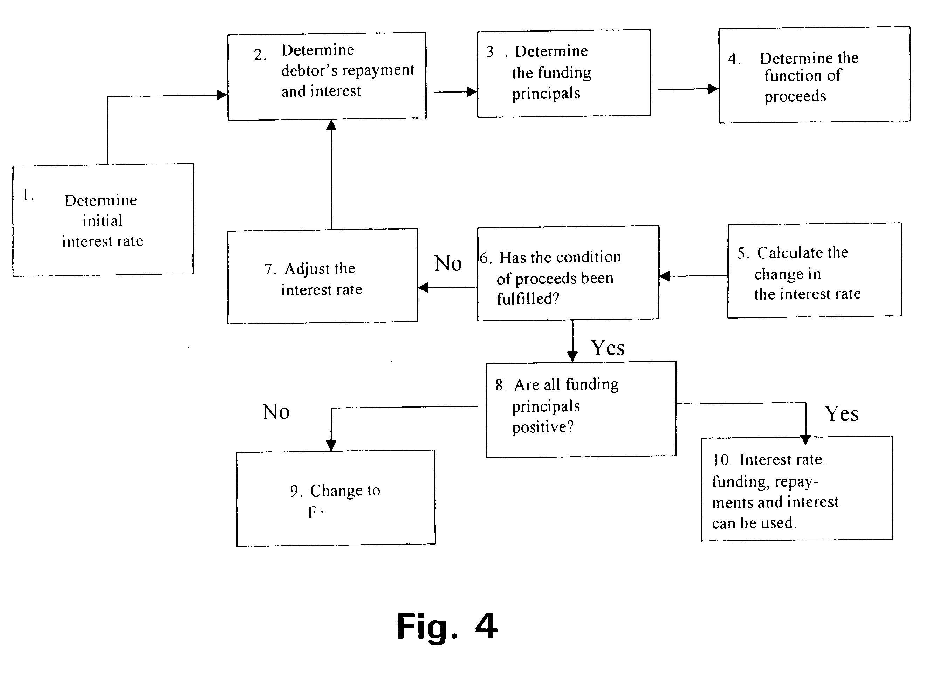

Below, the solution of the problem concerning a LAIR is described step by step, the principals of the LAIR being calculated according to the Type F model. In principle, this is implemented through 10 steps. The procedure corresponds to the steps shown in the flow chart in Fig. 4:

The model is repeated for each interest rate adjustment. In case of a LAIR type F5 with a term to maturity of 10 years the calculation is therefore made twice.

The model uses an iterative procedure. On the basis of a start value of the interest rate, the funding in step 2, step 3, and step 4 is determined. In step 5 a change in the interest rate is determined. If the proceeds condition is not fulfilled in step 6, the interest rate will be adjusted as to the increase, and step 2 etc. is repeated. If the proceeds condition is not fulfilled, the model will make a final check that all funding principals are positive.

Step 1: Determine initial interest rate

In order to minimize the number of iterations, which are to be carried out later, it is expedient to set the interest rate equal to the yield on the funding instruments having the longest term to maturity.

All inputs to the model is loaded in step 1. As to bonds the number of funding instruments, coupon rate of each instrument, number of annual creditor payment periods and the payment dates and market price of each instrument are loaded. As to loans the payment date, principal, amortization principle, term to maturity, number of annual debtor payment periods, and debtor's payment dates are loaded.

Furthermore, a value for the parameter inc must be loaded. Parallel to the determination of the funding for $R^K$ in the following step, the funding for $R^K+inc$ is also determined. Thus, the model has two observations in the determination of the next guess at an interest rate. The standard value of inc is 0,0001 (0,01 %), but another value may be loaded.

On the basis of the loaded number of funding instruments and the remaining term to maturity, the value for m is determined as

m = max (number of funding instruments; remaining term to maturity)

so that the model does not issue bonds with a term to maturity after the term to maturity of the loan.

Stet 2: Determine debtor's repayments and interest.

When the interest rate has been determined, debtor's profile of repayment and interest and profile of remaining debt can be set up or calculated for both $R^K$ and $R^K+inc$ until the first refinancing point in time. The model will return with the following pieces of information concerning debtor's payments: interest, repayments, interest and repayments, and the development of the remaining debt.

Step 3: Determine the funding principals

Provided that debtor's repayments and interest (YD(L); the repayment and interest including the refinancing amount) is determined, the individual funding principals may be found:

In connection with calculations according to the Type F model, the starting point is that the balance equations may be rewritten into a matrix form as follows:

$$YD(L) = AxH, \tag{D}$$

where A is defined as a mxm upper triangular matrix:

$$A = \begin{bmatrix} [1+REG \cdot R^N(1)] & REG \cdot R^N(2) & REG \cdot R^N(3) & . & . & REG \cdot R^N(m) \\ 0 & 1+R^N(2) & R^N(3) & R^N(4) & . & R^N(m) \\ . & . & . & . & . & . \\ 0 & 0 & 0 & 0 & 0 & [1+R^N(m)] \end{bmatrix}$$

I.e. the A-matrix is designed in a way that the balance equations occur immediately, if a calculation of the formula (D) is attempted.

In the A-matrix, the number of columns corresponds to the number of funding instruments, and the number of rows corresponds to the duration of the interest rate adjustment period.

The three matrices have the following dimensions:

YD(L): (mx1)
A: (mxm)
H: (mx1)

In the rewriting the solution as to the m funding principals in matrix form (the top sign T means that the matrix is transposed) is as follows:

$$H = [A^T A]^{-1} A^T [YD+RG] \tag{E}$$

This means that in connection with the calculation according to the Type F model, a solution as to the volume of the individual funding principals has now been found. In principle, $[A^T A]^{-1} A^T$ may be replaced by $A^{-1}$ in (E), if A is quadratic. Only if several funding instruments are introduced, the rewriting $[A^T A]^{-1} A^T$ is necessary. Thus, the rewriting is only a method where non-quadratic matrices may be inverted. The funding for $R^K$+inc is determined by the same method.

Step 4: Determine the proceeds function

In connection with the calculation according to the Type F model, a function $F(R^K)$ is then calculated as the difference between the proceeds and the market prices of the bond principals calculated under step 3.

$$F(R^K) = RG(0) - \sum_{j=1}^{m} K(j)H(j),$$

where $R^K$ is the interest rate. Both the values of $F(R^K)$ and $F(R^K+inc)$ are calculated.

Step 5: Calculate the change in the interest rate

Then the determined interest rate is adjusted. If the convergence condition in step 6 is not fulfilled, the adjustment will, however, not be implemented until step 7. In connection with the calculations according to the Type F model, the adjustment is implemented in such a way that a solution fulfilling the proceeds condition is quickly calculated.

In connection with the adjustment calculation, a change in the interest rate to the determined interest rate is calculated. For that purpose the Gauss-Newton algorithm may be used, which may, in general, be written as

$$\Delta R^{K} = \frac{[D^{T}D]^{-1}D^{T}g}{j_{v}}$$

for:

$$j_{v} = [\text{Diag}J^{T}J]^{0.5}$$

$$D = \frac{J^{T}J}{j_{v}j_{v}^{T}}$$

$$g = \frac{J^{T}F(x)}{j_{v}}$$

where:

$$J = \frac{F(R^{K})-F(R^{K}+inc)}{inc}.$$

Based on these calculations a value of the desired change in the interest rate is determined.

The above applies that:

$D^{T}D$  is the Hesse matrix
g     is the gradient
J     is the Jacoby matrix
$j^{v}$    is the diagonal elements

According to the definition of D and g, "division" is carried out with a matrix meaning that the elements in the matrix are divided one by one.

However, in this case the problem is one-dimensional, which is the reason why the Gauss-Newton algorithm may be reduced, as D, J and $j_{v}$ are all of the dimension 1 x 1. It hereby applies that

$$J_{v}=J$$

as $j_{v} = [\text{Diag}J^{T}J]^{0,5} = [J^{2}]^{0,5} = J$. If $j_{v} = J$ is placed in the expression for D it applies

$$D = \frac{J^{T}J}{j_{v}j_{v}^{T}} = \frac{J^{2}}{j_{v}^{2}} = 1$$

At the same time, the expression for g is reduced to

$$g = \frac{J^{T}F(R^{K})}{j_{v}} = F(R^{K})$$

If the reduced expressions are introduced in $\Delta R^{K}$, the following applies

$$\Delta R^{K} = \frac{[D^{T}D]^{-1}D^{T}g}{j_{v}} \Leftrightarrow$$

$$\Delta R^K = F(R^K)\,\frac{inc}{F(R^K)-F(R^K+inc)}$$

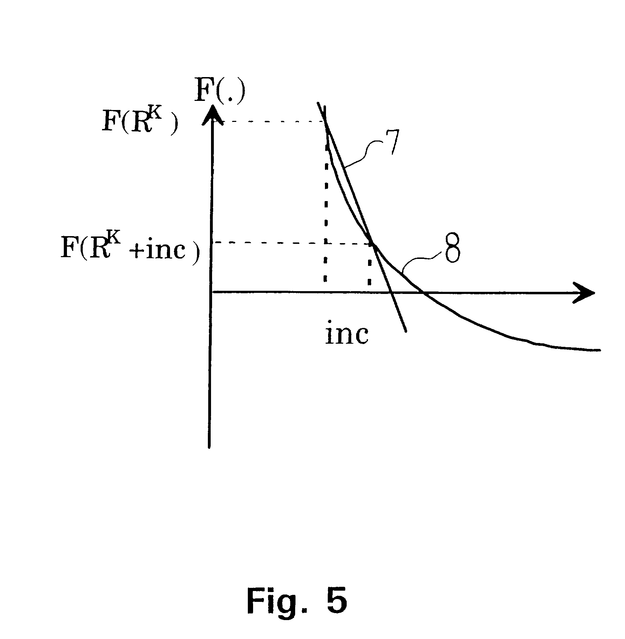

The method is illustrated in Fig. 5. The graph 8 shows the difference between the proceeds and the market prices of the bond principals illustrated as a function of the short-term interest rate $R^K$, and the line 7 is the secant through two points on the graph 8.

The algorithm approximates the interest rate fulfilling the proceeds condition. In other words, the algorithm approximates the value of $R^K$ fulfilling the condition $F(R^K)=O$.

The basic idea of the algorithm is to use the secant through two points on the graph 8 for $(R^K,F(R^K))$ and $(R^K+inc,F(R^K+inc))$ respectively. When the secant 7 is determined, the intersection with the x-axis of the secant 7 is determined. The intersection is the next guess as to the interest rate in the iterative process. If $F(R^K)$ is strictly declining, the algorithm will always reach a solution.

Fig. 5 shows that inc should not be regarded as an accuracy parameter. On the contrary, inc determines the step size in the iteration procedure.

Therefore, it is not necessary to use the matrix apparatus, but as it is the same method which is used under Type P, the formula apparatus is now introduced.

Step 6: Has the proceeds condition been fulfilled?

After the calculation of the change in the interest rate, in connection with the calculation method according to the Type F model, it is to be determined whether the determined interest rate $R^K$ fulfils the loaded conditions. The general method for this purpose is to test the mathematical convergence of the change. This is done by evaluating the volume of the adjustment as to the guess at interest rate which was determined in step 5. In case the adjustment is very small, cf. the conditions below, there is no reason to continue the iterative process, as the model cannot get closer to a solution.

According to the Type F model, mathematical convergence means that at least one of the following two convergence conditions must be fulfilled:

$$(*) \qquad \frac{|\Delta R^K|}{\varepsilon\cdot|R^K|} < \varepsilon$$

$$(**) \qquad \left|\frac{[F(R^K)^2-F(R^K+\Delta R^K)^2]}{F(R^K)^2}\right| < \varepsilon$$

where $\varepsilon$ is a very small figure, e.g. $10^{-10}$.

If just one of the conditions (*) or (**) is fulfilled, the desired interest rate $R^K$ has been found, and the calculations are continued in step 8.

It is possible to examine the proceeds condition directly. It may be formulated as

$$(***) \quad |F(R^K)| < \varepsilon$$

where $\varepsilon$ is determined to 0.00001. Thus, a maximum deviation of only 0.001 oere in the funding proceeds is acceptable. If (***) is fulfilled, the desired interest rate $(R^K)$ is found, and the model may continue in step 8.

If none of the conditions is fulfilled, continue with step 7.

Step 7: Adiust the interest rate

The interest rate rejected in step 6 is now to be adjusted with regard to the adjustment factor or change in the interest rate found in step 5. The interest rate which is hereafter used for calculation of debtor's profile of repayment and interest and remaining debt profile, is thus the adjusted interest rate $(R^K + \Delta R^K)$. Hereafter the adjusted interest rate from step 2 is used.

Step 8: Are all funding principals positive?

In certain cases, in connection with the accomplishment of the calculations according to the Type F model, one or more of the calculated funding principals may occur to be negative. Funding principals being correspond to a debtor purchasing a number of the underlying bonds. The choice in connection with the Type F model is that this situation must not occur, which is why it must be determined whether all calculated funding principals are larger than 0.

The negative funding principals may occur in connection with premiums. An obvious way to avoid negative funding principals is thus to change funding instruments which would in this connection mean the opening of bonds with a lower coupon rate and thus lower market price.

Alternatively, the negative funding principals may be avoided by treating the loan as a LAIR Type F$^+$ until the next interest rate adjustment is performed or even after that. If negative funding principals occur, the model thus continues in step 9.

If, on the other hand, all funding principals are positive, the model continues in step 10,

Step 9: Change into F$^+$

If one or more of the funding principals is/are negative, the model changes into the model F$^+$. Information concerning the loan, i.e. principal, term to maturity, amortization principle etc. is loaded in the F$^+$ model. The F$^+$ model is described below.

Step 10: Interest rate, funding and repayments and interest may be used!

Now an interest rate as well as a number of positive funding principals fulfilling the given conditions have been found, and the calculations are finished.

General comments to the Type F model:

In connection with the Type F model an unambiguous, positive interest rate corresponding to a solution of the given conditions will always be found. The interest rate corresponds to the yield of the funding portfolio. The explanation hereto is that the proceeds from the sale of the funding instruments is a strictly growing function of the interest rate:

higher interest rate => larger debtor's repayments and interest =>larger funding principals.

On the other hand, it cannot be guaranteed that the solution always results in all funding principals being positive. A negative funding principal just means that debtor must purchase a certain number of the bond which is used as funding instrument. A solution leading to negative funding principals is unacceptable, which is why the loan is treated as a type F$^+$ loan. By selecting coupon rates which follow the interest structure, the possibility of having negative funding principals are, however, reduced substantially.

The problem may arise when the market prices of the funding instruments are at a premium, which corresponds to the interest rate being lower than the nominal interest rate. In that case, creditor's interest payments may become so extensive that they may exceed debtor's repayments and interest. This case necessitates a negative funding principal, if the balance principle is to be fulfilled. On the basis of the above, it is necessary to make sure that the difference between the coupon rate of the bond and the interest rate of the loan is not too large. The size of the possible difference depends on i.a. the profile of repayment of the loan and the term to maturity.

CHAPTER 2

The general problem:

If the bond with the longest term to maturity in a LAIR with 100% interest rate adjustment has a price over 100, the nominal issue is less than the principal of the loan. This will affect the balance principle in the last year of the interest rate adjustment period when the bond principals matures at price 100 at the same time as the remaining debt of loan is to be interest rate adjusted.

In case of bullet loans, a surplus will always arise on the part of the loan, since the remaining debt is larger than the outstanding number of bonds.

In case of annuity loans and serial loans an equivalent surplus may arise, however requiring prices well over 100. The difference in the nominal number of bonds and the principal of the loan must, so to speak, be larger than debtor's repayments on the loan in the period up to the interest rate adjustment.

In a preferred embodiment, the problem is solved in that the loan is solely financed in one funds code and that a so-called minimum refinancing is introduced.

The basic idea in the minimum refinancing is to transfer payments from previous years to the last year in the interest rate adjustment period in that a deficit in the payments on the loans is covered by a new bond issue with the same term to maturity at the end of each year in compliance with the balance principle. Thereby the number of bonds is increased and the surplus of the last year is reduced.

A particular problem is connected to the determination of interest rate. As a consequence of the minimum refinancing, the interest rate is not stable during the whole interest rate adjustment period, but will, contrarily, vary from one year to another.

The present method only ties up the interest rate during the last year of the interest rate adjustment period. As to the other years, an arbitrary determination of the interest rate only changes the minimum refinancing. However, an unfortunate determination of the interest rate will only result in a substantial change of the interest rate of the last year in order to comply with the balance principle. An aim is, therefore, to choose a method for the determination of the interest rate with a stable course. The present method is thus an appropriate method among others. E.g. the interest rate could be determined as the bond yield or the like.

Method:

Funding in only one bond facilitates the calculation of the funding, the funding principal being the bond with the longest term to maturity may unarbitrarily be determined on the basis of the proceeds condition. Thus, the funding may be determined already in the first step of the model.

When the funding has been determined, the interest rate may be determined by using the strict balance principle. The interest rate must be determined on the condition that total payments on the bond and on the loan comply with each other up to the next ordinary interest rate adjustment.

However, in this connection it is important how the loan is amortized. If the loan is a bullet loan, the interest rate may be determined in relation to the stable remaining debt as a matter of course.

If, on the other hand, the loan is an annuity loan or a serial loan payments depend on both the remaining debt development and the interest rate. Therefore, it is iterated as to the interest rate, until the strict balance principle is fulfilled. As an alternative to the iterative procedure the interest rate may be found analytically.

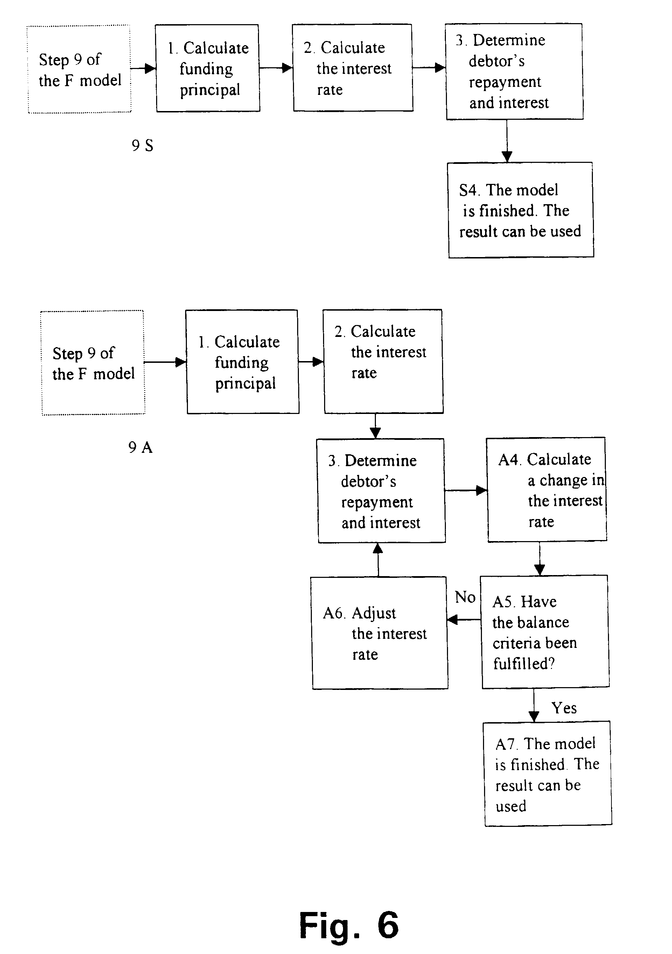

The difference between bullet loans on the one hand and annuity loans and serial loans on the other hand makes it necessary to divide the model into two models which are, more or less, parallel. This is shown in Fig. 6. The steps which are different depending on the amortization of the loan are either marked by a S (bullet loan) or an A (annuity loan or serial loan). The model starts by step 9S in case of a bullet loan and by 9A in case of an annuity loan or a serial loan.

In the model it is necessary to distinguish between ordinary interest rate adjustments and the minimum refinancing. The annual minimum refinancing means that the model is not only meant to apply at the interest rate adjustment periods (e.g. every fifth year as for a type F5), but each year. i is used as a dating of the years with a minimum interest rate adjustment.

Step 9 of the F model.

The F⁺ model may only be initiated by step 9 of the F model. Therefore, input has already been loaded into the F model and transferred to the F⁺ model without changes.

Step 1: Calculate the funding principal.

This step is the same for both bullet loans and annuity loans. The funding is determined on the payment date of the loan or immediately after an ordinary interest rate adjustment as

$$H(m) = \frac{RG(0)}{K(m)} \qquad H(J)=0 \text{ for } j<m$$

m is unchanged in relation to the F model. If the loan is interest rate adjusted every fifth year, m has the value 5 irrespective of the issue being in one bond only.

The other years until the ordinary interest rate adjustment the minimum refinancing is given by

$$M_{j'}(m) = \frac{Fin(j')}{K_{j'}(m)} \qquad for\, j' = 1,2,...,m$$

where

Fin (j')    in general designates the funding need year j'. In this connection Fin(j') is thus the minimum refinancing.

$M_{j'}(m)$      designates the marginal funding in the mth funding principal in year j', i.e. the part of H(m) to be issued at the end of year j'.

$K_{j'}(m)$      is the market price of the mth funding instrument in year j'.

It should be noted that i gets a slightly different meaning, as i is only set to zero in connection with ordinary interest rate adjustments. Thus, funding is issued as to points in time j=1,2..,m etc. and not only at the point in time j=0 as in the F model.

The minimum refinancing is determined as the difference between the annual payments on the loan and on the bond

$$Fin(j') = R^{N}(m)J(0,m) - YD(j') \qquad \text{for } 1 \leq j' \leq m-1$$

where

H(0,m)      describes the already issued funding, i.e. the mth funding principal before the minimum refinancing.

Step 2: Calculate the interest rate.

This is the same step for both bullet loans and annuity loans. Thus, the interest rate is determined in such a way that the total number of payments on the loan complies with the total number of payments on the bond up to the next interest rate adjustment. This principle is used irrespective of the amortization principle, only the step as to bullet loans will calculate the final interest rate, whereas an initial guess in the iteration applies to annuity loans as well as serial loans.

The principle leads to the equation

$$(A) \qquad RG(j') + (m-j') R^{K}_{j'}RG(j') = H(m) + (m-j')H(m)R^{N}(m)$$

The foot sign of the interest rate indicates that A applies to the interest rate of the year j'. It should be noted that H(m) = H(0,m) + M(m). The minimum refinancing which has just been issued is thus included in the expression.

A may be rewritten into

$$R^{K}_{j'} = \frac{H(m)-RG(j')}{(m-j')RG(j')} + \frac{H(m)R^{N}(m)}{RG(j')}$$

whereby the interest rate in j' is determined.

Step 3: Determine debtor's repayments and interest.

This is the same step for both bullet loans and annuity loans. The interest rate as found is used to determine debtor's repayments and interest, and the remaining debt development inclusive.

Step S4: The model is finished. The result may be used.

Calculation of the bullet loan is completed and the results, i.e. interest rate, repayments and interest, and funding may be applied.

Step A4: Calculate the change in the interest rate.

The change in the interest rate is calculated on the basis of the same principles as in the steps 4 and 5 of the F model. First, a function measuring the difference between payments on the loan and on the bond is thus defined.

$$F(R^K) = \sum_{j=j'}^{m} YD(j) + RG(m) - [H(m) + (m-j')H(m)R^N(m)]$$

After this, the change may be calculated by use of the reduced version of the Gauss-Newton algorithm.

$$\Delta R^K = F(R^K)\frac{inc}{F(R^k)-F(R^K+inc)}$$

It should be noted that $F(R^K)$ is strictly growing, ensuring that the algorithm reaches a solution.

Step A5: Is the balance criteria fulfilled?.

Step A5 determines whether the iteration is to continue or whether an interest rate is found fulfilling the balance requirement. As in step 6 of the F model, the question may be determined by the mathematical convergence of the iteration, but it is more obvious to evaluate the actual balance requirement. This means that the iteration steps and the model continues in step A7, if the condition

$$\left| \sum_{j=j'}^{m} YD(j) + RG(m) - [H(m) + (m-j')H(m)R^N(m)] \right| < \epsilon$$

has been fulfilled for $\epsilon =0.00001$. If the condition has not been fulfilled, the model continues in step A6 instead.

Step A6: Adjust the interest rate.

The interest rate did not fulfil the balance requirement and must therefore be adjusted as to the change $\Delta R^K$. Then step 3 is repeated.

Step A7: The model is finished. The result may be used.

If the balance requirement has been fulfilled, the funding and interest rate fulfil all conditions and can be used together with the debtor's repayments and interest.
In chapters 3-6, four examples of preferred embodiments of the Type P model are described. The four examples are special cases of the Type P model as is described in chapter 7. In chapter 7 the notation of some points have been changed as compared to chapters 3-6.

CHAPTER 3.

In this chapter, an example of a preferred embodiment is described which embodiment in the following is called the Type $P_a$ model.
The general problem
In a LAIR, which principal is calculated according to the Type $P_a$ model, a part of debtor's remaining debt is refinanced every year. The volume of the refinancing depends upon how long a funding period, debtor chooses.
Since refinancing is performed every year, the disbursements to the bond holders are larger than the payments from the debtors. It is the aim that the difference between these payments during the first year corresponds to the total number of refinancing operations taking place during the term to maturity of the loan in relation to the remaining debt in the beginning of the year in which refinancing is to performed, i.e. $\frac{RG(1)}{m_0}$. In other words; the aim is that $\frac{1}{m_0}$ of the remaining debt is refinanced every year.
The problem to be solved in connection with this calculation method according to the Type $P_a$ model can be written in the following way: (this corresponds to the balance requirements under the Type F model)

Year 1:

$$[\text{AFD}(1) + \text{R}(\text{L})\text{RG}(0)] + \frac{RG(1)}{m_0} = \text{H}(1) + \text{REG} \sum_{j=1}^{m} \text{R}(\text{F},j)\text{H}(j)$$

Year 2:

$$[\text{AFD}(2) + \text{R}(\text{L})\text{RG}(1)] + \frac{RG(2)}{m_0} = \text{H}(2) + \sum_{j=2}^{m} \text{R}(\text{F},j)\text{H}(j)$$

.

.

Year m:

$$[\text{AFD}(m) + \text{R}(\text{L})\text{RG}(m-1)] + \frac{RG(m)}{m_0} = [1 + \text{R}(\text{F},m)]\text{H}(m),$$

where

AFD(j)      is debtors repayment at a point in time j,
R(L)      is the interest rate on the loan,
RG(j)      is the remaining debt at a point in time j,
H(j)      is the jth funding principal for j={1,2,...,m},
m      is the maximum number of bonds or funding principals which can be chosen at a maximum, given the remaining term to maturity of the loan,
REG      is a regulating function determining how large a sum of the interest payment falling due on the first payment date creditor is to receive from debtor. REG is a number between 0 and 1 assuming the value 1, if the loan is raised on a payment date, and
R(F,j)      is the nominal interest on the jth funding principal.

Thus, a set of funding principals fulfilling these criteria must be calculated. To this must be added that the proceeds criterion must be fulfilled, just as the interest rate on the loan R(L) must be equal to the yield on the funding portfolio.

This equation system cannot be solved in the same way as the corresponding system was solved under Type F. This is due to the requirement that the interest rate must be equivalent to the yield on the funding portfolio.

The method applied according to the Type $P_a$ model involves that the determination of new interest rates and new funding principals is performed in a two-step procedure and not simultaneously as in the Type F model.

The Type $P_a$ model - step by step:

Below, the procedure for a solution according to the Type $P_a$ model is described step by step.

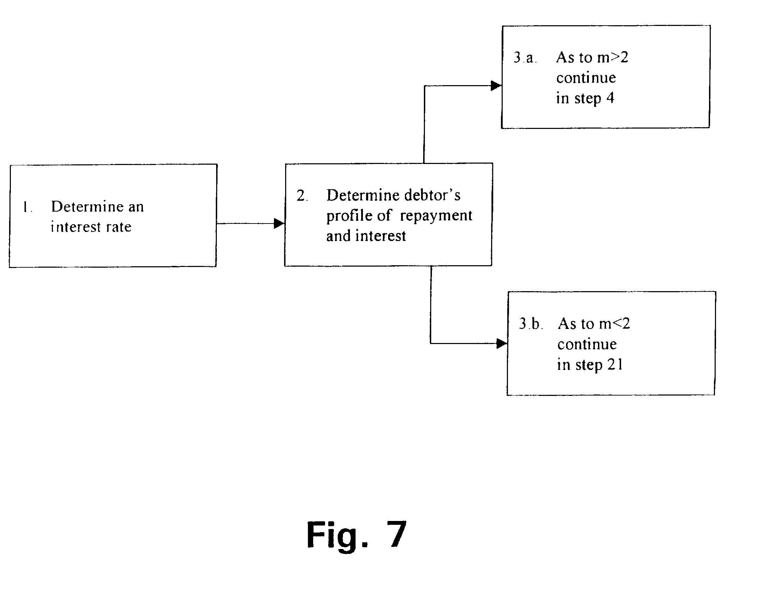

The first steps, which are illustrated in Fig. 7, correspond to the first steps in the Type F model:

## Step 1: Determine an interest rate

Here an interest rate is determined. In order to minimize the number of iterations, which are to be carried out later, it is expedient to determine the interest rate R(L) as a weighted average of the yields on the individual funding instruments in the following way:

$$R(L) \ = \ \sum_{t=1}^{m} \frac{\frac{1}{m} \cdot t \cdot r(0,t)}{\frac{1}{m} \cdot t}$$

where t is the terms to maturity of the individual funding instruments; i.e. t={1,...,m}.

As a further input to the model, the following must be known: the prices on the m bond principals, the term to maturity of the loan, the number of funding instruments, the coupon rate, the loan type, and the opening date of the loan.

## Step 2: Determine debtor's interest and repayment profile

When the interest rate has been determined, debtor's profile of repayment and interest and profile of remaining debt can be set up. The model will return with the following pieces of information concerning debtor's payments: interest, repayments, repayment and interest, and the development of the remaining debt.

## Step 3a and 3b

Now a division of the calculations into two is carried out. Firstly, the situation wherein more than two funding instruments occur (i.e. m>2) is described, and hereafter the situation wherein there is/are 1 or two funding instruments (m=1 and m=2) is described.
I.e.:

    For m>2 go to step 4
    For m≤2 go to step 21

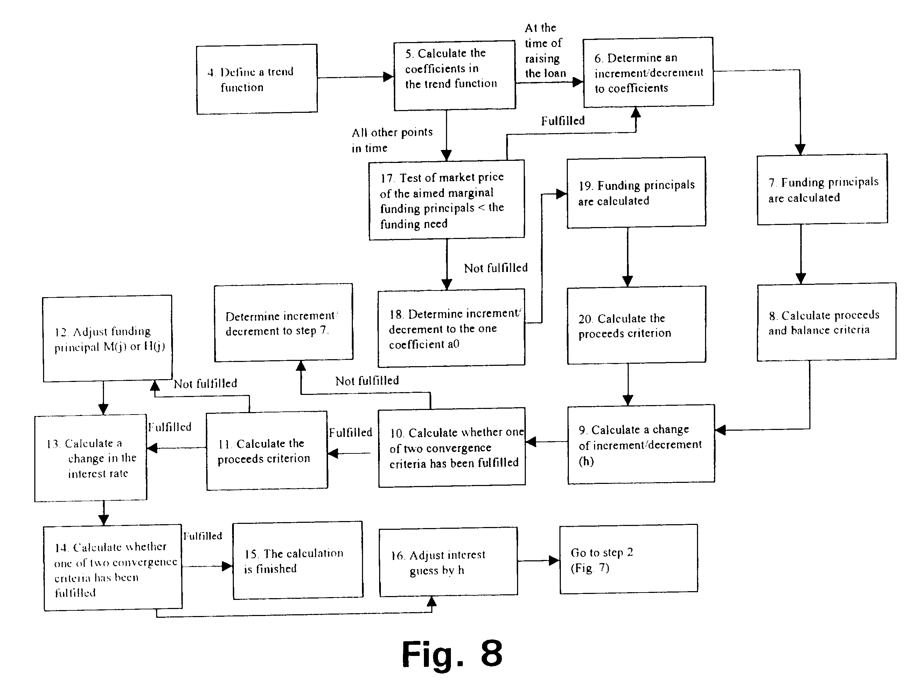

The remaining steps for calculation according to Type $P_a$ are illustrated in Fig. 8 and are described below.

## Step 4: Define a trend function

Here a polynomial of the second degree, which is here called a trend function, is applied.
The trend function: $a_0 + a_1 t + a_2 t^2$, for t = [0,1,....,m-1]

The trend function is used to calculate the individual funding principals, and the purpose of the trend function is to try to adjust the developments of the funding principals to the development of the remaining debt concerning debtor's loan.

## Step 5: Calculate the coefficients in the trend function

The coefficients ($a_0, a_1$, and $a_2$) are calculated in the following way:

$$(a_0, a_1, a_2) \ = \ [B^T B]^{-1} B^T \max \left[ \frac{RG(j)}{m_0} ; H(0,j) \right] \ \text{for all } j \leq m.$$

B is defined as:

$$B = \begin{bmatrix} 1 & t(1) & t(1)^2 \\ 1 & t(2) & t(2)^2 \\ . & . & . \\ 1 & t(m) & t(m)^2 \end{bmatrix}$$

wherein:

H(o,j): the jth funding principal at a given point in time before refinancing is performed in the current period. It applies by definition that at any point in time H(0,m) = 0. It further applies that H(0,j) = 0 for all j at the point in time 0.

If the calculation is carried out at the point in time of the raising of the loan is performed, then continue in step 6 (H(j) is calculated). At any other points in time of refinancing, continue in step 5.

It is noted that M(j) are the marginal funding principals for j={1,2,...,m}, i.e. the additions to the funding principals at the points in time of refinancing.

Hereafter it is tested whether the number of initial funding instruments, i.e. the number of the remaining part of funding instruments applied when the loan is raised, is larger than the remaining term to maturity of the underlying loan. If this is the case, then go on to step 6, otherwise, continue in step 17.

Step 6: Determine an increment or decrement to the coefficients

Now an increment or decrement to the coefficients $a_0$ and $a_1$ is determined. The first increment or decrement must be GUESS(1,2) = (1.25,1), i.e. $a_0$ must be multiplied by 1.25, and $a_1$ must be multiplied by 1.

Hereafter, continue in step 7.

Step 7: The funding principals are calculated

Hereafter M(j) or H(j) can be calculated by inserting the determined coefficients and setting t={0.1,...,m-1}, thus;

$$M(j) \text{ or } H(j) = \max[0; [\text{GUESS}(1)a_0 + \text{GUESS}(2)a_1 t + a_2 t^2] - H(0,j)].$$

Step 8: Calculate the proceeds and balance criteria

Calculate the proceeds difference and balance criteria and continue in step 9. At the initial point in time the condition of the proceeds is as described above:

$$RG(0) = \sum_{j=1}^{m} K(j)H(j).$$

Otherwise the condition of the proceeds is

$$Fin(i) = \sum_{j=1}^{m} K(j)M(j),$$

wherein Fin(i) is the funding need upon refinancing after the point in time i. The balance criteria have been given in the previous equations equivalent to the balance requirement. By calculation of the difference in proceeds is here meant the calculation of the difference between RG(0) and

$$\sum_{j=1}^{m} K(j)H(j),$$

or the difference between Fin(i) and

$$\sum_{j=1}^{m} K(j)M(j).$$

If H(J) or M(j) constitute a valid solution, this difference must be smaller than a given maximum difference.

Step 9: Calculate the change of increment or decrement (h)

Now a change of (h) to $a_0$ and $a_1$ is calculated. The calculations correspond to the calculations in step 4 and step 5 in the Type F chapter. The function F(x), is, however, defined somewhat different.

Here is:

$$F(x) = [RG(i-1) - \sum_{j=1}^{m} K(j)H(j),$$

$$Fin(i) - \frac{1}{m_0} \cdot RG(i-1)],$$

wherein x is a vector consisting of two elements, viz. $a_0$ and $a_1$; Fin is the funding need after the point in time i upon refinancing; $m_0$ is the number of funding instruments at the point in time when the loan is raised, and RG(i-1) is the opening remaining debt at the point in time i.

Besides this, an adjustment of h is performed in the following way:

$$h = [sign\ h] \cdot min\ [I h I, \frac{|x|}{2}]$$

This adjustment of h ensures that the change of the coefficients is not too large.

Step 10: Calculate whether one of two convergence criteria has been fulfilled

Hereafter it is to be determined whether one of the two convergence criteria for each of the polynomial coefficients has been fulfilled. This can be done in the same way as described in step 6 under the Type F model in that R(L) in the calculations is replaced by $a_0$ and $a_1$, respectively, and $F(a_0)$ and $F(a_1)$ are calculated as described in step 9. If this is the case, continue in step 11. If this is not the case, a new increment or decrement to the two coefficients must be determined, then continue in step 7.

Step 11: Calculate the proceeds criterion

Hereafter the difference in proceeds is calculated, the proceeds criterion at the point in time when loan is raised being given by

$$RG(0) = \sum_{j=1}^{m} K(j)H(j).$$

Otherwise the proceeds condition is

$$Fin(i) = \sum_{j=1}^{m} K(j)M(j).$$

Calculating the difference in proceeds means here calculating the difference between RG(0) and

$$\sum_{j=1}^{m} K(j)H(j),$$

or the difference between Fin(i) and

$$\sum_{j=1}^{m} K(j)M(j).$$

If H(J) or M(j) constitutes a valid solution, this difference is smaller than a given maximum difference. In this example, the proceeds condition has been fulfilled, if the elements on both sides of the sign of equation correspond to the 3rd decimal place. If the proceeds condition has been fulfilled, go to step 13, otherwise, go to step 12.

### Step 12: Adjust funding principal

There are three possibilities of adjusting the funding principals (M(j) or H(j)), depending on whether the difference in proceeds shows an excess of funding, a deficiency of funding or the sum of funding principals equals to zero.

In case of an excess of funding:

$$M(j) \ or \ H(j) = \left[ \frac{[Fin \ or \ RG(0)]}{\sum_{j=1}^{m} K(j)[M(j) \ or \ H(j)]} \right] \ for \ all \ j \leq m$$

In case of a deficiency of funding:

$$M(j) \ or \ H(j) = \left[ 1, \frac{[Fin \ or \ RG(0)] - K(1)[M(1) \ or \ H(1)]}{\sum_{j=2}^{m} K(j)[M(j) \ or \ H(j)]} \right]$$

for all j≤m.

If the sum of the funding principals equals to zero; (this can happen right at the end, just before maturity)

$$M(j) \ or \ H(j) = \frac{1}{m} \cdot \frac{Fin \ or \ RG(0)}{K(j)} \ .$$

After the adjustment of either M(j) or H(j) continue in step 13.

### Step 13: Calculate a change in the interest rate

The function F(R(L)), wherein R(L)) is the interest rate, is set equal to the difference in proceeds. A change in the interest rate is calculated as under step 5 in the Type F model. Then go to step 14.

Step 14: Calculate whether one of the two convergence criteria has been fulfilled

This step is identical with step 6 in Type F. If just one of the two convergence criteria has been fulfilled, then go to 15, otherwise go to step 16.

Step 15: The calculation is finished

Step 16: Adjust interest rate guess by h

Adjust the interest rate with h and go to step 2.

Step 17: Are funding principals < funding need?

Test whether the funding need is larger than or equivalent to the sum of the market price of the marginal funding principals given that GUESS(1,2) = (1,1). If this has been fulfilled, go to step 6, otherwise go to step 18.

Step 18: Determine an increment or a decrement to coefficient $a_0$

Determine an increment or a decrement to coefficient $a_0$ given by GUESS(1) = 1. That means that what is being determined is not the coefficient, but the increment or the decrement to the coefficient. Then continue in step 19.

Step 19: The funding principals are calculated

M(j) can then be found by inserting the determined coefficient and setting t={0,1,...,m-1}, in the following way:

$$M(j) = \max[0; [GUESS(1)a_0 + a_1 t + a_2 t^2] - H(0,j)].$$

Go to 20.

Step 20: Calculate the proceeds criterion

The proceeds criterion is calculated in the same way as in step 11, i.e. the difference in proceeds is calculated and then continue to step 9.

Step 21: For $m \leq 2$

This step is not shown in Fig. 8. In principle, this model operate in the same way as a Type F model. There is, however, a minor difference in step 3. Thus, step 3 in the Type F model must be replaced by the following:

Step 3: Determine funding principals

The solution to the m funding principals in matrix form is:

$$M(j) \text{ or } H(j) = \max[0, [C^T C]^{-1} C^T D], \qquad \text{for all } j \leq m.$$

C and D are defined as follows:

$$D = \left[\left[\left[\frac{1}{m_0} + YD(j)\right] - \sum_{j=1}^{m} A(1;j) H(0,j)\right], Fin\right], \text{ for all } j \leq m.$$

$$C = \begin{pmatrix} A(1,1) & A(1,2) \\ K(1) & K(2) \end{pmatrix} ,$$

wherein A(1;t) represents the tth element in the first row in the A matrix as defined in step 3 for the Type F model.

CHAPTER 4.

In this chapter, an example of a preferred embodiment is described, which embodiment in the following is called the Type $P_b$ model. The Type $P_b$ model corresponds to the Type $P_a$ model, which describes the calculation of principals of a loan raised on the payment date, but the Type $P_b$ model provides a method of solution in the cases of extraordinary payment, i.e. the debtor does not raise the loan on a creditor payment date, and thus the debtor does not have to pay full repayment and interest in the first year.

When calculating the initial principals according to the Type $P_b$ model, one more funding instrument must be applied than when calculating the initial principals according to the Type $P_a$ model. That means that if debtor has chosen to refinance his loan by 10% annually, 11 funding instruments will be in operation until the first creditor payment date when calculating according to the Type $P_b$ model. Therefore, on the opening date of the refinancing no new fund code will be opened.

The calculation of principals according to the Type $P_b$ model follows the steps 1-21 for the Type $P_a$ model in that the steps 2, 4, 5, 6, 7, and 19 have been changed and replaced by the steps stated below:

Step 2 ($P_b$) : Determine debtor's profile of repayment and interest

When the interest rate has been determined, debtors profile of repayment and interest and profile of remaining debt can be established. The model will return with the following pieces of information about debtor's payments: interest, repayments, repayment and interest, and the development of the remaining debt. In addition to this, a variable TILT is defined, in that TILT is set equal to 0. The variable, being set equal to zero, will be applied in some of the following steps.

Step 4 ($P_b$) : Define a trend function

Here, use is made of a polynomial of the second degree, which here is called a trend function.
The trend function: $a_0 + a_1 t + a_2 t^2$, for $t = [0,1,....,m-2]$

The trend function is applied for calculating the individual funding principals, and the purpose of the trend function is to try to adjust the developments of the funding principals to the development of the remaining debt concerning debtor's loan.

Step 5 ($P_b$): Calculate the coefficients in the trend function

The coefficients ($a_0, a_1$, and $a_2$) are calculated in this way:

$$(a_0, a_1, a_2) = [B^T B]^{-1} B^T \max \left[ \frac{RG(j)}{m_0} ; H(0,j) \right] \quad \text{for all } j \leq m.$$

B is defined as:

$$B = \begin{bmatrix} 1 & t(1) & t(1)^2 \\ 1 & t(2) & t(2)^2 \\ . & . & . \\ 1 & t(m) & t(m)^2 \end{bmatrix}$$

wherein:

H(o,j): the jth funding principal at a given point in time, before refinancing is performed in the current period. It applies by definition that at any point in time $H(0,m) = 0$. It further applies that $H(0,j) = 0$ for all j at the point in time 0.

If the calculation is carried out at the point in time when the loan is raised, then continue in step 6. At any other point of time of refinancing, continue in step 5a.

It is noted that M(j) are the marginal funding principals for j={1,2,...,m}, i.e. the additions to the funding principals at the points in time of refinancing.

Step 6 ($P_b$): Determine an increment or decrement to the coefficients

An increment or decrement to the coefficients $a_0$ and $a_1$ is now determined. The first increment or decrement must be GUESS(1,2) = (1.25,1), i.e. $a_0$ must be multiplied by 1.25, and $a_1$ must be multiplied by 1.

For further calculation of M(j), it is further determined that a parameter Z, which is equal to zero, is set equal to 1.

Then continue in step 7.

Step 7 ($P_b$): Funding principals are calculated

Then M(j) can be calculated by inserting the determined coefficients and setting t={0,1,...,m-2}, thus;

$$M(j) = max[0; (Z, [GUESS(1)a_0 + a_1 t + a_2 t^2]) - H(0,j)].$$

Hereafter a balance criterion is calculated as the numeric value of a balance difference

$$Fin(i) - \frac{1}{m_0} \cdot RG(i\text{-}1),$$

for the funding point in time i. If the balance criterion is larger than a given maximum difference, e.g. 0.1, TILT is set equal to 1.

Step 19 ($P_b$) : Funding principals are calculated

Hereafter M(j) can be found by inserting the determined coefficient and setting t={0,1,...,m-2}, thus:

$$M(j) = max[0;(Z,[GUESS(1)a_0 + a_1 t + a_2 t^2]) - H(0,j)].$$

Hereafter a balance criterion is calculated as the numeric value of a balance difference

$$Fin(i) - \frac{1}{m_0} \cdot RG(i\text{-}1),$$

for the funding point in time i. If the balance criterion is larger than a given maximum difference, e.g. 0.1, TILT is set equal to 1.

Go to step 20.

According to the Type $P_b$ model, the calculations are made in such a way that when calculating the initial principal and when calculating the principal at the first refinancing, the calculations are made according to the above operation, but no test of the difference in balance corresponding to the size of TILT is carried out. When calculating the principal at the second refinancing operation as well as at the following refinancing operations, test of the difference in balance prior to step 4 is carried out, and if TILT=0, the calculations continue as stated from step 4 under the Type $P_a$ model, but if TILT=1, calculations continue as stated from step 4 ($P_b$) under the Type $P_b$ model.

CHAPTER 5.

In this chapter, a description is made of an example of a preferred embodiment, which is called the Type $P_c$

model in the following. The Type $P_c$ model corresponds to the Type $P_a$ model except that when calculating the trend function, an nth degree polynomial is applied, wherein n can be equal to the number of initial funding instruments at a maximum.

Calculation of principals according to the Type $P_c$ model follows the steps 1-21 for the Type $P_a$ model in that, however, the steps 4, 5, 7, and 19 have been changed and replaced by the steps stated below:

Step 4 ($P_c$) : Define the trend function

Here a polynomial of the nth degree, which is here called a trend function, is applied.

The trend function: $a_0 + a_1 t + a_2 t^2 + ..... + a_n t^n$, for t = [0,1,...,m-1], wherein n is equal to the number of initial funding instruments at a maximum.

Use is made of a trend function to calculate the individual funding principals, and the purpose of the trend function is an attempt to adjust the developments of the funding principals to the development of the remaining debt concerning debtor's loan.

Step 5 ($P_c$) : Calculate the coefficients in the trend function

The coefficients ($a_0, a_1, ......, a_n$) are calculated in the following way:

$$(a_0, a_1, ....., a_n) = [B^T B]^{-1} B^T \max \left[ \frac{RG(j)}{m_0} ; H(0,j) \right] \text{ for all } j \leq m.$$

B is defined as:

$$B = \begin{bmatrix} 1 & t(1) & t(1)^2 & . & . & t(1)^n \\ 1 & t(2) & t(2)^2 & . & . & t(2)^n \\ . & . & . & . & . & . \\ 1 & t(m) & t(m)^2 & . & . & t(m)^n \end{bmatrix}$$

wherein:

n: at a maximum is equal to the number of initial funding instruments.

H(o,j): the jth funding principal at a given point in time, before refinancing is performed in the current period. It applies by definition that at any point in time H(0,m) = 0. It further applies that H(0,j) = 0 for all j at the point in time 0.

If the calculation is carried out at the point in time when the loan is raised, then continue in step 6 (H(j) is calculated). At any other point in time of refinancing, continue in step 5a.

It is noted that M(j) are the marginal funding principals for j={1,2,...,m}, i.e. the addition to the funding principals at the points in time of refinancing.

Step 7 ($P_c$) : Funding principals are calculated

Hereafter M(j) or H(j) can be calculated by inserting the determined coefficients and setting t={0,1,...,m-1), thus:

$$M(j) \text{ or } H(j) = \max [0; [GUESS(1)a_0 + a_1 t + a_2 t^2 + ... + a_n t^n] -$$

H(0,j)].

Step 19 (P$_c$): Funding principals are calculated

Hereafter M(j) can be found by inserting the determined coefficient and setting t={0,1,...,m-1}, thus:

$$M(j) = \max[0;[GUESS(1)a_0 + a_1 t + a_2 t^2 + ... + a_n t]n - H(0,j)].$$

Go to 20.

CHAPTER 6.

In this chapter, an example of a preferred embodiment is described, which embodiment is called the Type P$_d$ model in the following. The Type P$_d$ model corresponds to the Type P$_b$ model, which describes the calculation of principals of a loan in the case of extraordinary repayment, i.e. debtor does not raise his loan on a creditor payment date, and thus debtor does not have to pay the full repayment and interest in the first year. But when calculating principals according to the Type P$_d$ model, an nth degree polynomial is applied when calculating the trend function, wherein n can be equal to the number of initial funding instruments at a maximum. I.e. the trend function is calculated in the same way as under the Type P$_c$ model.

Calculation of principals according to the Type P$_d$ model follows the steps 1-21 for the Type P$_c$ model in that, however, the steps 2, 4, 5, 6, 7, and 19 have been changed and replaced by the steps stated below:

Step 2 (P$_d$): Determine debtor's profile of repayment and interest

When the interest rate has been determined, debtor's profile of repayment and interest and profile of remaining debt can be set up. The model will return with the following pieces of information concerning debtor's payments: interest, repayments, repayment and interest, and the development of the remaining debt. In addition to this, a variable TILT is defined, in that TILT is set equal to 0. The variable, being set equal to zero, will be applied in some of the following steps.

Step 4 (P$_d$) : Define a trend function

Use is made of a polynomial of the nth degree, which is here called a trend function.

The trend function: $a_0 + a_1 t + a_2 t^2 + ..... + a_n t^n$, for $t = [0,1,....,m-2]$, wherein n is equal to the number of initial funding instruments at a maximum.

The trend function is applied to calculate the individual funding principals, and the purpose of the trend function is an attempt to adjust the developments of the funding principals to the development of the remaining debt concerning debtor's loan.

Step 5 (P$_d$) : Calculate the coefficients in the trend function

The coefficients (a$_0$,a$_1$, ...... a$_n$) are calculated in this way:

$$(a_0, a_1, . . . . . , a_n) = [B^T B]^{-1} B^T \max \left[ \frac{RG(j+1)}{m_0} ; H(0, j+1) \right]$$

for all j≤m.

B is defined as:

$$B = \begin{bmatrix} 1 & t(1) & t(1)^2 & . & . & t(1)^n \\ 1 & t(2) & t(2)^2 & . & . & t(2)^n \\ . & . & . & . & . & . \\ 1 & t(m) & t(m)^2 & . & . & t(m)^n \end{bmatrix}$$

wherein:

n:          is equal to the number of initial funding instruments at a maximum.

H(o,j):      the jth funding principal at a given point in time, before refinancing is performed in the current period. It applies by definition that at any point time $H(0,m) = 0$. It further applies that $H(0,j) = 0$ for all j at the point in time 0.

If the calculation is carried out at the point in time when the loan is raised, then continue in step 6 (H(j) is calculated). At any other point in time of refinancing, continue in step 5a.

It is noted that M(j) are the marginal funding principals for j={1,2,...,m}, i.e. the additions to the funding principals at the points in time of refinancing.

Step 7 ($P_d$) : Funding principals are calculated

Hereafter M(j) can be calculated by inserting the determined coefficents and setting t={0,1,...,m-2}, thus:

$$M(j) = \max[0; (Z, [GUESS(1) \, a_0 + a_1 t + a_2 t^2 + .... + a_n t^n]) - H(0,j)].$$

Then a balance criterion is calculated as the numeric value of a balance difference

$$Fin(i) - \frac{1}{m_0} \cdot RG(i-1),$$

for the funding point in time i. If the balance criterion is larger than a given maximum difference, e.g. 0.1, TILT is set equal to 1.

Step 19 ($P_d$) : Funding principals are calculated

Hereafter M(j) can be found by inserting the determined coefficient and setting t={0,1,...,m-2}, thus:

$$M(j) = \max[0; (Z, [GUESS(1) \, a_0 + a_1 t + a_2 t^2 + .... + a_n t^n]) - H(0,j)].$$

Then a balance criterion as to the numeric value of a difference in balance is calculated

$$Fin(i) - \frac{1}{m_0} \cdot RG(i-1),$$

for the funding point in time i. If the balance criterion is larger than a given maximum difference, e.g. 0.1, TILT is set equal to 1.

Go to step 20.

According to the Type $P_d$ model, the calculations are made in such a way that when calculating the initial principal and when calculating the principal at the first refinancing, then calculation according to the above operation is carried out, but no test of the difference in balance corresponding to the size of TILT is carried out. When calculating the principal at the second refinancing operation as well as at the following refinancing operations, test of the difference in balance prior to step 4 is carried out, and if TILT=0, the calculations continue as stated from step 4 under the Type $P_c$ model, but if TILT=1, calculations continue as stated from step 4 ($P_d$) under the Type $P_d$ model.

CHAPTER 7.

In this chapter, a description is made of an example of a preferred embodiment, which is a generalization of the four embodiments called Type $P_a$, $P_b$, $P_c$, and $P_d$ in that the four embodiments are merged into one and the same model. The Type $P_a$ model describes calculation of the principals of a loan raised on the payment date, whereas the Type $P_b$ model describes calculation of principals of a loan raised on all other dates than the payment date. The Type $P_a$ and $P_b$ models use a polynomial of the second degree as trend function. In the Type $P_c$ and Type $P_d$ models, a polynomial is also applied as trend function, but here the degree of the polynomial can assume values corresponding to the funding instruments with the longest term to maturity. Type $P_c$ and Type $P_d$ describe the calculation of principals of a loan which is raised on the payment date and which is not raised on the payment date, respectively, corresponding to Type $P_a$ and Type $P_b$.

In the general Type P model, all the above-mentioned special cases are taken into consideration, in that they are all implemented in the Type P model. For the sake of perfection, in the description of the general Type P description, the problems and method to the solution to the problems are repeated before the interpretation of the individual steps in the model.

The general problem

In the use of LAIR type P, a part of debtor's opening remaining debt is interest rate adjusted each year. The debtor chooses a desired annual adjustable rate interest per cent which at the same point in time determine how many funding instruments are to be issued, and therefore also determines the duration of the funding period.

If debtor chooses e.g. a 10% annual interest rate adjustment, it will take 1/10% = 10 years before the loan is fully interest rate adjusted. The funding period is therefore 10 years and the number of funding instruments 10.

At every interest rate adjustment, a funding instrument matures. In order to keep the part of interest rate adjustment at the intended level, a new funding instrument with a term to maturity of $m_0$ year is issued. This continues until the number of funding instruments is gradually reduced when the loan approaches its maturity.

The connection between the number of funding instruments and the part of interest rate adjustment means that the intended interest rate adjustment part can be expressed as $1/m_0$. When debtor chooses interest rate adjustment part, $m_0$ is chosen at the same time.

There is a special complex of problems attached to the point in time of the raising of the loan. If the loan is raised in December, the first interest rate adjustment will be performed well over one year later. The rule set out above can thus be applied.

At any other point in time during the year, the interest rate adjustment percentage at the first interest rate adjustment is, however, written down in relation to the quarter in which the loan has been raised. This means that the funding period is prolonged by 1 year, and the number of funding instruments is increased by 1. This means that the following applies in connection with the disbursement of the loan

$$m = m_0 + 1$$

Already at the first interest rate adjustment, the general rule of $m_0$ funding instruments is followed. Thus, no new instrument is issued at the first interest rate adjustment. In the model, there is a special procedure in connection with the extra funding instrument. The procedure is marked by a variable, TILT, being given the value 1. One advantage of applying this method is a more stable funding development, which will be experienced later on.

The annual interest rate adjustment means that the balance principle plays a slightly different role. At the end of each year, the total number of payments on the debtor side as well as on the bond side is known. By determining the interest rate adjustment amount residually, the strict balance principle has been fulfilled by definition. It is, however, not necessarily so that the intended interest rate adjustment corresponds to the actual one.

Therefore, the problem to be solved in the model is to adjust the funding so that the intended and the actual parts of interest rate adjustments correspond at the same time as the proceeds criterion is fulfilled. Upon the disbursement of the loan the problem is described by the equations.

$$\text{Year 1} \quad YD(1) + REG^D \; \frac{RG(0)}{m_0} = H(1) + REG \sum_{J=1}^{m} R^N(j)H(j)$$

$$\text{Year 2} \quad YD(2) + \frac{RG(1)}{m_0} = H(2) + \sum_{j=2}^{m+1} R^N(j)H(j)$$

.

.

$$\text{Year m} \quad YD(m) + \frac{RG(m-1)}{m_0} = H(m) + \sum_{j=m}^{2m-1} R^N(j)H(j)$$

wherein

$REG^D$   is a regulation function for the interest adjustment percentage in first year. $REG^D$ can assume the values {¼, ½, ¾}

From now on, the equations are designated as the balance requirements.

If year 1 is considered solely, the problem seems easy to solve. It is only to determine funding principals leading to the intended payments and the intended proceeds. In principle, the distribution of the funding principals is of minor importance, so there is an infinite number of solutions to the problem.

The problems start to arise when the interest rate adjustment begins by the end of the year. If an arbitrary distribution of the funding principals at the disbursement of the loan was chosen, it is not certain that it is possible to hit the desired profile of interest rate adjustment. If most of the funding at the disbursement of the loan is placed in H(2) at the disbursement of the loan, the right side of the sign of equation will be large. And the result is that the interest rate adjustment amount will be large too, if the balance requirement is to be fulfilled. Thus, it is not possible to keep the interest adjustment part down at the desired level unless bonds are redeemed.

If only a very small part of the funding was placed in H(2), it may, on the other hand, be difficult to reach the desired interest rate adjustment. This may, however, be partly saved by placing a large part of the proceeds from the interest rate adjustment in the bond now having a term to maturity of 1 year. The result, however, being an unstable profile of funding.

If the balance requirements with the intended interest rate adjustment every year are to be fulfilled, it is necessary to formulate a dynamic strategy for the placing of the funding also taking into consideration the perspective in the long run.

If the loan is repaid, an arbitrary strategy for the funding will also raise another, but none the less just as essential problem. By each interest rate adjustment, the model cannot merely place the entire funding in a new amount of bonds issued in a single year. As it will be remembered, the amount of bonds actually falling due corresponds with the actual amount of refinancing, (apart from premium or discount when issued), which is again determined by the interest rate adjustment per cent and the remaining debt. When the newly issued bond falls due, the remaining debt is smaller, but the amount of refinancing is of fairly the same size as current. Thus, the future interest rate adjustment per cent does not correspond with the intended one. Therefore, the model must continuously have the possibility of placing the funding in bonds not issued over several years.

In the model, the dynamic strategy means that the funding is adjusted each year in such a way that the payments of the bonds correspond to a falling part of the payments from the debtor side as time is progressing. By each interest rate adjustment, issue is further performed in each funding instrument - thus, gradually increasing accordance occurs between the bond side and the debtor side given the part of interest rate adjustment. By the disbursement of the loan, the problem being solved via the model can be formulated as

$$\text{Year 1} \quad YD(1) + REG^D \frac{RG(0)}{m_0} = H(1) + REG \sum_{j=1}^{m} R^N(j) H(j)$$

$$\text{Year 2} \quad F\left(YD(2) + \frac{RG(1)}{m_0}\right) = H(2) + \sum_{j=2}^{m} R^N(j) H(j)$$

.

.

$$\text{Year m} \quad F\left(YD(m) + \frac{RG(m-1)}{m_0}\right) = [1 + R^N(m)] H(m)$$

wherein F is a falling function of j.

In the model, the funding follows a so-called trend function which is estimated with point of origin being the desired interest adjustment and the funding already issued H(O,j). This is performed in an inner iterative procedure in the model.

When the funding has been determined in such a way that the interest rate adjustment corresponds to the intended profile as much as possible, then check whether the proceeds of the funding is correct. If the proceeds is correct, check whether the interest rate on the loan corresponds to the yield on the funding portfolio. If this is not the case, then iterate the interest rate on the loan in the outer procedure.

Hence, the model is solved in a 2-step-procedure and not simultaneously as for the F model.

In general, the notation is the same as in the F model. However, the current issue of bonds does mean that it is necessary to differentiate between three definitions of funding principals.

M(j)  designates the marginal funding, i.e. the amount of bonds issued in the jth year when the current issuing of bonds is performed.

H(0,j)  Are the bonds already issued before the present issuing of bonds.

H(j)  is the total amount of bonds in the jth year.

From the definitions the following appears

$$M(j) + H(0,j) = H(j)$$

By the disbursement of the loan, it is obvious that H(0,j)=0, and thus it applies that M(j)=H(j). In the notation, it is therefore not necessary to differentiate between the disbursement of loan and the interest rate adjustment in this respect.

Accordingly, the funding need by the disbursement of the loan as well as the interest rate adjustment will be indicated by Fin(j) . Thus, Fin(j) may either be the principal of the loan or the current amount of funding. Also in this respect, it is unnecessary to differentiate between the disbursement and interest rate adjustment.

As a consequence of no differentiation between the disbursement of the loan and interest rate adjustment, REG and $REG^D$ will form a part of expressions also applying to interest rate adjustments. Here, REG=1 and $REG^D$=1 are set in accordance with the definition.

Type P - method

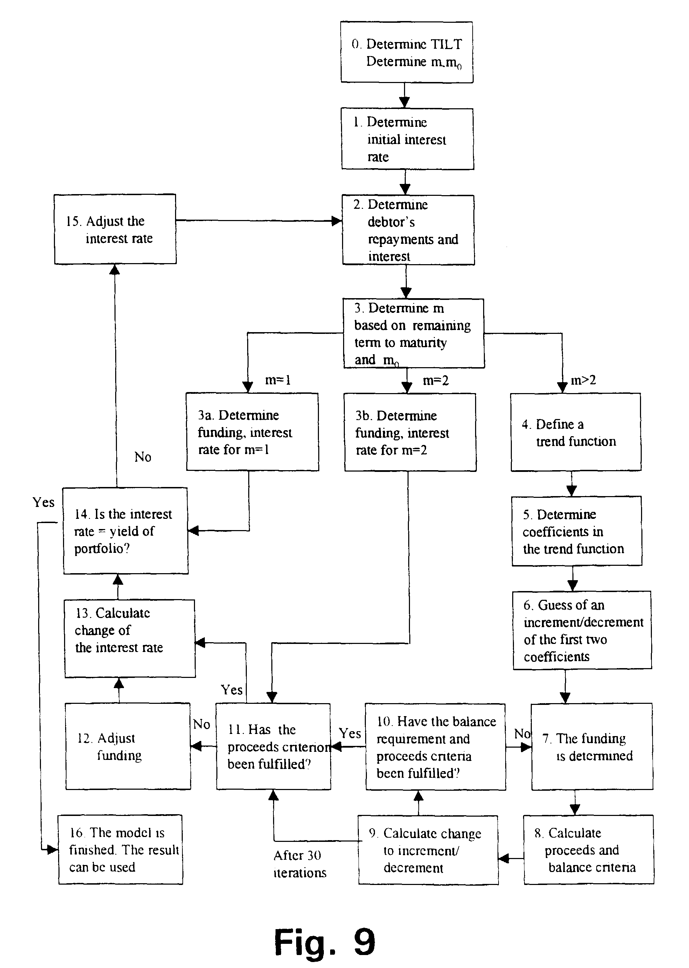

Below the solution to the problem concerning a LAIR, wherein the principals are calculated according to the Type P model, is explained step by step. In principle, this is performed in 16 steps. The explanation corresponds to the steps shown in the flow-chart in Fig. 9. In the following, the course of the procedure is outlined in order to elucidate the two-step-procedure.

The model begins with a guess at an interest rate on a loan. On the basis hereof, the debtor repayments and interest on the debtor side and a first guess at the funding are determined. Then the model estimates the funding in an inner loop in step 7 to step 10. The loop is left only when the funding fulfils the requirement as to the part of interest rate adjustment and the proceeds condition.

Check in the outer loop whether the interest rate on the loan corresponds to the yield on the funding portfolio. If this is not the case, the guess at the interest rate is adjusted, and again the model calculates a number of debtor repayments and interest etc. Thus, the inner loop is called again with the new interest rate.

The iterative procedure concerning the interest rate constitutes the outer loop.

Not until all the requirements have been fulfilled, does the model leave the outer loop too, and the final result is available.

Step 0: Determine TILT. Determine m, $m_0$

Before actual calculations are performed, it must be loaded into the model, whether the loan is raised in December with $m=m_0$ funding instruments or with $m=m_0+1$ funding instruments at any other point in time of the year.

This is done by assigning $TILT \in \{0,1\}$ a value.

Set TILT=1 and $m=m_0+1$ if

- disbursement of the loan in January-November
- the first interest rate adjustment for loans disbursed in January-November and $m_0<$remaining term to maturity

Set TILT=0 and $m=m_0$

- in all other cases.

The primary function of TILT is to indicate that an adjustment in the number of funding instruments at the disbursement of the loan is carried out, wherein it generally applies that

$$m=m_0+TILT$$

cf. the above.

Step 1: Determine initial interest rate on the loan

In this step an initial interest rate on the loan is determined. It is expedient that the determination of the initial interest rate on the loan is not arbitrary in order to minimize the number of iterations to be carried out later on.

In the model, a guess is made that a weighted average of the yield on the individual funding instruments, thus

$$R^K = \frac{\sum_{t=1}^{m} \frac{1}{m} \cdot t \cdot r(0,t)}{\sum_{t=1}^{m} \frac{1}{m} \cdot t}$$

wherein

t               is the terms to maturity on the individual funding instrument, thus t={1,...,m}.

r(0,t)          is the yield at the point in time 0 for the bond with term to maturity at the point in time t

All input to the model are loaded in step 1. The total input are

The bond side
number of funding instruments, nominal interest rate on each instrument, number of annual creditor payments, and creditor payment dates as well as the price of each instrument.

The debtor side

disbursement date, principal, amortization principle, term to maturity, number of annual debtor payments as well as debtor payment dates.

Step 2: Determine repayments and interest to be paid by debtor

In this step, the model begins the outer loop. When a guess as to the interest rate has been made, the profile of repayments and interest to be paid by debtor can be made. This requires that the principal of the loan and the type of amortization is loaded.

The model will return with the following pieces of information about debtor's payments: interest, repayments, repayment and interest, and development of the remaining debt.

Step 3 - Determine m on the basis of the remaining term to maturity and $m_0$

The remaining term to maturity on the loan is decisive for the further operations in the model. No issuing of funding instruments is performed having a term to maturity in excess of the term to maturity on the loan. m is trimmed so

m ≤ the remaining term to maturity on the loan

When m is determined in such a way that the requirement has been fulfilled, the model can continue in three different ways.

If m=1, the funding and the interest rate on the loan are calculated in step 3a.

If m=2, continue in step 3b, wherein the funding and the interest rate on the loan are calculated according to a method which is related to the F model. All the time the LAIR type P50 will be calculated in this step apart from at the issue, wherein m can be three depending on the point in time of the disbursement of the loan. In addition, in the last year the loan will be calculated in step 3a.

If m>2, continue in the real model in step 4.

This means that in step 3 the type P loan is in general first calculated in the actual model, then in step 3b, and finally in step 3a.

Step 3a - Determine funding rate for m=1

If m=1, the funding can be determined on the basis of the proceeds condition as

$$M(1) = \frac{Fin(0)}{K(1)}$$

Since no more interest rate adjustments will occur, it follows from the strict balance principle that

$$YD(m) = [1 + R^N(m)]\, H(m)$$

which determine a unambiguous interest rate on the loan. Thus, the calculation of the loan is finished.

Step 3a may, however, be generalized. A number of problems concerning the term to maturity on the loan can be solved by applying a similar procedure a number of years before the term to maturity on the loan. The number of years are called closing time which is an input variable.

By setting closing time>1, the requirement concerning annual interest rate adjustments of a certain volume in the closing time period is abandoned. In stead, the entire funding is placed in the closing time period in the bond with the longest term to maturity, and the interest rate on the loan is found as described above.

When the calculations in step 3a are finished, then continue in step 14.

Step 3b - Determine funding rate for m=2

If m=2, in the first following year, the balance requirement can be written as

$$(A) \qquad YD(1) + REG^D \frac{RG(0)}{m_0} = (1 + REG\, R^N(1))\, H(1) + REG\, R^N(2)\, H(2)$$

and the proceeds criterion as

$$(B) \qquad M(1)K(1)+M(2)K(2)=Fin(0)$$

These are sufficient conditions for determining the funding analytically as the solution to two equations (A and B) with two unknown (M(1) and M(2)).

In order to do this, (A) and (B) are written into a form of matrix in the following way

$$C \times M = D$$

Wherein
M=(M(1),M(2)) is a 2×1 vector and

$$D = \left[ REG^D \frac{RG(0)}{m_0} \ + \ YD(1) \ - (1+REG \ R^N(1))H(0,1) - REG \ R^N(2)H(0,1) \ , Fin(1) \right]$$

is a 2×1 vector too, and

$$C = \begin{pmatrix} 1 + REG * R^N(1) & REG * R^N(2) \\ K(1) & K(2) \end{pmatrix}$$

C is square and therefore it can be inverted which gives the solution

$$M = \max[0; \ C^{-1}D]$$

The REG and REG$^D$ factors do only have an influence on loans either being paid with a term to maturity of 2 years or type P50,0 the first year.

The model continues in step 11 wherein it is checked that the funding criterion has been observed. This check is necessary if C$^{-1}$D gives a negative funding principal. In this situation, the max-condition means that the model is making an excess of funding when determining the funding.

If a funding principal is adjusted because it would otherwise be negative, a deviation in the current interest rate adjustment arises in relation to the intended interest rate adjustment. Therefore, the analytic solution does not provide certainty that the intended profile of interest rate adjustment can be respected.

Step 4 - Define a trend function

In step 4, a trend function is defined, which trend function estimates the size of the amounts of interest rate adjustment as a function of the time t.

In principle, the trend function can have any kind of functional form. A fine estimate for the development of the remaining debt can be obtained by applying a polynomial of the (q-1)th degree.

Thus, the trend function has the form

$$a_0 + a_1 t + a_2 t^2 + ... + a_{q-1} t^{q-1}$$

wherein $0 \leq t \leq m$. Furthermore, a limitation must be set on q so that the degree of the polynomial does not exceed the number of funding instruments minus 1, whereby the polynomial would have too many degrees of freedom. This means that

$$q \leq m$$

Therefore, for a type P20,0 a polynomial of the 4th degree at a maximum is estimated. If q=m, the trend function will estimate the amounts of interest rate adjustment perfectly.

If the loan is paid with $m=m_0+1$ in the special TILT procedure, the degree of the polynomial is not increased. Therefore, quite exactly the restriction on q can be expressed as

$$q \leq m\text{-TILT}$$

Step 5: Determine coefficients in the trend function

Then the coefficients of the trend function must be estimated. From step 2 the development of the remaining debt is known given the guess at an interest rate on the loan.

At each point in time of interest rate adjustment t=1,2,..,m the trend function must correspond to the intended interest rate adjustment. At the same time negative marginal funding must be avoided. Therefore the trend function must be estimated, so the function value of each t corresponds to the maximum of either the intended interest rate adjustment or the funding already issued in the bond with the term of to maturity at the point in time t.

$$a_0 + a_1 t + a_2 t^2 + \ldots + a_{q-1} t^{q-1} = \max\left[REG \, ^D \frac{RG(t-1)}{m_0}, H(0, t)\right]$$

$$\text{for } t = \{0, 1, \ldots, m-1\}.$$

In doing so the coefficients can be determined by the matrix equation

$$(a_0, a_1, \ldots, a_{q-1}) = [B^T B]^{-1} B^T \max\left[REG \, ^D \frac{RG(t-1)}{m_0}, H(0, t)\right]$$

wherein

$(a_0, a_1, ..., a_{q-1})$ is a q×1 vector
B is a m×q matrix and
max[.,.] is a m×1 vector

The matrix B is given by

$$B = \begin{bmatrix} 1 & t_0 & t_0^2 & . & . & t_0^{q-1} \\ 1 & t_1 & t_1^2 & . & . & t_1^{q-1} \\ . & . & . & . & . & . \\ 1 & t_{m-1} & t_{m-1}^2 & . & . & t_{m-1}^{q-1} \end{bmatrix} = \begin{bmatrix} 1 & 0 & 0 & 0 & . & 0 \\ 1 & 1 & 1 & 1 & . & 1 \\ 1 & 2 & 4 & 8 & . & 2^{q-1} \\ 1 & 3 & 9 & 27 & . & 3^{q-1} \\ . & . & . & . & . & . \\ 1 & m-1 & (m-1)^2 & . & . & (m-1)^{q-1} \end{bmatrix}$$

The last sign of equation is due to the fact that t=0,1,2,...,m-1 does only assume integral values of whole figures.

However, the estimate of the trend function is changed a little, if the loan is a bullet loan. It is decisive, especially in the last phase of the loan that all the time funding is performed to a relatively large extent in the funding instrument with the longest term to maturity. Therefore, the trend function must not have too large an inclination. To ensure this, a vector x is introduced so that

$$(a_0, a_1, ..., a_{q-1}) = [B^T B]^{-1} B^T \max[x, H(0, t)]$$

wherein

$$x = \left( \frac{9}{10}, \frac{9}{10}, \ldots, \frac{9}{10}, \frac{11}{10} \right) \frac{REG^D \dfrac{RG(i-1)}{m_0}}{\sum_i x_i RG(i-1)} \; for \; x_i \in x$$

is a vector with q elements.

If the remaining term to maturity of the loan is shorter than $m_0$ so that the number of funding instruments is reduced by each interest rate adjustment, then it is of even greater importance that the funding is placed in bonds with the longest possible term to maturity. Therefore the definition of x is changed to

$$x = (0, 0, ..., 0, 1) \frac{REG^D RG(i-1)}{m_0}$$

Step 6: Guess at an increment or a decrement to the first two coefficients

The trend function must be adjusted in the following steps, so that the balance requirements correspond to the intended interest rate adjustment and the proceeds criterion is fulfilled. Initially, the trend function must be adjusted.

The adjustment is generally performed by means of two factors GUESS(0) and GUESS(1) in the following way

$$GUESS(0) a_0 + GUESS(1) a_1 t + a_2 t^2 + ... + a_{q-1} t$$

GUESS(0) shifts the trend function parallel-wise up and down in the (H(j),j) plane, whereas GUESS(1) influences the inclination of the trend function.

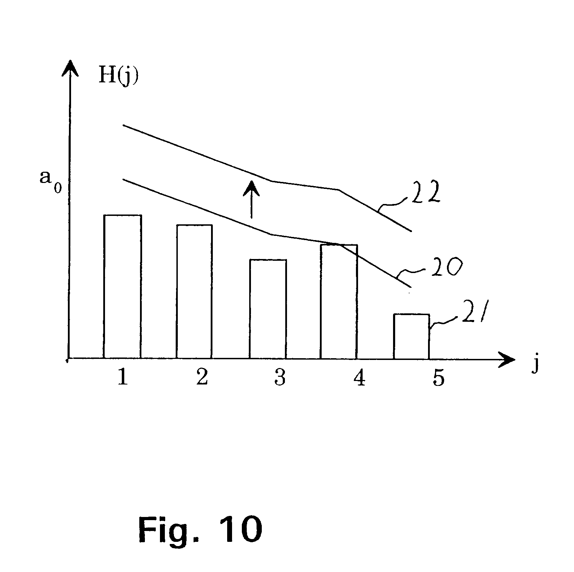

Already before the iteration in the inner loop is started, the factors are given the values GUESS(0)=1.25        and        GUESS(1)=1 corresponding to a shift upwards. The idea of the shift is to obtain better information concerning the relationships between the individual marginal funding principals. In Fig. 10 an example of the appearance of the trend function is shown. Line 20 shows the initial trend function, whereas line 22 shows the trend function shifted upwards. The columns called 21 show the size of the individual principals.

In the example, H(0,4) is disproportionately large so that according to the trend function M(4) will be 0. If the marginal funding principals are generally increased in a later step, the model, however, does not have much information as to how much the other marginal funding instruments must be increased before M(4) is increased as well. By a parallel displacement the trend function upwards this piece of information is obtained.

Thus, if TILT=1 and the model operate with an extra funding instrument, only one GUESS-variable is introduced only in step 6. Because of the special profile of interest rate adjustment, the first funding principle is thus explicitly estimated by a variable Z which is explained in details in the next step. Provisionally, set Z=1.

Step 7: The funding is determined

The inner loop of the model starts in this step.

On the basis of the trend function, the marginal funding is determined by

$$M(j) = \max[0; [GUESS(0)a_0 + GUESS(1)a_1 t + a_2 t^2 +$$
$$... + a_{q-1} t^{q-1}] - H(0, j)]$$

wherein t={0,1,...,m-1} as before. By the payment of the loan it is applied again that H(j) = M(j) + H(0,j) and H(0,j) = 0.

The loop starting in step 7 and not in step 5 or 6 means that $a_0,a_1,...,a_{q-1}$ is only estimated once for every guess at an interest rate. Therefore, in the following step $a_0,a_1,...,a_{q-1}$ are constant. Correspondingly (GUESS(0), GUESS(1))=(1.25, 1) is solely an initial guess.

For TILT=1 the first principal M(1) is determined as

$$M(1) = Z - H(0,j)$$

This is necessary, since a polynomial has difficulties in estimating M(1) which makes up a down to one fourth of the other funding principals as a consequence of the reduced interest rate adjustment per cent.

In the following steps when the model estimates Z on the basis of the balance requirements and the proceeds criterion M(1) is explicitly determined, so that the criteria are fulfilled with certainty by the first occurring interest rate adjustment.

The other funding principals are determined as above. Generally the following applies

$$M(j) = \max[0; [Z, GUESS(0)a_0 + a_1 t + a_2 t^2 + .... + a_{q-1} t^{q-1}] - H(0,j)]$$

Parallel herewith the funding for
((GUESS(0)+inc,GUESS(1)), (GUESS(0),GUESS(1)+inc) is determined.

From now on the notation (GUESS(0),GUESS(1))+inc) is simply applied. The standard is that inc has the value 0.00001.

Step 8: Calculate the proceeds and balance criteria

In step 8 it is determined whether the factors GUESS(0), and GUESS(1) are determined so that the balance requirement, given the intended profile of interest rate adjustment is respected and the proceeds criterion is fulfilled.

The balance requirement is given by

$$YD(1) + REG^D \frac{RG(0)}{m_0} = H(1) + REG \sum_{j=1}^{m} R^N(j) H(j)$$

and the proceeds criterion is given by

$$Fin(0) = \sum_{j=1}^{m} K(j) M(j)$$

Only the balance requirement for the first year has to be checked. Naturally, the funding must also be arranged taking into consideration the remaining years, but this is ensured by the initial determination of the trend function.

Step 9: Calculate a change to an increment or a decrement

On the basis of the calculated values for the balance requirement and the proceeds criterion, respectively, a change to GUESS(0) and GUESS(1) must be determined on the basis of the Gauss-Newton algorithm.

Already in step 5 of the F model a general formula apparatus was set up. In the F model a change to the interest rate on the loan was determined, whereas in step 9 a change to the factors in the trend function is determined - to a large extent the method is the same.

The most important difference being the definition of the F function. F(.) is here defined as a function of (GUESS(0) ,GUESS (1))

$$F(GUESS(0),GUESS(1))$$

$$\left[Fin(0) - \sum_{j=1}^{m} K(j)M(j) \quad , \quad H(1) + REG\sum_{j=1}^{m} R^N(j)H(j) - YD(1) - REG^D\frac{1}{m_0}RG(0)\right]$$

Here also the value of F(.) is determined for both (GUESS(0)GUESS(1)) and ((GUESS(0),GUESS(1))+inc)

The change to (GUESS(0), GUESS(1)) is called h, and is given by

$$h = \Delta(GUESS(0), \ GUESS(1)) = \frac{[D^TD]^{-1}D^Tg}{j_V}$$

wherein D and g are defined as in the F model. It must be noted that

$$J = \frac{1}{inc}\begin{bmatrix} F_1(G_0,G_1) - F_1(G_0+inc,G_1) & F_1(G_0,G_1) - F_1(G_0,G_1+inc) \\ F_2(G_0,G_1) - F_2(G_0+inc,G_1) & F_2(G_0,G_1) - F_2(G_0,G_1+inc) \end{bmatrix}$$

wherein $G_0$ = GUESS(0) and $G_1$ = GUESS(1). The foot sign for F states whether it is the first or the second part of the expression for J which is estimated. I.e. $F_1(G_0,G_1)$ determines the value of the proceeds criterion for GUESS(0) and GUESS(1).

If TILT=1, a change to (Z,GUESS(0)) is determined in stead.

It must be noted that step 9 only allows 30 passages. That means that if the model during 30 attempts has not been able to estimate an adjustment of the trend function and thus the funding satisfactorily, the loop is left, and it continues in step 11. However, the model may hereafter return with a new guess at the interest rate.

Step 10: Are the balance requirement and the proceeds criterion fulfilled?

On the basis of the calculated changes, it is to be determined whether the trend function determines the funding principals in such a way that the balance requirement and the proceeds criterion have been fulfilled.

In step 6 of the model, the following criteria for mathematic convergence were introduced.

If h fulfils just one of the conditions

(i) $$\frac{|h|}{\varepsilon|GUESS(0),GUESS(1)|} < \varepsilon$$

(ii) $$\left|\frac{F(GUESS(0),GUESS(1))^2 - F((GUESS(0),GUESS(1))+h)}{F(GUESS(0),GUESS(1))^2}\right| < \varepsilon$$

h is converged and (GUESS(0),GUESS(1)) and the matching funding can be applied.

If none of the conditions has been fulfilled, repeat step 7 in stead.

Here the requirement as to mathematical convergence can be replaced by the specific conditions - the proceeds criterion and the balance requirement - as well. This means that the funding may be applied if

(iii) $$\left|Fin(0) - \sum_{j=1}^{m} K(j)M(j)\right| < \varepsilon$$

$$(iv) \qquad \left| Fin(1) - REG\,^D \frac{RG(0)}{m_0} \right| < \epsilon$$

In principle, the situation may arise in which the model repeats the increments or decrements to the coefficients of the trend function in regular intervals. Thus, the model runs in circles in the iterative procedure. The problem can be solved by setting up limitations to h of the type

$$h = sign[h] \min\left[ |h|, \ \frac{GUESS(0), GUESS(1)}{2} \right]$$

which, though, by numeric analysis has proved not to be necessary.

Step 11: Has the proceeds criterion been fulfilled?

Step 11 aims at the situation in which the model has not been able to determine a trend function satisfactorily. Thus, the funding does not fulfil both the balance requirement, or more specifically, the intended profile of interest rate adjustment is not hit, and the proceeds criterion for a given interest rate.
It cannot be excluded that no solution which fulfils both requirements exists, so the model necessarily has to continue.
The proceeds condition is, however, an indispensable requirement. Therefore, it is checked whether the proceeds condition is fulfilled. This is done by the condition

$$\left| Fin(0) - \sum_{j=1}^{m} K(j) M(j) \right| < \epsilon$$

If this is the case, then continue in step 13 - otherwise, adjust the funding principals in step 12.

Step 12: Adjust the funding

The model only reaches step 12 if it has not been possible in the inner loop at one time to meet the intended profile of interest rate adjustment and the proceeds criterion. Thus, the funding principals must be adjusted with the sole object of fulfilling the proceeds condition. Therefore, a propriate adjustment of each principal is performed.
In principle, three situations may occur

    1) The model makes an excess of funding, i.e. the funding principals must be reduced

$$M = \left( \frac{Fin(1)}{\sum_{j=1}^{m} K(j) M(j)} \right) M \qquad\qquad \text{for } M = (M(1), M(2), \ldots, M(m))$$

    2) The model makes a deficiency of funding, i.e. the funding principals must be increased. Here M(1) is maintained so that the part of the interest rate adjustment at the first occurring interest rate adjustment does not increase more than what is absolutely necessary. M(1) is determined as

$$M=\left(1,\ \frac{Fin(1)-K(1)M(1)}{\displaystyle\sum_{j=2}^{m}K(j)M(j)}\right)M \qquad \text{for } M=(M(1),M(2),\ldots,M(m))$$

3) Finally, the funding principals may sum up to zero. Here the entire funding is placed in the instrument with the shortest maturity, i.e.

$$M(1)=\frac{Fin(1)}{K(1)} \qquad \text{and } M(j)=0 \text{ for } j=\{2,3,\ldots,m\}$$

After the adjustment, the proceeds condition is fulfilled, and the model continues in step 13.

Step 13: Calculate a change to the interest rate

In this step, a change to the guess at an interest rate on the loan must be calculated. The change is calculated in relation to the yield on the portfolio of funding instruments.

Firstly, the function F(.) is defined as

$$F(R^K)=R^K-r^P$$

wherein
$r^P$ is defined as the yield on the funding portfolio.

With the definition of $F(R^K)$ the Gauss-Newton algorithm can be applied.

$$\Delta R^K=\frac{[D^TD]^{-1}D^Tg}{j_v}$$

The definitions are not to be repeated here. It should only be noted that

$$J=\frac{F(R^K)-F(R^K+inc)}{inc}$$

The algorithm can be simplified analogously to step 5 in the F model.

Step 14: Is the interest rate on the loan = the yield on the portfolio

Step 14 decides whether the outer loop is to continue or whether the model has reached a satisfactory result. The criterion for this decision is that there is accordance in the interest rate on the loan and the yield on the portfolio of funding instruments.

This means that if the condition
$\left|R^K-r^P\right|<\varepsilon$ wherein $\varepsilon$ in the model is determined to be 0.00001.
is fulfilled, then the interest rate on the loan can be accepted, and the iteration in the outer loop stopped. This means that the calculations made by the model are finished, and the model can be finished in step 16.

Otherwise, continue to step 15, wherein the guess at the interest rate on the loan is adjusted.

Step 15: Adjust the interest rate

The guess at the interest rate on the loan being rejected in step 14 is adjusted with $\Delta R$. Hereafter, the model continues in step 2, wherein repayment and interest paid by debtor are determined for the new guess at the interest rate.

Step 16: The model is finished. The result can be applied!

The model has determined an interest rate and a number of positive funding principals. Thus, the calculations are finished and the repayments and interest rates paid by debtor calculated in step 2 can be applied.

General comments to LAIR type P.

It is not on beforehand certain that the model is able to respect the intended interest rate adjustment per cent each year, even though the model determines the funding according to a long-term strategy mentioned in the introduction.

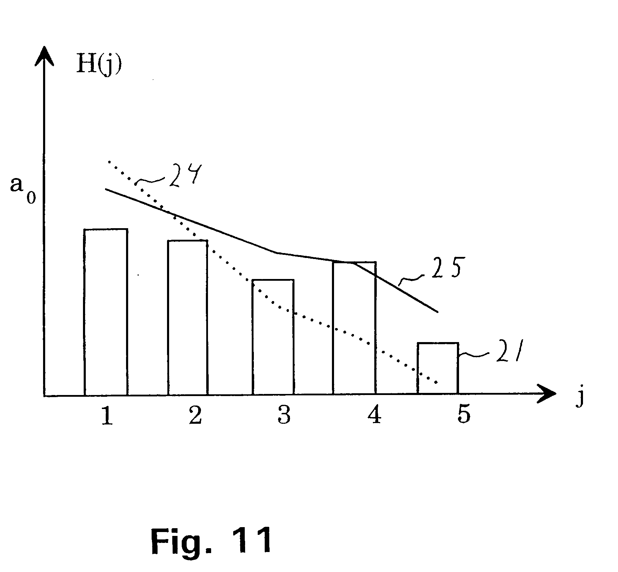

The long perspective in the determination of the funding is introduced via the adjustment of the trend function. Firstly, the trend function is estimated on the basis of the intended profile of interest rate adjustment for the whole funding period. This is, however, not a very good strategy for the funding, since the model can easily end up in the situation wherein too many issues of bonds have been performed in a single year. In the inner loop of the model, however, an increment or decrement is made to $a_1$., which is controlling the inclination of the function. In Fig. 11 is shown an example of the adjustment of the funding. The line 24 is the initial trend function determined in step 5, whereas the line 25 is the adjusted trend function which was adjusted in the steps 7-10.

Thus, only a part of the future interest rate adjustment is funded now, the rest of the funding will be performed later pari passu with the development in the interest rates.

Irrespective of the amortization of the loan, the development of interest rates will have an influence on the payments, and thus the current adjustment of the profile of funding. The problem is, however, of particular importance in connection with annuity loans.

Annuity loans are characterized in that an increasing interest rate means decreasing repayments and vice versa. For the debtors, this characteristic is favourable, since the repayments and interest to be paid are more stable. For the P model, this characteristic is not as favourable. Changes in the development of the repayments means corresponding changes in the development of the remaining debt, and thus the profile of interest rate adjustment is influenced too. If the interest rate level decreases, a situation may arise in which a future interest rate adjustment demands a lower funding principal than the one already issued. Since negative funding principals cannot be accepted, the only possibility is to abandon the intended interest rate adjustment per cent.

A possibility of facilitating the problem is to freeze the profile of repayment for annuity loans as well. This could, e.g., be performed by the profile of repayment being determined by the initial interest rate. The consequence for the debtor, however, would be a more unstable development of the repayments and interest, since the changes in the interest rate would have full impact totally and not be partially balanced by an opposite change in the repayment.

CHAPTER 8.

In this chapter an example of a preferred embodiment is described which example is called the special product model in the following.

LAIR calculated by means of the special product model is characterized in that debtor has far more options than by LAIR calculated by means of Type F or Type P. On beforehand, the debtor determines a profile of funding and thus decides the degree of interest rate adjustment in each individual year. However, it may be necessary to change debtor's pre-defined profile of funding in order to fulfil the balance principle within each year. but essentially, the debtor decides the frequency as well as the interest rate adjustment per cent.

It is one of the basic ideas of the special product that debtor can combine the Type F and the Type P products so that the loan is interest rate adjusted with fixed share in fixed intervals, but, however, not every year. This corresponds to a minor extension of the Type P model in that it is merely a question of introducing a reference to the Type F model in the calculation of funding in the years in which interest rate adjustment is performed.

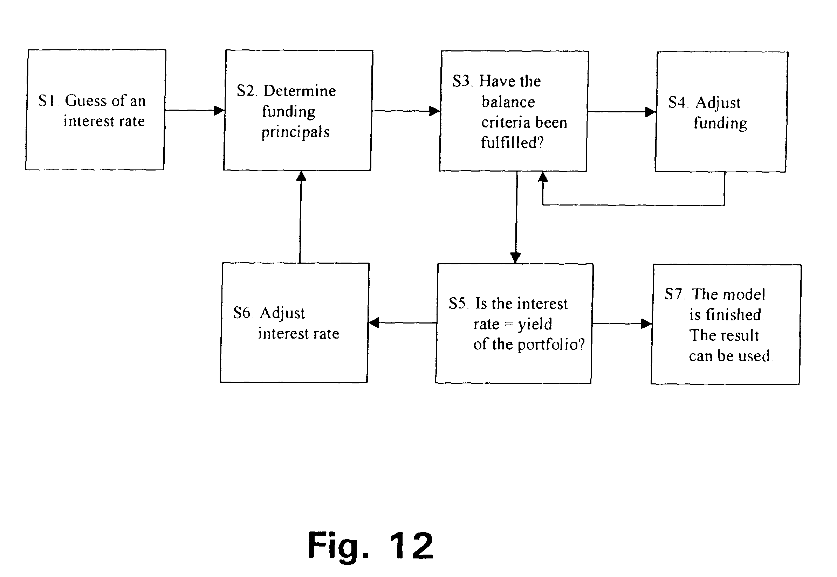

The special product is far more flexible than merely a merger between Type F and Type P loans. The model operates in 7 steps as shown in Fig. 12.

Most of the steps may be recognized from the Type F and Type P models. The most essential differences concern the determination of the funding.

Step 1: Guess at an interest rate

A guess at an interest rate on the loan is made, and the repayments and interest to be paid by debtor is determined on the basis of the guess.

Step 2: Determine funding principals

In step 2, the funding is determined on the basis of the profile of funding pre-defined by the debtor. A problem, will, however, arise in relation to the strict balance principle, if debtor has chosen not to issue in all years. Only in special cases it would be possible to observe the balance requirement in these years. Therefore, correction must be made in relation to the profile of funding pre-defined by the debtor, in such a way that all funding principals are positive and of a certain volume.

Step 3: Are the balance and proceeds criteria fulfilled?

The balance conditions and the proceeds criterion are formulated as before. Only a parameter b in the proceeds criterion is introduced, which parameter acts as increment or decrement parameter in the adjustment of the funding.

The proceeds condition is given by

$$RG(0) = \sum_{j=1}^{m} [K(j) \cdot \max(0; b \cdot H_p(j))]$$

by the disbursement of the loan, and by the interest rate adjustments as

$$Fin(0) = \sum_{j=1}^{m} K(j) \cdot \max(0; b \cdot H_p(j) - H(0,j))$$

wherein $H_p(j)$ describes the funding principal given by the pre-defined profile of funding.

Step 4: Adjust funding

If the funding does not fulfil the balance and proceeds criteria, the parameter b is increased or decreased, and the check of the criteria are repeated for the adjusted funding principals.

Step 5: Is the interest rate on the loan = yield on the portfolio?

If the funding fulfils the criteria, finally, it must be checked whether there is not an unacceptably large difference between the interest rate on the loan and the yield on the funding portfolio. Again however, a difference would be limited by the loan fulfilling the balance principle.

Step 6: Adjust an interest rate on the loan

The interest rate on the loan is adjusted on the basis of the yield of the funding portfolio.

Step 7: The model is finished. The results can be applied

If the correspondence between the interest rate on the loan and the yield on the funding portfolio is sufficient, the model is finished and the calculations can be applied.

Example of calculation

In the following, an example of a calculation of a loan according to method called Type P is described. According to the method, a number of data must be loaded, before the actual calculation is performed. These data are composed of some standard values which are common for all calculations made according to the method:

| | |
|---|---|
| Maximum difference in balance | 0.00001 oere, |
| Maximum difference in proceeds | 0.00001 oere, |
| Maximum difference in interest rate | 0.00001 percentage |
| point, and inc (the step duration in the iteration process) | 0.0001 percentage point. |

In addition to this, the system has access to a data base with specification of the financial instruments which may by applied according to the method. In this example, non-callable bullet bonds are applied, which bonds in the data base are defined with a nominal principal, coupon rate, term to maturity, interest payment dates, and ex-coupon date. Furthermore, the prices of the bonds are also indicated in the data base.

In the model according to the method, a number of data are loaded, which data specifies the loan attempted to be calculated:

Principal of the loan : 100 DKK.
Date of the disbursement of the loan : 1/1-1996.
Debtor's first payment date : 1/1-1997
Creditor's first payment date : 1/1-1997
Number of debtor payment dates per year: 1
Number of creditor payment dates per year : 1
Profile of interest rate adjustment
(number of funding instruments): P20,0. I.e. 20% of the loan is to be refinanced each year.
Repayment arrangement of the loan: Annuity.
Term to maturity of the loan: 20 years.

Since 20% of the loan is to be refinanced each year and the disbursement of the loan is performed in January, it appears from the model that 6 bonds must be applied for the funding, but since January 1st is always a holiday, it is chosen only to apply 5 bonds as if the loan had been disbursed in December.

The 5 selected bonds are:

(coupon rate, price, maturity date) =  (6, 102.0376, 1/1-1997)
(6, 103.3975, 1/1-1998)
(6, 103.3915, 1/1-1999)
(6, 102.7780, 1/1-2000)
(7, 105.8982, 1/1-2001).

The 5 selected bonds are used at the funding by the disbursement of the loan. When refinancing is to be performed after one year, the first bond has matured. Therefore, it is necessary to apply a new bond for the funding, and the model itself selects a non-callable bullet bond with a remaining term to maturity of 5 years. The model gets data concerning this bond from the data base. Since the model does not know the prices one or several years ahead of time, the model assumes that the interest rate structure and thus the bond prices have not changed.

Today, non-callable bullet bonds with a term to maturity up to 10 years exist. When the model reaches the 5th refinancing, and thus needs a bond with a remaining term to maturity of 11 years, the model will not be able to find this bond in the data base. Thus, the model "issues" a bond to be used for the calculations, and assigns to it data analogous with the data known from the other bonds. Here also, thereby the known interest rate structure is applied and with it also the prices of the bonds on the date of the issue of the loan. The model "issues" bonds having a coupon rate of 7% during the first 3 years, and thereafter a coupon rate of 8% during the following years.

The results of the model can be related to the debtor side and the funding side, respectively, the two "sides" being tied together by the balance requirement and the proceeds condition.

The debtor side

The model provides a total course of amortization fulfilling the requirement as to type of repayment. This consists of interest payments, repayments, all repayments and interest and the remaining debt at the beginning of the period made up on the basis of the payment date, see Table 1.

Column number 1 in Table 1 indicates debtor's payment date, wherein the first 4 figures indicate the year, the figures 5 and 6 indicate the month, and the last two figures indicate the day of the month.

The columns number 2-5 in Table 1 indicate interest, repayment, repayment and interest and the remaining debt at the beginning of the period in DKK for the loan, whereas the last column in Table 1 indicates the number of payment date.

Table 1

| Debtor's payment date | Interest | Repayments | Repayments and interest | The remaining debt at the beginning of the period | Number of repayment dates |
|---|---|---|---|---|---|
| 19961230 | 4.9644 | 3.0357 | 8.0000 | 100.0000 | 1 |
| 19971230 | 4.9962 | 3.1272 | 8.1234 | 96.9643 | 2 |
| 19981230 | 4.9499 | 3.2509 | 8.2008 | 93.8371 | 3 |
| 19991230 | 4.8534 | 3.3976 | 8.2510 | 90.5862 | 4 |
| 20001230 | 4.7210 | 3.5631 | 8.2841 | 87.1886 | 5 |
| 20011230 | 4.5552 | 3.7468 | 8.3020 | 83.6255 | 6 |
| 20021230 | 4.3661 | 3.9457 | 8.3118 | 79.8787 | 7 |
| 20031230 | 4.1575 | 4.1589 | 8.3164 | 75.9330 | 8 |
| 20041230 | 3.9285 | 4.3871 | 8.3156 | 71.7741 | 9 |
| 20051230 | 3.6825 | 4.6293 | 8.3118 | 67.3870 | 10 |
| 20061230 | 3.4204 | 4.8856 | 8.3060 | 62.7576 | 11 |
| 20071230 | 3.1403 | 5.1570 | 8.2973 | 57.8720 | 12 |
| 20081230 | 2.8435 | 5.4431 | 8.2866 | 52.7150 | 13 |
| 20091230 | 2.5290 | 5.7444 | 8.2734 | 47.2719 | 14 |
| 20101230 | 2.1948 | 6.0616 | 8.2564 | 41.5275 | 15 |
| 20111230 | 1.8404 | 6.3942 | 8.2346 | 35.4659 | 16 |
| 20121230 | 1.4606 | 6.7426 | 8.2032 | 29.0717 | 17 |
| 20131230 | 1.0774 | 7.0952 | 8.1726 | 22.3291 | 18 |
| 20141230 | 0.7001 | 7.4459 | 8.1460 | 15.2339 | 19 |
| 20151230 | 0.3362 | 7.7881 | 8.1243 | 7.7881 | 20 |

The funding side

The model provides the initial funding as well as the prices on the bonds in question, see Table 2. In the specific example, the funding is distributed over five principals with the prices mentioned above.

In column 1 in Table 2, the payment date is given in the same form as described for Table 1, column 1. In column 2 the volumes of the 5 bonds applied for the funding are indicated, and in column 3 the volume of the marginal bond issued is indicated. In column 4 the prices of the applied bonds are indicated, whereas in column 5, the adjustment in question is indicated.

Table 2

| Payment dates | Total issue of bonds | Marginal bond issue | Prices | |
|---|---|---|---|---|
| 19981230 | 0.2203 | | 102.0376 | disbursement of the loan |
| 19981230 | 0.2072 | | 103.3975 | |
| 19981230 | 0.1937 | | 103.3915 | |
| 19981230 | 0.1800 | | 102.7780 | |
| 19981230 | 0.1659 | | 105.8982 | |
| 19991230 | 0.2156 | 0.0084 | 102.0376 | 1st interest rate adjustment |
| 19991230 | 0.1993 | 0.0055 | 103.3975 | |
| 19991230 | 0.1837 | 0.0037 | 103.3915 | |
| 19991230 | 0.1739 | 0.0080 | 106.3065 | |
| 19991230 | 0.1637 | 0.1637 | 105.8982 | |
| 20001230 | 0.2104 | 0.0111 | 102.0376 | 2nd interest rate adjustment |
| 20001230 | 0.1913 | 0.0076 | 103.3975 | |
| 20001230 | 0.1784 | 0.0045 | 106.1270 | |
| 20001230 | 0.1676 | 0.0039 | 106.3065 | |
| 20001230 | 0.1565 | 0.1565 | 105.8982 | |

Table 2   (continued)

| Payment dates | Total issue of bonds | Marginal bond issue | Prices | |
|---|---|---|---|---|
| 20011230 | 0.2037 | 0.0124 | 102.0376 | 3rd interest |
| 20011230 | 0.1863 | 0.0079 | 105.2784 | rate |
| 20011230 | 0.1710 | 0.0034 | 106.1270 | adjustment |
| 20011230 | 0.1586 | 0.0021 | 106.3065 | |
| 20011230 | 0.1461 | 0.1461 | 110.1551 | |
| 20021230 | 0.1964 | 0.0101 | 103.0002 | etc. |
| 20021230 | 0.1776 | 0.0066 | 105.2784 | |
| 20021230 | 0.1628 | 0.0042 | 106.1270 | |
| 20021230 | 0.1513 | 0.0052 | 109.8350 | |
| 20021230 | 0.1395 | 0.1395 | 110.1551 | |
| 20031230 | 0.1906 | 0.0130 | 103.0002 | |
| 20031230 | 0.1713 | 0.0085 | 105.2784 | |
| 20031230 | 0.1559 | 0.0046 | 108.8626 | |
| 20031230 | 0.1431 | 0.0036 | 109.8350 | |
| 20031230 | 0.1298 | 0.1298 | 110.1551 | |
| 20041230 | 0.1845 | 0.0131 | 103.0002 | |
| 20041230 | 0.1647 | 0.0088 | 107.1593 | |
| 20041230 | 0.1480 | 0.0049 | 108.8626 | |
| 20041230 | 0.1348 | 0.0050 | 109.8350 | |
| 20041230 | 0.1212 | 0.1212 | 110.1551 | |
| 20051230 | 0.1778 | 0.0132 | 103.9629 | |
| 20051230 | 0.1571 | 0.0092 | 107.1593 | |
| 20051230 | 0.1400 | 0.0052 | 108.8626 | |
| 20051230 | 0.1267 | 0.0055 | 109.8350 | |
| 20051230 | 0.1130 | 0.1130 | 110.1551 | |
| 20061230 | 0.1726 | 0.0155 | 103.9629 | |
| 20061230 | 0.1509 | 0.0108 | 107.1593 | |
| 20061230 | 0.1329 | 0.0062 | 108.8626 | |
| 20061230 | 0.1173 | 0.0043 | 109.8350 | |
| 20061230 | 0.1024 | 0.1024 | 110.1551 | |
| 20071230 | 0.1671 | 0.0162 | 103.9629 | |
| 20071230 | 0.1444 | 0.0115 | 107.1593 | |
| 20071230 | 0.1241 | 0.0068 | 108.8626 | |
| 20071230 | 0.1075 | 0.0052 | 109.8350 | |
| 20071230 | 0.0919 | 0.0919 | 110.1551 | |
| 20081230 | 0.1612 | 0.0168 | 103.9629 | |
| 20081230 | 0.1363 | 0.0122 | 107.1593 | |
| 20081230 | 0.1151 | 0.0076 | 108.8626 | |
| 20081230 | 0.0976 | 0.0056 | 109.8350 | |
| 20081230 | 0.0815 | 0.0815 | 110.1551 | |
| 20091230 | 0.1550 | 0.0188 | 103.9629 | |
| 20091230 | 0.1288 | 0.0137 | 107.1593 | |
| 20091230 | 0.1061 | 0.0086 | 108.8626 | |
| 20091230 | 0.0866 | 0.0051 | 109.8350 | |
| 20091230 | 0.0694 | 0.0694 | 110.1551 | |
| 20101230 | 0.1485 | 0.0197 | 103.9629 | |
| 20101230 | 0.1207 | 0.0145 | 107.1593 | |
| 20101230 | 0.0960 | 0.0094 | 108.8626 | |
| 20101230 | 0.0752 | 0.0058 | 109.8350 | |

Table 2   (continued)

| Payment dates | Total issue of bonds | Marginal bond issue | Prices | |
|---|---|---|---|---|
| 20101230 | 0.0573 | 0.0573 | 110.1551 | |
| 20111230 | 0.1416 | 0.0209 | 103.9629 | |
| 20111230 | 0.1116 | 0.0156 | 107.1593 | |
| 20111230 | 0.0856 | 0.0104 | 108.8626 | |
| 20111230 | 0.0633 | 0.0060 | 109.8350 | |
| 20111230 | 0.0446 | 0.0446 | 110.1551 | |
| 20121230 | 0.1342 | 0.0226 | 103.9629 | |
| 20121230 | 0.1026 | 0.0170 | 107.1593 | |
| 20121230 | 0.0747 | 0.0114 | 108.8626 | |
| 20121230 | 0.0505 | 0.0059 | 109.8350 | |
| 20121230 | 0.0308 | 0.0308 | 110.1551 | |
| 20131230 | 0.1264 | 0.0238 | 103.9629 | |
| 20131230 | 0.0928 | 0.0181 | 107.1593 | |
| 20131230 | 0.0629 | 0.0123 | 108.8626 | |
| 20131230 | 0.0374 | 0.0066 | 109.8350 | |
| 20131230 | 0.0165 | 0.0165 | 110.1551 | |
| 20141230 | 0.1181 | 0.0253 | 103.9629 | |
| 20141230 | 0.0818 | 0.0189 | 107.1593 | |
| 20141230 | 0.0506 | 0.0132 | 108.8626 | |
| 20141230 | 0.0256 | 0.0091 | 109.8350 | |
| 20151230 | 0.1094 | 0.0276 | 103.9629 | |
| 20151230 | 0.0689 | 0.0183 | 107.1593 | |
| 20151230 | 0.0346 | 0.0090 | 108.8626 | |
| 20161230 | 0.1002 | 0.0313 | 103.9629 | |
| 20161230 | 0.0459 | 0.0113 | 107.1593 | |
| 20161230 | 0.0752 | 0.0293 | 103.9629 | |

It appears from Table 2 that the distribution is as follows:

| | |
|---|---|
| H(1) | 0.220314 |
| H(2) | 0.207178 |
| H(3) | 0.193740 |
| H(4) | 0.179985 |
| H(5) | 0.165899 |

It should be noted that with the indicated given prices, the proceeds condition has been fulfilled:

$$(0.220314*102.0376)+(0.207178*103.3975)+(0.193740*103.3915)+$$

$$(0.179985*102.7780)+(0.165899*105.8982) = 100.0000$$

Subsequently, the marginal funding is provided, which marginal funding is performed by each interest rate adjustment. In the specific example, the following is issued:

| | |
|---|---|
| In H(1) = the original H(2) | 0.008440 |
| H(2) = the original H(3) | 0.005525 |
| In H(3) = the original H(4) | 0.003722 |
| In H(4) = the original H(5) | 0.007978 |
| In H(5) = the new H(5) | 0.163691 |

After the first interest rate adjustment, the total amount of outstanding debts are distributed over the three principals in the following way:

$$
\begin{array}{lll}
H(1) & (0.207178+0.008440) = & 0.215617 \\
H(2) & (0.193740+0.005525) = & 0.199265 \\
H(3) & (0.179985+0.003722) = & 0.183708 \\
H(4) & (0.165899+0.007978) = & 0.173877 \\
H(5) & (0.000000+0.163691) = & 0.163691 \\
\end{array}
$$

It should be noted that the total amount of outstanding debts in H(5) is equal to the marginal funding, exactly because there has been no previous issue in this bond.

The price being interest rate adjusted is also provided. Thus, it is possible to calculate the funding proceeds from the interest rate adjustment currently (the amount of refinancing). At the first interest rate adjustment the amount of refinancing will be:

$$(0.008440*102.0376)+(0.005525*103.3975)+(0.003722*103.3915)+$$

$$(0.007978*106.3065)+(0.163691*105.8982) = 20.0000$$

This amount is correct in such a way that 1/5 of the remaining debt is interest rate adjusted. At the next interest rate adjustment, the remaining debt has become smaller, and 19.39287 is interest rate adjusted. Still, 1/5 of the remaining debt is interest rate adjusted, the remaining debt now being 96.80265.

Debtor side and funding side

In table 3, the debtor and the funding sides are shown opposite one another on an annually basis.

In column 1 the interest rate adjustment date is indicated, and in column 2 the total face value of the bonds is indicated. In column 3, the total value of maturing bonds is indicated, whereas in column 4 the amount of interest to be paid to creditor is indicated. In column 5, the columns 3 and 4 are summed up in order to provide the total amount of payments to creditor. In column 6 the amount of the total value of bonds issued in the end of the payment period is indicated. In column 7, the yield on the loan in % is indicated, whereas in column 8 the size of the remaining debt in DKK in the beginning of the payment period is indicated. In column 9 the annual interest payments in DKK is indicated, whereas in column 10 the amount of the annual repayments in DKK is indicated. The amount in column 9 and in column 10 are summed up in column 11, providing the annual amount as repayments and interest in DKK. In column 12 the size of the remaining debt in DKK in the beginning of the payment period is indicated. Thus, column 12 corresponds to column 8 (remaining debt at the beginning of the period) deducted column 10 (annual repayments). In column 13 is indicated, the size of the amount to be refinanced by the end of the payment period, whereas column 14 (the last column) indicates how large a percentage of the remaining loan is to be refinanced. It appears that exactly 20% is to be refinanced, as desired by the debtor.

| Interest rate adjustment dates | Opening issue | Bond maturities | Bond yields | creditor payments in total | Closing issue | Interest rates on the loan | Remaining debt at the beginning of the period | Annual interest payments | Annual repayments | Annual repayments and interest | Remaining debt at the end of the period | Amount to be refinanced | Interest adjustments % |
|---|---|---|---|---|---|---|---|---|---|---|---|---|---|
| 19971230 | 96.7116 | 22.0314 | 5.9686 | 28.0000 | 74.6802 | 4.9644 | 100.0000 | 4.9644 | 3.0357 | 8.0000 | 96.9643 | 20.0000 | 20.0000 |
| 19981230 | 93.6158 | 21.5617 | 5.9545 | 27.5163 | 72.0540 | 5.1526 | 96.9643 | 4.9962 | 3.1272 | 8.1234 | 93.8371 | 19.3929 | 20.0000 |
| 19991230 | 90.4228 | 21.0403 | 5.9279 | 26.9682 | 69.3825 | 5.2750 | 93.8371 | 4.9499 | 3.2509 | 8.2008 | 90.5862 | 18.7674 | 20.0000 |
| 20001230 | 86.5653 | 20.3662 | 6.0021 | 26.3683 | 66.1991 | 5.3578 | 90.5862 | 4.8534 | 3.3976 | 8.2510 | 87.1886 | 18.1172 | 20.0000 |
| 20011230 | 82.7580 | 19.6379 | 6.0839 | 25.7218 | 63.1201 | 5.4147 | 87.1886 | 4.7210 | 3.5631 | 8.2841 | 83.6255 | 17.4377 | 20.0000 |
| 20021230 | 79.0790 | 19.0627 | 5.9644 | 25.0271 | 60.0162 | 5.4471 | 83.6255 | 4.5552 | 3.7468 | 8.3020 | 79.8787 | 16.7251 | 20.0000 |
| 20031230 | 75.3158 | 18.4468 | 5.8408 | 24.2876 | 56.8691 | 5.4659 | 79.8787 | 4.3661 | 3.9457 | 8.3118 | 75.9330 | 15.9757 | 20.0000 |
| 20041230 | 71.4787 | 17.7848 | 5.7183 | 23.5030 | 53.6939 | 5.4753 | 75.9330 | 4.1575 | 4.1589 | 8.3164 | 71.7741 | 15.1866 | 20.0000 |
| 20051230 | 67.6054 | 17.2619 | 5.4084 | 22.6704 | 50.3435 | 5.4734 | 71.7741 | 3.9285 | 4.3871 | 8.3156 | 67.3870 | 14.3548 | 20.0000 |
| 20061230 | 63.5069 | 16.7087 | 5.0806 | 21.7892 | 46.7982 | 5.4647 | 67.3870 | 3.6825 | 4.6293 | 8.3118 | 62.7576 | 13.4774 | 20.0000 |
| 20071230 | 59.1713 | 16.1239 | 4.7337 | 20.8576 | 43.0475 | 5.4502 | 62.7576 | 3.4204 | 4.8856 | 8.3060 | 57.8720 | 12.5515 | 20.0000 |
| 20081230 | 54.5961 | 15.5040 | 4.3677 | 19.8717 | 39.0921 | 5.4263 | 57.8720 | 3.1403 | 5.1570 | 8.2973 | 52.7150 | 11.5744 | 20.0000 |
| 20091230 | 49.7624 | 14.8486 | 3.9810 | 18.8296 | 34.9138 | 5.3941 | 52.7150 | 2.8435 | 5.4431 | 8.2866 | 47.2719 | 10.5430 | 20.0000 |
| 20101230 | 44.6585 | 14.1552 | 3.5727 | 17.7278 | 30.5033 | 5.3500 | 47.2719 | 2.5290 | 5.7444 | 8.2734 | 41.5275 | 9.4544 | 20.0000 |
| 20111230 | 39.2747 | 13.4200 | 3.1420 | 16.5619 | 25.8548 | 5.2853 | 41.5275 | 2.1948 | 6.0616 | 8.2564 | 35.4659 | 8.3055 | 20.0000 |
| 20121230 | 33.5942 | 12.6403 | 2.6875 | 15.3278 | 20.9539 | 5.1891 | 35.4659 | 1.8404 | 6.3942 | 8.2346 | 29.0717 | 7.0932 | 20.0000 |
| 20131230 | 27.6050 | 11.8091 | 2.2084 | 14.0175 | 15.7959 | 5.0241 | 29.0717 | 1.4606 | 6.7426 | 8.2032 | 22.3291 | 5.8143 | 20.0000 |
| 20141230 | 21.2897 | 10.9353 | 1.7032 | 12.6384 | 10.3544 | 4.8252 | 22.3291 | 1.0774 | 7.0952 | 8.1726 | 15.2339 | 4.4658 | 20.0000 |
| 20151230 | 14.6154 | 10.0235 | 1.1692 | 11.1928 | 4.5918 | 4.5956 | 15.2339 | 0.7001 | 7.4459 | 8.1460 | 7.7881 | 3.0468 | 20.0000 |
| 20161230 | 7.5225 | 7.5225 | 0.6018 | 8.1243 | 0.0000 | 4.3169 | 7.7881 | 0.3362 | 7.7881 | 8.1243 | 0.0000 | 0.0000 | 0.0000 |

The total closing issue appears from year to year. It can be calculated on the basis of the data from Table 2. This is obtained by summing up the total number of issue in H(1), H(2), H(3), H(4), and H(5), respectively, from year to year.

Disbursement:

$$(0.220314+0.207178+0.193740+0.179985+0.165899)*100=97.711608$$

1st interest rate adjustment:

$$(0.215617+0.199265+0.183708+0.178377+0.163691)*100=93.615793$$

2nd interest rate adjustment:

$$(0.210403+0.191304+0.178382+0.167634+0.156506)*100=90.422842$$

Then it is possible to provide the total number of bond issues maturing at the given interest rate adjustment. It will always be the amount issued in exactly the bond maturing at the given point in time, i.e. the bond having the shortest term to maturity at the time of the interest rate adjustment. The amount of bond maturing can also be found in Table 2:

| 1st interest rate adjustment | 0.220314 |
|---|---|
| 2nd interest rate adjustment | 0.215617 |
| 3rd interest rate adjustment | 0.210403 |

Furthermore, interest payments to creditor are to be provided. These depend on the amount issued in each principal as well as the coupon rate at which the said principal is to be paid. It must be noted that the coupon rates change from year to year. The bond with a maturity of one year included in each interest rate adjustment will have a 6% coupon rate during the first 4 years. Then it will have a coupon rate of 7% during the following 3 years, and during the remaining term to maturity of the loan, the bond will have a coupon rate of 8%. From Table 2, the total number of coupon rate payments can be found in the following way:

$$\text{1st year: } (0.220314*6) + (0.207178*6) + (0.193740*6) +$$

$$(0.179985*6) + (0.165899*7) = 5.968595$$

$$\text{2nd year: } (0.215617*6) + (0.199265*6) + (0.183708*6) +$$

$$(0.173877*7) + (0.163691*7) = 5.954516$$

$$\text{3rd year: } (0.210403*6) + (0.191304*6) + (0.178382*7) +$$

$$(0.167634*7) + (0.156506*7) = 5.927892$$

Then the total number of payments to creditor can be found as the sum of bonds maturing, as well as interest payments. Furthermore, the volume of outstanding bonds at the end of the year before interest rate adjustment is provided. This is found as the difference between the opening bond issue and the volume of bonds maturing.

Then the interest rate on the loan solving the model each year is provided. Naturally, this varies in that the funding is different each year.

After the above pieces of information concerning the payment on the creditor side have been provided, the course of amortization is repeated on the debtor side. This is identical to what has previously been mentioned, only annually. In the mentioned order: remaining debt at the beginning of the period, annual interest payments, annual repayments, annual repayments and interest, and remaining debt at the end of the period.

Finally, the amount of refinancing and % of refinancing are provided. These are identical with the amounts of refinancing calculated earlier on the basis of the data provided in Table 2.

Bond yields

In Table 4 the yields of the bonds applied in the model is shown.

| Nos. of principals | Bond yields |
|---|---|
| 1 | 3.8833 |
| 2 | 4.1936 |
| 3 | 4.7602 |
| 4 | 5.2127 |
| 5 | 5.6144 |
| 6 | 6.0182 |
| 7 | 6.2406 |
| 8 | 6.4153 |
| 9 | 6.9754 |
| 10 | 6.9429 |

The bond yields are assumed to be constant during the entire term to maturity of the loan seen in relation to the term to maturity of the bonds. It is to be understood that the bond with a term to maturity of one year included in each interest rate adjustment will have a yield of 3.88%, and the bond with a term to maturity of five year included in each interest rate adjustment will have a yield of 5.61%. Since the coupon rates change currently, the prices of the bonds will also change. This appears from Table 2.

## Claims

1. A method for determining the type, the number, and the volume of financial instruments for the funding of a loan with equivalent proceeds to a debtor by means of a first computer system, the loan being designed to be at least partially refinanced during the remaining term to maturity, requirements having been made as to a maximum difference in balance between on the one hand payments on the loan and the amount of refinancing and on the other hand net payments to the owner of the financial instruments applied for the funding, requirements having been made as to a maximum difference in proceeds between on the one hand the sum of the market price of the volume of the financial instruments applied for the funding of the loan and on the other hand the principal of the loan, and requirements having been made as to a maximum difference between the interest rate on the loan and the yield on the financial instruments applied for the funding, which method comprises;

   (a) loading and storing, in a memory or a storage medium of the computer system, a first set of data indicating the parameters: principal of the loan, term to maturity, and profile of repayment of the loan,
   (b) loading and storing, in a memory or a storage medium of the computer system, a second set of data indicating a desired/intended profile of refinancing, such as one or more point(s) in time at which refinancing is to take place, and indicating the amount of the remaining debt to be refinanced at said point(s) in time,
       and/or which second set of data indicating a desired/intended profile of funding such as the desired/intended number of financial instruments applied for the funding with their type and volume,
   (c) loading and storing, in a memory or a storage medium of the computer system, a third set of data indicating a maximum difference in balance within a predetermined period, a maximum difference in proceeds and a maximum difference in interest rates equivalent to the difference between the interest rate on the loan and the yield on the financial instruments applied for the funding,
   (d) determining and storing, in a memory or a storage medium of the computer system, a fourth set of data indicating a selected number of financial instruments with inherent characteristics such as type, price/market price, and date of the price/market price,
   (e) determining and storing, in a memory or a storage medium of the computer system, a fifth set of data representing a first interest rate on the loan,

(f) calculating and storing, in a memory or a storage medium of the computer system, a sixth set of data representing a first profile of repayment and interest corresponding to interest and repayment for debtor as well as a first profile of the remaining debt, the first profile of repayment and interest and the first profile of the remaining debt being calculated on the basis of the principal of the loan, term to maturity, and profile of repayment loaded under (a), the profile of refinancing and/or profile of funding loaded under (b), and the first interest rate on the loan determined under (e),

(g) selecting a number of financial instruments among the financial instruments stored under (d), and calculating and storing a seventh set of data indicating said selected financial instruments with their volumes to be applied in the funding of the loan, which seventh set of data is calculated on the basis of the first profile of repayment and interest and first profile of the remaining debt determined under (f), the profile of refinancing indicated under (b), and/or the profile of funding indicated under (b), as well as the requirements to maximum difference in balance, maximum difference in proceeds, and/or maximum difference in interest rates determined under (c), and, in case of refinancing, where financial instruments from a previous funding have not yet matured, the type, the number and volume of these instruments, performing one or more recalculations, if necessary, including selecting a new number of the financial instruments stored under (d), if necessary, storing in a memory or a storage medium of the computer system, after each recalculation, the recalculated interest rate, the recalculated profile of repayment and interest, the recalculated profile of the remaining debt, and the selected financial instruments with their calculated volumes, until all requirements indicated under (c) have been fulfilled,

if desired, followed by transcribing, transferring to a storage medium, or transmitting to another computer system, the combination so determined of the type, the number, and the volume of financial instruments for funding the loan, preferably together with the calculated interest rate, preferably together with the calculated profile of repayment and interest, and preferably together with the calculated profile of the remaining debt.

2. The method according to claim 1, wherein the series of financial instruments in (d) is determined in such a way that at least one financial instrument is of the kind where payment falls due within the first period occurring, in which a difference in maximum balance applies.

3. The method according to claim 1 or claim 2, wherein the requirement as to difference in maximum proceeds is given by a convergence condition for difference in proceeds, and/or the requirement as to difference in maximum interest rates is given by a convergence condition for the difference in interest rate, and/or the requirement as to difference in maximum balance is determined by a convergence condition for the difference in balance.

4. The method according to any of the claims 1-3, wherein when calculating, adjustment is made for any difference between on the one hand the time of payment of the loan and/or the repayment date and, on the other hand, the payment date of the financial instruments, in such a way that the adjustment is made in relation to the already expired part or the remaining part of the payment period and the repayment period, respectively.

5. The method according to any of the claims 1-4, wherein the set of data under (b) indicates that calculation has to be performed in the case where a full refinancing of the remaining debt with a predetermined period is to be performed periodically, which period is less than the term to maturity of the loan, which method for determination of the volumes of financial instruments indicated in step (g) comprises calculation of the difference in proceeds for the calculated volumes of the financial instruments applied for the funding, and/or calculation of a change in the interest rate on the interest rate, said change in the interest rate preferably being calculated taking into consideration the calculated difference in proceeds, and calculation is made as to whether the change in the interest rate is so small that the interest rate fulfils the requirement as to difference in maximum interest rates or a convergence condition for the difference in interest rate, or whether the change in the interest rate is so small that the requirement as to difference in maximum proceeds or a convergence condition for the difference in proceeds is fulfilled.

6. The method according to claim 5, wherein, in case the requirements or conditions as to the difference in proceeds or the difference in the interest rate are not fulfilled, the recalculations comprise one or more interest rate iterations, each interest rate iteration comprising

calculating and storing, in a memory or a storage medium of the computer, data indicating a new interest rate, which is preferably based on the previous interest rate on the loan and the calculated change in interest rate, calculating and storing, in a memory or a storage medium of the computer, data indicating a new profile of repayment and interest and a new profile of the remaining debt for debtor, which new profile of the repayment and interest and new profile of the remaining debt are calculated taking into consideration the new interest rate on the loan, the principal of the loan, term to maturity, and profile of repayment loaded under (a) and the profile of refinancing and/or the profile of funding loaded under (b), and

calculating and storing, in a memory or a storage medium of the computer system, of data indicating a new set of volumes for the financial instruments applied for the funding.

7. The method according to claim 5 or 6, wherein the interest rate iteration is made by applying a numeric optimization algorithm or by "grid search".

8. The method according to claim 7, wherein the optimization algorithm is a Gauss-Newton algorithm.

9. The method according to any of the claims 5-8, said method, when the relevant requirement(s) as to maximum difference in proceeds and/or the requirement as to maximum difference in interest rate is/are fulfilled, further comprises

determining whether all the calculated volumes of financial instruments are positive, and
in case the calculated set of volumes comprises at least one negative volume, further comprises either

i) selecting a new number of financial instruments among the financial instruments stored under (d), one or more of the instruments in the new number of instruments being determined in such a way that the payment on this/these fall(s) due relatively later in relation to the original number of financial instruments, followed by performing a recalculation according to any of the claims 5-8, or
ii) the negative volume or the negative volumes is/are put equal to 0, followed by performing a recalculation in accordance with any of the claims 5-8.

10. The method according to any of the claims 1-4, wherein data set (b) indicates calculation in the case that partial refinancing of the remaining debt is carried out periodically with a predetermined period, which period is shorter than the term to maturity of the loan, for instance in such a way that the refinancing is equivalent to a fixed fraction of the remaining debt of the loan, by which method the volume of some of or all of the financial instruments applied for the funding in the first calculation in step (g) are calculated in such a way that they substantially follow a shifted level profile of the remaining debt, whereafter, if necessary, recalculations are carried out, until all the requirements mentioned under (c) have been fulfilled.

11. The method according to claim 10, wherein the volume of some of or all of the financial instruments applied at the calculation in step (g) are calculated by applying a function adjusted to a shifted level profile of the remaining debt.

12. The method according to claim 11, wherein the volume of some of or all of the financial instruments in one or more of the recalculations optionally carried out in step (g) are calculated by applying a function adjusted to a shifted level profile of the remaining debt.

13. The method according to claim 11 or 12, wherein the function is a polynomial function with a maximum degree corresponding to the number of financial instruments applied.

14. The method according to claim 13, wherein the polynomial function is calculated by use of a statistic curve fit method.

15. The method according to claim 14, wherein the statistic curve fit method is the least square's method.

16. The method according to any of the claims 10-15, wherein recalculation of all of or some of the data mentioned in (f) and (g), and/or one or more function coefficients to the function representing the shifted level profile of the remaining debt and/or the interest rate is performed by the use of iteration carried out by applying numeric optimization algorithms or by grid search.

17. The method according to claim 16, wherein the optimization algorithm is a Gauss-Newton algorithm.

18. The method according to any of the claims 10-17, wherein, in case the requirements or conditions as to the difference in proceeds and/or the difference in interest rate and/or the difference in balance calculated taking into consideration the profile of refinancing loaded under (b) are not fulfilled, the recalculation comprises one or more iterations, each iteration comprising

calculating and storing data indicating a new interest rate and/or

calculating and storing data indicating a new profile of repayment and interest and a new profile of the remaining debt for debtor, which new profile of repayment and interest and new profile of the remaining debt are calculated taking into consideration the new interest rate, the principal of the loan, term to maturity and repayment arrangement loaded under (a), and the profile of refinancing and/or the profile of funding loaded under (b), and/or

calculating and storing data indicating a new set of coefficients for the function which is adjusted to the shifted level profile of the remaining debt, and/or

calculating and storing data indicating a new set of volumes of the financial instruments applied for the funding, which new set of volumes is calculated on the basis of the financial instruments already determined for the funding, and the new profile of repayment and interest and profile of the remaining debt as well as the requirement as to maximum difference in balance.

19. The method according to any of the claims 10-18 which method in step (g) comprises determination of whether the calculated volumes of financial instruments fulfil at least two of two or more predetermined convergence conditions, preferably being calculated taking into consideration a calculated difference in proceeds and a difference in balance being calculated taking into consideration the profile of refinancing loaded under (b), and in the case that the calculated volumes of financial instruments do not fulfil these conditions, the recalculations comprise one or more iterations of the coefficients for the function which is adjusted to the shifted level profile of the remaining debt, each iteration comprising

calculating and storing data indicating two or more new function coefficients for the function representing the shifted level profile of the remaining debt,

calculating and storing data indicating a new set of volumes for the financial instruments applied for the funding, which new set of volumes is calculated taking into consideration the new function representing the shifted level profile of the remaining debt,

determining whether the new set of calculated volumes of financial instruments fulfils the at least two or more predetermined convergence conditions, until the new set of calculated volumes of financial instruments fulfil these conditions.

20. The method according to claim 19, wherein the new function coefficient(s) is/are calculated taking into consideration the calculated difference in proceeds and a difference in balance calculated taking into consideration the profile of refinancing loaded under (b).

21. The method according to claim 19 or 20 comprising the calculation of the difference between the interest rate on the loan and the interest rate on the calculated volumes of the financial instruments, determining whether the difference in interest rate is so small that it fulfils the requirement as to maximum difference in interest rate or a convergence condition for the difference in interest rate.

22. The method according to claim 21, wherein, in case the requirements as to the difference in interest rate are not fulfilled, then the recalculations include one or more interest iterations, each interest iteration including

calculating and storing a change in the interest rate, the change in the interest rate preferably being calculated taking into consideration the difference between the interest rate on the loan and the yield on the calculated volumes of the financial instruments, for instance by use of a Gauss-Newton algorithm,

calculating and storing data indicating a new interest rate preferably being based on the previous interest rate and the calculated change in the interest rate to the interest rate on the loan,

calculating and storing data indicating a new profile of repayment and interest and a new profile of the remaining debt for debtor, which new profile of repayment and interest and new profile of the remaining debt are calculated taking into consideration the new interest rate, the principal of the loan, term to maturity and the profile of repayment loaded under (a), and the profile of refinancing, and/or the profile of funding loaded under (b), and calculating and storing data indicating a new set of coefficients for the function adjusted to the shifted level profile of the remaining debt, and

calculating and storing data indicating a new set of volumes for the financial instruments applied for the funding.

23. The method according to any of the claims 10-18, comprising the determination of whether the calculated volumes of financial instruments fulfil at least three of three or more predetermined convergence conditions which are preferably calculated taking into consideration a calculated difference in proceeds, a difference in balance calculated taking into consideration the profile of refinancing loaded under (b), and a maximum difference in interest rates, and in case the calculated volumes of financial instruments do not fulfil these conditions, then the recalculations comprise one or more iterations, each iteration comprising

calculating and storing a change in the interest rate, the change in the interest rate being preferably calculated taking into consideration the difference between the interest rate on the loan and the yield on the financial instruments,

calculating and storing data indicating a new interest rate preferably being based on the previous interest rate and the calculated change in the interest rate to the interest rate on the loan,

calculating and storing data indicating a new profile of repayment and interest and a new profile of the remaining debt for debtor, which new profile of repayment and interest and profile of the remaining debt are calculated taking into consideration the new interest rate, the principal of the loan, term to maturity and the profile of repayment loaded under (a) and the profile of refinancing and/or the profile of funding loaded under (b),

calculating and storing data indicating a new set of coefficients for the function adjusted to the shifted level profile of the remaining debt, and

calculating and storing data indicating a new set of volumes for the financial instruments applied for the funding, which new set of volumes is calculated taking into consideration the new function representing the shifted level profile of the remaining debt,

determining whether the new set of calculated volumes of financial instruments fulfils the at least three or more predetermined convergence conditions.

24. The method according to any of the claims 10-23, wherein the volume of one or more financial instruments, especially the first to mature and/or the last to mature, is not calculated by use of the function representing the profile of the remaining debt, but is determined separately in order to make sure that the actual profile of refinancing is equivalent to the one loaded in (b).

25. The method according to any of the claims 10-24, wherein, in case the calculated set of volumes comprises at least one negative volume,

the negative volume(s) is/are put equal to 0 whereafter the calculations continue on the basis of the volumes of financial instruments determined in this way.

26. The method according to any of the claims 1-4, which method comprises the calculation of whether the volume of financial instruments in the profile of funding mentioned under item (b) fulfils the requirement as to maximum difference in proceeds, and in case the mentioned volumes do not fulfil this requirement, then one or more changes of the previously mentioned volumes of financial instruments is/are carried out, carrying out changes until the new set of volumes of financial instruments fulfils the requirement as to maximum difference in proceeds.

27. The method according to claim 26, which method comprises the calculation of whether the found set of volumes of financial instruments fulfils the requirement as to maximum difference in proceeds, and in case the found volumes do not fulfil this requirement, then one or more calculations of new volumes for at least one of the financial instruments which does not fulfil the requirement as to maximum difference in balance is/are carried out.

28. The method according to claim 27, wherein new volumes are calculated for one or more financial instruments, to which payments are to be performed in a period wherein the requirement as to maximum difference in balance is not fulfilled.

29. The method according to claim 27 or 28, wherein new volumes are calculated for one or more financial instruments, to which payments are to be performed in the last period wherein the requirement as to maximum difference in balance is not fulfilled.

30. The method according to claim 28 or 29, wherein the new volumes are calculated on the basis of the difference in balance for the periods wherein the equivalent, previously found volumes do not fulfil the requirement as to maximum difference in balance.

31. The method according to any of the claims 27-30, wherein calculation is carried out as to whether the new set of volumes fulfils the requirement as to maximum difference in proceeds, and in case the mentioned volumes do not fulfil this requirement, changes are carried out until the new set of volumes fulfils the requirement as to maximum difference in proceeds, and in case the new set of volumes does not fulfil the requirements as to maximum difference in balance, new volumes are calculated for at least one of the financial instruments which does not fulfil the requirement as to maximum difference in balance, the change and calculating of new set of volumes being carried out until the requirements as to maximum difference in proceeds as well as to maximum difference in balance are fulfilled.

32. The method according to any of the claims 26-31, which comprises calculation of the difference in proceeds for the calculated volumes of the financial instruments applied for the funding and/or calculation of a change in the interest rate to the interest rate on the loan, the change in the interest rate preferably being calculated taking into consideration the calculated difference in proceeds, calculating whether the change in the interest rate is so small that the interest rate on the loan fulfils the requirement as to maximum difference in interest rate or a convergence condition for the interest rate difference, or whether the change in the interest rate is so small that the requirement as to maximum difference in proceeds or a convergence condition for the difference in proceeds is fulfilled.

33. The method according to any of the claims 26-32, wherein, in case the requirements or conditions as to the difference in proceeds or the difference in interest rate are not fulfilled, then the recalculation comprises one or more interest rate iterations, each interest rate iteration comprising

calculating and storing data indicating a new interest rate, which is preferably based on the previous interest rate and the calculated change in interest rate,
calculating and storing data indicating a new profile of repayment and interest and a new profile of the remaining debt for debtor, which new profile of repayment and interest and which new profile of the remaining debt are calculated taking into consideration the new interest rate, the principal of the loan, term to maturity and repayment arrangement loaded under (a), and the profile of refinancing and/or the profile of funding loaded under (b), and
calculating and storing data indicating a new set of volumes for the financial instruments applied for the funding, which new set of volumes is calculated on the basis of the financial instruments already determined for the funding, and the new profile of repayment and interest and profile of the remaining debt as well as the requirement as to the maximum difference in balance.

34. A data processing system such as a computer system for calculating the type, the number, and the volume of financial instruments for funding of a loan with an equivalent proceeds to a debtor, the loan being designed to be at least partially refinanced during the remaining term to maturity, requirements having been made as to a maximum difference in balance between on the one hand payments on the loan and refinancing of remaining debt and on the other hand net payments to the owner of the financial instruments applied for the funding, requirements having been made as to a maximum difference in proceeds between on the one hand the sum of the market price of the volume of the financial instruments applied for the funding of the loan and on the other hand the principal of the loan, and requirements having been determined as to a maximum difference between the interest rate on the loan and the yield on the financial instruments applied for the funding, which data processing system comprises

(a) means for loading and storing a first set of data indicating the parameters: principal of the loan, term to maturity, and repayment arrangement of the loan.
(b) means for loading and storing a second set of data indicating a desired/intended profile of refinancing, such as one or more point(s) in time at which refinancing is to be performed, and which profile indicates a part of the remaining debt to be refinanced at the said point(s) in time,
and/or which second set of data indicating a desired/intended profile of funding such as a number of financial instruments applied for the funding and/or the type and volume of such said financial instruments,
(c) means for loading and storing a third set of data indicating the requirements as to the determined maximum difference in balance within a predetermined period, requirements as to the determined maximum difference in proceeds and requirements as to the determined maximum difference between the interest rate on the loan and the yield on the financial instruments applied for the funding,
(d) means for loading and storing a fourth set of data indicating a selected number of financial instruments with inherent characteristics such as type, price/yield, and price/yield date,
(e) means for loading and storing a fifth set of data representing a first interest rate on the loan,
(f) means for calculating and storing a sixth set of data representing a first profile of the repayment and interest equivalent to interest and repayment for debtor as well as a first profile of the remaining debt, said means being designed for the calculation of the first profile of the repayment and interest and the first profile of the remaining debt on the basis of the principal of the loan, term to maturity, and profile of repayment loaded under (a), the refinancing profile and/or profile of funding Loaded under (b), and the first interest rate on the loan determined under (e),

(g) means designed for selecting a number of financial instruments among the financial instruments stored under (d), and which means are designed for calculating and storing a seventh set of data indicating the selected financial instruments with their volumes for the use in funding of the loan, which means are, furthermore, designed for calculating the seventh set of data on the basis of the first profile of repayment and interest and the first profile of the remaining debt determined under (f), the profile of refinancing indicated under (b), and/or the profile of funding indicated under (b) as well as the requirements as to maximum difference in balance, maximum difference in proceeds, and/or maximum difference in interest rate indicated under (c), and, in case of refinancing, where financial instruments from a previous funding have not yet matured, the type, the number and the volume of these financial instruments, the means for calculating being designed, if necessary, to carry out one or more recalculations, including, if necessary, selecting a new number of the financial instruments stored under (d), the means being further designed, after each recalculation, to store the recalculated interest rate on the loan, the recalculated profile of repayment and interest, the recalculated profile of the remaining debt, and the selected financial instruments with their calculated volumes, until all conditions indicated under (c) have been fulfilled,

means for transcribing the combination of the type, the number, and the volume of financial instruments for the funding of the loan determined above, preferably together with the calculated interest rate, preferably together with the calculated profile of repayment and interest and preferably together with the calculated profile of the remaining debt or for transferring the combination to a storage medium or sending it to another data processing system.

**Patentansprüche**

1. Verfahren zum Bestimmen des Typs, der Anzahl und des Volumens finanzieller Instrumente für die Finanzierung eines Darlehens mit äquivalentem Ertrag für einen Schuldner mit Hilfe eines ersten Computersystems, wobei das Darlehen so gestaltet ist, daß es während der verbleibenden Laufzeit bis zur Fälligkeit wenigstens teilweise refinanziert wird, wobei Anforderungen gestellt werden hinsichtlich einer maximalen Saldodifferenz zwischen einerseits Zahlungen auf das Darlehen und der Höhe der Refinanzierung und andererseits Nettozahlungen an den Inhaber der für die Finanzierung verwendeten finanziellen Instrumente, Anforderungen gestellt werden hinsichtlich einer maximalen Ertragsdifferenz zwischen einerseits der Summe des Kurswerts des Volumens der für die Finanzierung des Darlehens verwendeten finanziellen Instrumente und andererseits der Darlehenssumme, und Anforderungen gestellt werden hinsichtlich der maximalen Differenz zwischen dem Zinssatz auf das Darlehen und der Rendite der für die Finanzierung verwendeten finanziellen Instrumente, wobei das Verfahren folgendes umfaßt:

(a) Laden und Speichern, in einem Speicher oder einem Speichermedium des Computersystems, eines ersten Datensatzes, der folgende Parameter ausdrückt: Darlehenssumme, Laufzeit bis zur Fälligkeit und Profil der Rückzahlung des Darlehens,

(b) Laden und Speichern, in einem Speicher oder einem Speichermedium des Computersystems, eines zweiten Datensatzes, der ein gewünschtes/beabsichtigtes Refinanzierungsprofil ausdrückt, so wie einen (oder mehrere) Zeitpunkt(e), an dem (denen) Refinanzierung stattzufinden hat, und der die die Höhe der verbleibenden, an dem (den) Zeitpunkt(en) rezufinanzierenden Schuld ausdrückt,

und/oder wobei der zweite Datensatz ein gewünschtes/beabsichtigtes Finanzierungsprofil ausdrückt, so wie die gewünschte/beabsichtigte Anzahl von finanziellen Instrumenten, die für die Finanzierung verwendet werden, mit deren Typ und Volumen,

(c) Laden und Speichern, in einem Speicher oder einem Speichermedium des Computersystems, eines dritten Datensatzes, der eine maximale Saldodifferenz innerhalb eines vorbestimmten Zeitraums, eine maximale Ertragsdifferenz und eine maximale Zinssatzdifferenz, die der Differenz zwischen dem Zinssatz auf das Darlehen und der Rendite der für die Finanzierung verwendeten finanziellen Instrumente entspricht, ausdrückt,

(d) Bestimmen und Speichern, in einem Speicher oder einem Speichermedium des Computersystems, eines vierten Datensatzes, der eine ausgewählte Anzahl finanzieller Instrumente mit inhärenten Charakteristika, wie Typ, Preis/Kurswert und Datum des Preises/Kurswerts ausdrückt,

(e) Bestimmen und Speichern, in einem Speicher oder einem Speichermedium des Computersystems, eines fünften Datensatzes, der einen ersten Zinssatz auf das Darlehen darstellt,

(f) Berechnen und Speichern, in einem Speicher oder einem Speichermedium des Computersystems, eines sechsten Datensatzes, der ein erstes Rückzahlungs- und Zinsprofil entsprechend Zins und Rückzahlung für den Schuldner sowie ein erstes Profil der verbleibenden Schuld darstellt, wobei das erste Rückzahlungs- und Zinsprofil und das erste Profil der verbleibenden Schuld auf der Grundlage der Darlehenssumme, der Laufzeit bis zur Fälligkeit und des Rückzahlungsprofils, geladen unter (a), des unter (b) geladenen Refinanzierungsprofils und/oder Finanzierungsprofils, und des unter (e) bestimmten ersten Zinssatzes auf dem Darlehen berechnet werden,

(g) Auswählen einer Anzahl von finanziellen Instrumenten aus den unter (d) gespeicherten finanziellen Instrumenten und Berechnen und Speichern eines siebten Datensatzes, der die ausgewählten finanziellen Instrumente mit deren Volumina, die in der Finanzierung des Darlehens zu verwenden sind, ausdrückt, wobei der siebte Datensatz berechnet wird auf der Grundlage des unter (f) bestimmten ersten Rückzahlungs- und Zinsprofils und ersten Profils der verbleibenden Schuld, des unter (b) angegebenen Refinanzierungsprofils und/ oder des unter (b) angegebenen Finanzierungsprofils, sowie der unter (c) bestimmten Anforderungen an die maximale Saldodifferenz, maximale Ertragsdifferenz und/oder maximale Zinssatzdifferenz, und, im Refinanzierungsfall, bei dem finanzielle Instrumente aus einer vorausgegangenen Finanzierung noch nicht fällig geworden sind, des Typs, der Anzahl und des Volumens dieser Instrumente, falls nötig, Durchführen einer oder mehrerer Neuberechnungen, falls nötig, einschließlich Auswählens einer neuen Anzahl der unter (d) gespeicherten finanziellen Instrumente, nach jeder Neuberechnung Speichern, in einem Speicher oder einem Speichermedium des Computersystems, des neuberechneten Zinssatzes, des neuberechneten Rückzahlungs- und Zinsprofils, des neuberechneten Profils der verbleibenden Schuld und der ausgewählten finanziellen Instrumente mit deren berechneten Volumina, bis alle unter (c) angegebenen Anforderungen erfüllt sind,

falls gewünscht, gefolgt durch Umschreiben der so bestimmten Kombination des Typs, der Anzahl und des Volumens der finanziellen Instrumente für die Finanzierung des Darlehens, vorzugsweise zusammen. mit dem berechneten Zinssatz, vorzugsweise zusammen mit dem berechneten Rückzahlungs- und Zinsprofil und vorzugsweise zusammen mit dem berechneten Profil der verbleibenden Schuld, Übertragen dieser Kombination auf ein Speichermedium oder Übermitteln dieser Kombination an ein anderes Computersystem.

2. Verfahren nach Anspruch 1, wobei die Serie finanzieller Instrumente in (d) auf eine solche Weise bestimmt wird, daß wenigstens ein finanzielles Instrument von der Art ist, bei der die Zahlung innerhalb des ersten auftretenden Zeitraums, in dem eine maximale Saldodifferenz gilt, fällig wird.

3. Verfahren nach Anspruch 1 oder 2, wobei die Anforderung hinsichtlich der maximalen Ertragsdifferenz durch eine Konvergenzbedingung für die Ertragsdifferenz gegeben ist und/oder die Anforderung hinsichtlich der maximalen Zinssatzdifferenz durch eine Konvergenzbedingung für die Zinssatzdifferenz gegeben ist, und/oder die Anforderung hinsichtlich der maximalen Saldodifferenz durch eine Konvergenzbedingung für die Saldodifferenz bestimmt wird.

4. Verfahren nach einem der Ansprüche 1-3, wobei beim Berechnen eine Korrektur für jegliche Differenz zwischen einerseits dem Zeitpunkt der Zahlung des Darlehens und/oder dem Rückzahlungsdatum und andererseits dem Zahlungsdatum der finanziellen Instrumente vorgenommen wird, derart, daß die Korrektur in Bezug auf den bereits abgelaufenen Teil oder den verbleibenden Teil des Zahlungszeitraums bzw. des Rückzahlungszeitraums gemacht wird.

5. Verfahren nach einem der Ansprüche 1-4, bei welchem der Datensatz unter (b) anzeigt, daß eine Berechnung für den Fall durchzuführen ist, bei dem eine volle Refinanzierung der verbleibenden Schuld periodisch mit einer vorbestimmten Periode, die kleiner als die Laufzeit bis zur Fälligkeit des Darlehens ist, durchzuführen ist, wobei das Verfahren zur Bestimmung der im Schritt (g) angegebenen Volumina finanzieller Instrumente die Berechnung der Ertragsdifferenz für die berechneten Volumina der für die Finanzierung verwendeten finanziellen Instrumente und/ oder die Berechnung einer Zinssatzänderung auf dem Zinssatz umfaßt, wobei die Zinssatzänderung vorzugsweise unter Berücksichtigung der berechneten Ertragsdifferenz berechnet wird, und eine Berechnung dahingehend durchgeführt wird, ob die Zinssatzänderung so klein ist, daß der Zinssatz die Anforderung hinsichtlich der maximalen Zinssatzdifferenz oder eine Konvergenzbedingung für die Zinssatzdifferenz erfüllt, oder ob die Zinssatzänderung so klein ist, daß die Anforderung hinsichtlich der maximalen Ertragsdifferenz oder eine Konvergenzbedingung für die Ertragsdifferenz erfüllt ist.

6. Verfahren nach Anspruch 5, wobei, falls die Anforderungen oder Bedingungen hinsichtlich der Ertragsdifferenz oder der Zinssatzdifferenz nicht erfüllt sind, die Neuberechnungen eine oder mehrere Zinssatziterationen umfaßt, wobei jede Zinssatziteration folgendes umfaßt:

Berechnen und Speichern, in einem Speicher oder einem Speichermedium des Computers, von Daten, die einen neuen Zinssatz ausdrücken, der vorzugsweise auf dem vorhergehenden Zinssatz auf das Darlehen und der berechneten Zinssatzänderung beruht,

Berechnen und Speichern, in einem Speicher oder einem Speichermedium des Computers, von Daten, die ein neues Rückzahlungs- und Zinsprofil und ein neues Profil der verbleibenden Schuld für den Schuldner ausdrücken, wobei das neue Rückzahlungs- und Zinsprofil und das neue Profil der verbleibenden Schuld unter Berücksichtigung des neuen Zinssatzes auf das Darlehen, der Darlehenssumme, der Laufzeit bis zur Fälligkeit und des Rückzahlungsprofils, geladen unter (a), und des Refinanzierungsprofils und/oder Finanzierungsprofils, geladen unter (b), berechnet werden, und

Berechnen und Speichern, in einem Speicher oder einem Speichermedium des Computersystems, von Daten, die einen neuen Satz von Volumina für die für die Finanzierung verwendeten finanziellen Instrumente ausdrücken.

7.  Verfahren nach Anspruch 5 oder 6, wobei die Zinssatziteration durch Anwendung eines numerischen Optimierungsalgorithmus oder durch eine "Gittersuche" durchgeführt wird.

8.  Verfahren nach Anspruch 7, wobei der Optimierungsalgorithmus ein Gauß-Newton-Algorithmus ist.

9.  Verfahren nach einem der Ansprüche 5-8, welches, wenn die relevante(n) Anforderung(en) hinsichtlich der maximalen Ertragsdifferenz und/oder die Anforderung hinsichtlich der maximalen Zinssatzdifferenz erfüllt ist/sind, weiter folgendes umfaßt:

Bestimmen, ob all die berechneten Volumina der finanziellen Instrumente positiv sind,
wobei es, falls der berechnete Satz Volumina wenigstens ein negatives Volumen umfaßt, weiter folgendes umfaßt: entweder

i) Auswählen einer neuen Anzahl finanzieller Instrumente aus den unter (d) gespeicherten finanziellen Instrumenten, wobei eines oder mehrere der Instrumente der neuen Anzahl von Instrumenten derart bestimmt wird, daß die Zahlung auf dieses/diese, bezogen auf die ursprüngliche Anzahl finanzieller Instrumente, relativ später fällig wird, gefolgt von einem Durchführen einer Neuberechnung gemäß einem der Ansprüche 5-8, oder

ii) das negative Volumen oder die negativen Volumina wird/werden mit 0 gleichgesetzt, gefolgt von einem Durchführen einer Neuberechnung gemäß einem der Ansprüche 5-8.

10. Verfahren nach einem der Ansprüche 1-4, wobei der Datensatz (b) eine Berechnung für den Fall anzeigt, daß ein partielles Refinanzieren der verbleibenden Schuld periodisch mit einer vorbestimmten Periode, die kürzer als die Laufzeit bis zur Fälligkeit des Darlehens ist, durchgeführt wird, beispielsweise derart, daß die Refinanzierung einem festen Anteil der verbleibenden Schuld auf das Darlehen entspricht, wobei mit dem Verfahren das Volumen einiger oder all der für die Finanzierung in der ersten Berechnung im Schritt (g) verwendeten finanziellen Instrumente berechnet werden, derart, daß sie im wesentlichen einem Profil der verbleibenden Schuld mit angehobenem Niveau folgen, wonach, falls nötig, Neuberechnungen durchgeführt werden, bis all die unter (c) genannten Anforderungen erfüllt sind.

11. Verfahren nach Anspruch 10, wobei das Volumen einiger oder all der bei der Berechnung im Schritt (g) verwendeten finanziellen Instrumente berechnet wird, indem eine Funktion, die an ein Profil der verbleibenden Schuld mit angehobenem Niveau angepaßt ist, verwendet wird.

12. Verfahren nach Anspruch 11, wobei das Volumen einiger oder all der finanziellen Instrumente, in einer oder mehreren der fakultativ im Schritt (g) ausgeführten Neuberechnungen berechnet wird, indem eine Funktion, die an das Profil der verbleibenden Schuld mit angehobenem Niveau angepaßt ist, verwendet wird.

13. Verfahren nach Anspruch 11 oder 12, wobei die Funktion eine Polynomfunktion mit einem maximalen Grad, welcher der Anzahl verwendeter finanzieller Instrumente entspricht, ist.

14. Verfahren nach Anspruch 13, wobei die Polynomfunktion unter Verwendung eines statistischen Kurvenanpassungsverfahrens berechnet wird.

15. Verfahren nach Anspruch 14, wobei das statistische Kurvenanpassungsverfahren das Verfahren der kleinsten Quadrate ist.

**16.** Verfahren nach einem der Ansprüche 10-15, wobei die Neuberechnung all oder einiger der in (f) und (g) genannten Daten und/oder eines oder mehrerer Funktionskoeffizienten der Funktion, welche das Profil der verbleibenden Schuld mit angehobenem Niveau repräsentiert, und/oder des Zinssatzes durch die Verwendung von Iteration durchgeführt wird, welche durch Anwenden numerischer Optimierungsalgorithmen oder durch Gittersuche ausgeführt wird.

**17.** Verfahren nach Anspruch 16, wobei der Optimierungsalgorithmus ein Gauß-Newton-Algorithmus ist.

**18.** Verfahren gemäß einem der Ansprüche 10-17, wobei, falls die Anforderungen oder Bedingungen hinsichtlich der Ertragsdifferenz und/oder der Zinssatzdifferenz und/oder der Saldodifferenz, die unter Berücksichtung des unter (b) geladenen Refinanzierungsprofils berechnet wurden, nicht erfüllt sind, die Neuberechnung eine oder mehrere Iterationen umfaßt, wobei jede Iteration folgendes umfaßt:

Berechnen und Speichern von Daten, die einen neuen Zinssatz ausdrücken, und/oder

Berechnen und Speichern von Daten, die ein neues Rückzahlungs- und Zinsprofil und ein neues Profil der verbleibenden Schuld für den Schuldner ausdrücken, wobei das neue Rückzahlungs- und Zinsprofil und das neue Profil der verbleibenden Schuld unter Berücksichtigung des neuen Zinssatzes, der Laufzeit bis zur Fälligkeit und der Rückzahlungsregelung, geladen unter (a), und des Refinanzierungsprofils und/oder des Finanzierungsprofils, geladen unter (b), berechnet werden, und/oder

Berechnen und Speichern von Daten, die einen neuen Satz von Koeffizienten für die Funktion, welche an das Profil der verbleibenden Schuld mit angehobenem Niveau angepaßt ist, ausdrücken, und/oder

Berechnen und Speichern von Daten, die einen neuen Satz von Volumina der für die Finanzierung verwendeten finanziellen Instrumente ausdrücken, wobei der neue Satz von Volumina auf der Grundlage der bereits für die Finanzierung bestimmten finanziellen Instrumente, des neuen Rückzahlungs- und Zinsprofils und des Profils der verbleibenden Schuld sowie der Anforderung hinsichtlich der maximalen Saldodifferenz berechnet wird.

**19.** Verfahren nach einem der Ansprüche 10-18, welches im Schritt (g) eine Bestimmung umfaßt, ob die berechneten Volumina der finanziellen Instrumente wenigstens zwei oder mehr vorbestimmte Konvergenzbedingungen erfüllen, die vorzugsweise unter Berücksichtigung einer berechneten Ertragsdifferenz und einer unter Berücksichtigung des unter (b) geladenen Refinanzierungsprofils berechneten Saldodifferenz berechnet werden, wobei, falls die berechneten Volumina der finanziellen Instrumente diese Bedingungen nicht erfüllen, die Neuberechnungen eine oder mehrere Iterationen der Koeffizienten für die an das Profil der verbleibenden Schuld mit angehobenem Niveau angepaßten Funktion umfassen, wobei jede Iteration folgendes umfaßt:

Berechnen und Speichern von Daten, die zwei oder mehr neue Funktionskoeffizienten für die Funktion, welche das Profil der verbleibenden Schuld mit erhöhtem Niveau repräsentiert, ausdrücken,

Berechnen und Speichern von Daten, die einen neuen Satz von Volumina für die für die Finanzierung verwendeten finanziellen Instrumente ausdrücken, wobei der neue Satz Volumina unter Berücksichtigung der neuen Funktion, welche das Profil der verbleibenden Schuld mit erhöhtem Niveau repräsentiert, berechnet wird,

Bestimmen, ob der neue Satz von berechneten Volumina der finanziellen Instrumente wenigstens zwei oder mehr vorbestimmte Konvergenzbedingungen erfüllt, bis der neue Satz von berechneten Volumina der finanziellen Instrumente diese Bedingungen erfüllt.

**20.** Verfahren nach Anspruch 19, wobei der/die neue/n Funktionskoeffizient/en unter Berücksichtigung der berechneten Ertragsdifferenz und einer unter Berücksichtigung des unter (b) geladenen Refinanzierungsprofils berechneten Saldodifferenz berechnet wird/werden.

**21.** Verfahren nach Anspruch 19 oder 20, umfassend die Berechnung der Differenz zwischen dem Zinssatz auf das Darlehen und dem Zinssatz auf die berechneten Volumina der finanziellen Instrumente, Bestimmen, ob die Zinssatzdifferenz so klein ist, daß sie die Anforderung hinsichtlich der maximalen Zinssatzdifferenz oder eine Konvergenzbedingung für die Zinssatzdifferenz erfüllt.

**22.** Verfahren nach Anspruch 21, wobei, falls die Anforderungen hinsichtlich der Zinssatzdifferenz nicht erfüllt sind, die Neuberechnungen eine oder mehrere Zinsiterationen einschließen, wobei jede Zinsiteration folgendes einschließt:

Berechnen und Speichern einer Zinssatzänderung, wobei die Zinssatzänderung vorzugsweise unter Berücksichtigung der Differenz zwischen dem Zinssatz auf das Darlehen und der Rendite der berechneten Volumina der finanziellen Instrumente berechnet wird, zum Beispiel unter Verwendung eines Gauß-Newton-Algorithmus,

Berechnen und Speichern von Daten, die einen neuen Zinssatz ausdrücken, vorzugsweise auf der Grundlage des vorhergehenden Zinssatzes und der berechneten Zinssatzänderung zum Zinssatz des Darlehens,

Berechnen und Speichern von Daten, die ein neues Rückzahlungs- und Zinsprofil und ein neues Profil der verbleibenden Schuld für den Schuldner ausdrücken, wobei das neue Rückzahlungs- und Zinsprofil und das neue Profil der verbleibenden Schuld unter Berücksichtigung des neuen Zinssatzes, der Darlehenssumme, der Laufzeit bis zur Fälligkeit und des Rückzahlungsprofils, geladen unter (a), und des Refinanzierungsprofils und/oder des Finanzierungsprofils, geladen unter (b), berechnet werden, und

Berechnen und Speichern von Daten, die einen neuen Satz von Koeffizienten für die an das Profil der verbleibenden Schuld mit erhöhtem Niveau angepaßten Funktion, ausdrücken, und

Berechnen und Speichern von Daten, die einen neuen Satz von Volumina für die für die Finanzierung verwendeten finanziellen Instrumente ausdrücken.

23. Verfahren nach einem der Ansprüche 10-18, umfassend die Bestimmung, ob die berechneten Volumina der finanziellen Instrumente wenigstens drei oder mehr vorbestimmte Konvergenzbedingungen erfüllen, die vorzugsweise unter Berücksichtigung einer berechneten Ertragsdifferenz, einer unter Berücksichtigung des unter (b) geladenen Refinanzierungsprofils berechneten Saldodifferenz und einer maximalen Zinssatzdifferenz berechnet werden, wobei, falls die berechneten Volumina der finanziellen Instrumente diese Bedingungen nicht erfüllen, die Neuberechnungen eine oder mehrere Iterationen umfassen, wobei jede Iteration folgendes umfaßt:

Berechnen und Speichern einer Zinssatzänderung, wobei die Zinssatzänderung vorzugsweise unter Berücksichtigung der Differenz zwischen dem Zinssatz auf das Darlehen und der Rendite der finanziellen Instrumente berechnet wird,

Berechnen und Speichern von Daten, die einen neuen Zinssatz ausdrücken, vorzugsweise auf der Grundlage des vorhergehenden Zinssatzes und der berechneten Zinssatzänderung zum Zinssatz des Darlehens,

Berechnen und Speichern von Daten, die ein neues Rückzahlungs- und Zinsprofil und ein neues Profil der verbleibenden Schuld für den Schuldner ausdrücken, wobei das neue Rückzahlungs- und Zinsprofil und das Profil der verbleibenden Schuld unter Berücksichtigung des neuen Zinssatzes, der Darlehenssumme, der Laufzeit bis zur Fälligkeit und des Rückzahlungsprofils, geladen unter (a), und des Refinanzierungsprofils und/oder des Finanzierungsprofils, geladen unter (b), berechnet werden,

Berechnen und Speichern von Daten, die einen neuen Satz von Koeffizienten für die an das Profil der verbleibenden Schuld mit erhöhtem Niveau angepaßten Funktion ausdrücken, und

Berechnen und Speichern von Daten, die einen neuen Satz von Volumina für die für die Finanzierung verwendeten finanziellen Instrumente ausdrücken, wobei der neue Satz Volumina unter Berücksichtigung der neuen Funktion, die das Profil der verbleibenden Schuld mit erhöhtem Niveau repräsentiert, berechnet wird,

Bestimmen, ob der neue Satz von berechneten Volumina finanzieller Instrumente, die wenigstens drei oder mehr vorbestimmten Konvergenzbedingungen erfüllt.

24. Verfahren nach einem der Ansprüche 10-23, wobei das Volumen eines oder mehrerer finanzieller Instrumente, insbesondere des zuerst und/oder zuletzt fälligen, nicht unter Verwendung der Funktion, die das Profil der verbleibenden Schuld repräsentiert, berechnet wird, sondern gesondert bestimmt wird, um sicherzustellen, daß das tatsächliche Refinanzierungsprofil dem in (b) geladenen entspricht.

25. Verfahren nach einem der Ansprüche 10-24, wobei, falls der berechnete Satz von Volumina wenigstens ein negatives Volumen umfaßt,
die negative/n Volumen/Volumina gleich 0 gesetzt wird/werden, woraufhin die Berechnungen auf der Basis von auf diese Weise bestimmten finanziellen Instrumenten fortfahren.

26. Verfahren nach einem der Ansprüche 1-4, welches die Berechnung umfaßt, ob das Volumen der finanziellen Instrumente in dem unter Punkt (b) genannten Finanzierungsprofil die Anforderung hinsichtlich der maximalen Ertragsdifferenz erfüllt, wobei, falls die genannten Volumina diese Anforderung nicht erfüllen, eine oder mehrere Änderungen der zuvor genannten Volumina finanzieller Instrumente ausgeführt wird/werden, wobei Änderungen ausgeführt werden, bis der neue Satz von Volumina finanzieller Instrumente die Anforderung hinsichtlich der maximalen Ertragsdifferenz erfüllt.

**27.** Verfahren nach Anspruch 26, welches die Berechnung umfaßt, ob der gefundene Satz von Volumina finanzieller Instrumente die Anforderung hinsichtlich der maximalen Ertragsdifferenz erfüllt, wobei, falls die gefundenen Volumina diese Anforderung nicht erfüllen, eine oder mehrere Berechnungen neuer Volumina für wenigstens eines der finanziellen Instrumente, welches die Anforderung hinsichtlich der maximalen Saldodifferenz nicht erfüllt, ausgeführt wird/werden.

**28.** Verfahren nach Anspruch 27, wobei neue Volumina berechnet werden für mehrere finanzielle Instrumente, an die Zahlungen in einem Zeitraum, in dem die Anforderung hinsichtlich der maximalen Saldodifferenz nicht erfüllt ist, zu leisten sind.

**29.** Verfahren nach Anspruch 27 oder 28, wobei neue Volumina berechnet werden für ein oder mehrere finanzielle Instrumente, an die Zahlungen in dem letzten Zeitraum, in dem die Anforderung hinsichtlich der maximalen Saldodifferenz nicht erfüllt ist, zu leisten sind.

**30.** Verfahren nach Anspruch 28 oder 29, wobei die neuen Volumina auf der Grundlage der Saldodifferenz für diejenigen Zeiträume, in denen die entsprechenden, zuvor gefundenen Volumina nicht die Anforderung hinsichtlich der maximalen Saldodifferenz erfüllen, berechnet werden.

**31.** Verfahren nach einem der Ansprüche 27-30, bei welchem eine Berechnung dahingehend durchgeführt wird, ob der neue Satz Volumina die Anforderung hinsichtlich der maximalen Ertragsdifferenz erfüllt, wobei, falls die genannten Volumina diese Anforderung nicht erfüllen, Änderungen ausgeführt werden, bis der neue Satz Volumina die Anforderung hinsichtlich der maximalen Ertragsdifferenz erfüllt, und wobei, falls der neue Satz Volumina die Anforderungen hinsichtlich der maximalen Saldodifferenz nicht erfüllt, neue Volumina für wenigstens eines der finanziellen Instrumente, welches die Anforderung hinsichtlich der maximalen Saldodifferenz nicht erfüllt, berechnet werden, wobei die Änderung und das Berechnungen des neuen Satzes Volumina durchgeführt wird, bis die Anforderungen hinsichtlich der maximalen Ertragsdifferenz sowie der maximalen Saldodifferenz im Saldo erfüllt sind.

**32.** Verfahren nach einem der Ansprüche 26-31, welches folgendes umfaßt: Berechnung der Ertragsdifferenz für die berechneten Volumina der für die Finanzierung verwendeten finanziellen Instrumente und/oder Berechnung einer Zinssatzänderung zum Zinssatz des Darlehens, wobei die Zinssatzänderung vorzugsweise unter Berücksichtigung der berechneten Ertragsdifferenz berechnet wird, Berechnen, ob die Zinssatzänderung so klein ist, daß der Zinssatz auf dem Darlehen die Anforderung hinsichtlich maximaler Zinssatzdifferenz oder eine Konvergenzbedingung für die Zinssatzdifferenz erfüllt, oder ob die Zinssatzänderung so klein ist, daß die Anforderung hinsichtlich maximaler Ertragsdifferenz oder eine Konvergenzbedingung für die Ertragsdifferenz erfüllt.

**33.** Verfahren nach einem der Ansprüche 26-32, wobei, falls die Anforderungen oder Bedingungen hinsichtlich der Ertragsdifferenz oder der Zinssatzdifferenz nicht erfüllt sind, die Neuberechnung eine oder mehrere Zinssatziterationen umfaßt, wobei jede Zinssatziteration folgendes umfaßt:

Berechnen und Speichern von Daten, die einen neuen Zinssatz ausdrücken, der vorzugsweise auf dem vorhergehenden Zinssatz und der berechneten Zinssatzänderungen beruht,
Berechnen und Speichern von Daten, die ein neues Rückzahlungs- und Zinsprofil und ein neues Profil der verbleibenden Schuld für den Schuldner ausdrücken, wobei das neue Rückzahlungs- und Zinsprofil und das neue Profil der verbleibenden Schuld unter Berücksichtigung des neuen Zinssatzes, der Darlehenssumme, der Laufzeit bis zur Fälligkeit und der Rückzahlungsregelung, geladen unter (a), und des Refinanzierungsprofils und/oder desFinanzierungsprofils, geladen unter (b), berechnet werden, und
Berechnen und Speichern von Daten, die einen neuen Satz von Volumina für die für die Finanzierung verwendeten finanziellen Instrumente ausdrücken, wobei der neue Satz Volumina auf der Grundlage der bereits für die Finanzierung bestimmten finanziellen Instrumente, des neuen Rückzahlungs- und Zinsprofils, des Profils der verbleibenden Schuld sowie der Anforderung hinsichtlich der maximalen Saldodifferenz berechnet wird.

**34.** Datenverarbeitungssystem, wie ein Computersystem, zum Berechnen des Typs, der Anzahl und des Volumens finanzieller Instrumente für die Finanzierung eines Darlehens mit äquivalentem Ertrag für einen Schuldner, wobei das Darlehen so gestaltet ist, daß es während der verbleibenden Laufzeit bis zur Fälligkeit wenigstens teilweise refinanziert wird, wobei Anforderungen gestellt werden hinsichtlich einer maximalen Saldodifferenz zwischen einerseits Zahlungen auf das Darlehen und der Höhe der Refinanzierung und andererseits Nettozahlungen an den Inhaber der für die Finanzierung verwendeten finanziellen Instrumente, Anforderungen gestellt werden hinsichtlich einer maximalen Ertragsdifferenz zwischen einerseits der Summe des Kurswerts des Volumens der für die Finanzierung des Darlehens verwendeten finanziellen Instrumente und andererseits der Darlehenssumme, und Anforderungen gestellt werden hinsichtlich der maximalen Differenz zwischen dem Zinssatz auf das Darlehen und der Rendite der für die Finanzierung verwendeten finanziellen Instrumente, wobei das Datenverarbeitungssystem folgendes umfaßt:

(a) Mittel zum Laden und Speichern eines ersten Datensatzes, der folgende Parameter ausdrückt: Darlehenssumme, Laufzeit bis zur Fälligkeit und Rückzahlungsregelung des Darlehens,

(b) Mittel zum Laden und Speichern eines zweiten Datensatzes, der ein gewünschtes/beabsichtigtes Refinanzierungsprofil ausdrückt, so wie einen (oder mehrere) Zeitpunkt(e), an dem (denen) Refinanzierung stattzufinden hat, wobei das Profil einen an dem (den) Zeitpunkt(en) rezufinanzierenden Teil der verbleibenden Schuld anzeigt,

und/oder wobei der zweite Datensatz ein gewünschtes/beabsichtigtes Finanzierungsprofil ausdrückt, so wie die gewünschte/beabsichtigte Anzahl von finanziellen Instrumenten, die für die Finanzierung verwendet werden, und/oder den Typ und das Volumen, solcher finanziellen Instrumente,

(c) Mittel zum Laden und Speichern eines dritten Datensatzes, der die Anforderungen hinsichtlich der maximalen Saldodifferenz innerhalb eines vorbestimmten Zeitraums, Anforderungen hinsichtlich der maximalen Ertragsdifferenz und Anforderungen hinsichtlich der maximalen Differenz zwischen dem Zinssatz auf dem Darlehen und.der Rendite der für die Finanzierung verwendeten finanziellen Instrumente ausdrückt,

(d) Mittel zum Laden und Speichern eines vierten Datensatzes, der eine ausgewählte Anzahl finanzieller Instrumente mit inhärenten Charakteristika, wie Typ, Preis/Kurswert und Datum des Preises/Kurswerts ausdrückt,

(e) Mittel zum Laden und Speichern eines fünften Datensatzes, der einen ersten Zinssatz auf dem Darlehen darstellt,

(f) Mittel zum Berechnen und Speichern eines sechsten Datensatzes, der ein erstes Rückzahlungs- und Zinsprofil entsprechend Zins und Rückzahlung für den Schuldner sowie ein erstes Profil der verbleibenden Schuld darstellt, wobei das erste Rückzahlungs- und Zinsprofil und das erste Profil der verbleibenden Schuld auf der Grundlage der Darlehenssumme, der Laufzeit bis zur Fälligkeit und des Rückzahlungsprofils, geladen unter (a), des unter (b) geladenen Refinanzierungsprofils und/oder Finanzierungsprofils, und des unter (e) bestimmten ersten Zinssatzes auf dem Darlehen berechnet werden,

(g) Mittel, die zum Auswählen einer Anzahl von finanziellen Instrumenten aus den unter (d) gespeicherten finanziellen Instrumenten gestaltet sind, wobei die Mittel zum Berechnen und Speichern eines siebten Datensatzes, der die ausgewählten finanziellen Instrumente mit deren Volumina zur Verwendung in der Finanzierung des Darlehens ausdrückt, gestaltet sind, und wobei die Mittel außerdem zum Berechnen des siebten Datensatzes auf der Grundlage des unter (f) bestimmten ersten Rückzahlungs- und Zinsprofils und des ersten Profils der verbleibenden Schuld, des unter (b) angegebenen Refinanzierungsprofils und/oder des unter (b) angegebenen Finanzierungsprofils, sowie der unter (c) bestimmten Anforderungen an die maximale Saldodifferenz, maximale Ertragsdifferenz und/oder maximale Zinssatzdifferenz, und, im Refinanzierungsfall, bei dem finanzielle Instrumente aus einer vorausgegangenen Finanzierung noch nicht fällig geworden sind, des Typs, der Anzahl und des Volumens dieser Instrumente, gestaltet sind, wobei die Mittel zum Berechnen so gestaltet sind, daß sie, falls nötig, eine oder mehrere Neuberechnungen durchführen, falls nötig, einschließlich des Auswählens einer neuen Anzahl der unter (d) gespeicherten finanziellen Instrumente, wobei die Mittel weiter so gestaltet sind, daß sie nach jeder Neuberechnung den neuberechneten Zinssatz auf dem Darlehen, das neuberechnete Rückzahlungs- und Zinsprofil, das neuberechnete Profil der verbleibenden Schuld und die ausgewählten finanziellen Instrumente mit deren berechneten Volumina speichern, bis alle unter (c) angegebenen Anforderungen erfüllt sind,

Mittel zum Umschreiben der oben bestimmten Kombination des Typs, der Anzahl und des Volumens der finanziellen Instrumente für die Finanzierung des Darlehens, vorzugsweise zusammen mit dem berechneten Zinssatz, vorzugsweise zusammen mit dem berechneten Rückzahlungs- und Zinsprofil und vorzugsweise zusammen mit dem berechneten Profil der verbleibenden Schuld, oder zum Übertragen der Kombination auf ein Speichermedium, oder zum Senden der Kombination an ein anderes Datenverarbeitungssystem.

## Revendications

1. Procédé pour déterminer le genre, le nombre, et le volume des instruments financiers pour le financement d'un emprunt avec des recettes équivalentes accordé à un débiteur au moyen d'un premier système informatique, l'emprunt étant conçu pour être refinancé au moins de manière partielle pendant la durée résiduelle jusqu'à son échéance, des contraintes ayant été faites, qui portent sur une différence maximum de solde entre d'une part des paiements effectués sur l'emprunt et le volume du refinancement et d'autre part, des paiements nets vers le propriétaire des instruments financiers appliqués pour le financement, des contraintes ayant été faites qui portent sur une différence maximum de recette entre d'une part la somme au prix du marché du volume des instruments financiers appliqués pour le financement de l'emprunt et d'autre part le principal de l'emprunt et des contraintes ayant été faites qui portent sur une différence maximum entre le taux d'intérêt portant sur l'emprunt et le rapport des instruments financiers appliqués pour le financement, lequel procédé comprend :

(a) un chargement et un stockage, dans une mémoire ou un support de stockage du système informatique, d'un premier jeu de données indiquant les paramètres : le principal de l'emprunt, la durée jusqu'à son échéance, et le profil de remboursement de l'emprunt,

(b) un chargement et un stockage, dans une mémoire ou un support de stockage du système informatique, d'un deuxième jeu de données indiquant un profil souhaité/ voulu de refinancement, tel un ou plusieurs points dans le temps auxquels le refinancement doit se produire, et indiquant le montant de la dette résiduelle qui doit être refinancée au(x) dit(s) point(s) dans le temps,

et/ou lequel deuxième jeu de données indiquant un profil souhaité/ voulu de financement tel que le nombre souhaité/ voulu d'instruments financiers appliqués pour le financement avec leur genre et volume,

(c) un chargement et un stockage, dans une mémoire ou un support de stockage du système informatique, d'un troisième jeu de données indiquant une différence maximum de solde dans une période prédéterminée, une différence maximum de recette et une différence maximum de taux d'intérêt équivalents à la différence entre le taux d'intérêt portant sur l'emprunt et le rapport des instruments financiers appliqués pour le financement,

(d) une détermination et un stockage, dans une mémoire ou un support de stockage du système informatique, d'un quatrième jeu de données indiquant un nombre sélectionné d'instruments financiers avec des caractéristiques inhérentes telles que le genre, le prix/ prix de marché, et la date du prix/ prix de marché,

(e) une détermination et un stockage, dans une mémoire ou un support de stockage du système informatique, d'un cinquième jeu de données représentant un premier taux d'intérêt portant sur l'emprunt,

(f) un calcul et un stockage, dans une mémoire ou un support de stockage du système informatique, d'un sixième jeu de données représentant un premier profil de remboursement et d'intérêt correspondant à un intérêt et un remboursement pour un débiteur ainsi qu'un premier profil de la dette résiduelle, le premier profil de remboursement et d'intérêt et le premier profil de la dette résiduelle étant calculés sur la base du principal de l'emprunt, de la durée jusqu'à son échéance, et du profil de remboursement chargé sous (a), le profil de refinancement et/ou le profil de financement chargé(s) sous (b), et le premier taux d'intérêt portant sur l'emprunt déterminé sous (e),

(g) une sélection d'un certain nombre d'instruments financiers parmi des instruments financiers stockés sous (d) et un calcul et un stockage d'un septième jeu de données indiquant lesdits instruments financiers sélectionnés avec leurs volumes, qui doivent être appliqués dans le financement de l'emprunt, lequel septième jeu de données est calculé sur la base du premier profil de remboursement et d'intérêt et du premier profil de la dette résiduelle déterminée sous (f), le profil de refinancement indiqué sous (b), et/ou le profil de financement indiqué sous (b), ainsi que les contraintes portant sur une différence maximum de solde, une différence maximum de recette, et/ou une différence maximum des taux d'intérêt déterminés sous (c), et, dans le cas d'un refinancement dans lequel des instruments financiers issus d'un financement antérieur ne sont pas encore arrivés à échéance, le genre, le nombre et le volume de ces instruments, un ou plusieurs recalculs, si cela est nécessaire, une inclusion de la sélection d'un nouveau nombre d'instruments financiers stockés sous (d), si cela est nécessaire, un stockage dans une mémoire ou un support de stockage du système informatique, après chaque recalcul, du taux d'intérêt recalculé, du profil recalculé de remboursement et d'intérêt, du profil recalculé de la dette résiduelle, et des instruments financiers sélectionnés avec leurs volumes calculés, jusqu'à ce que toutes les contraintes indiquées sous (c) soient satisfaites,

si cela est souhaitable, cela est suivi d'une transcription, d'un transfert vers un support de stockage ou d'une transmission vers un autre système informatique, de la combinaison ainsi déterminée du genre, du nombre et du volume des instruments financiers pour financer l'emprunt, de préférence ensemble avec le taux d'intérêt calculé, de préférence ensemble avec le profil calculé de remboursement et d'intérêt, et de préférence ensemble avec le profil calculé de la dette résiduelle.

2. Procédé conforme à la revendication 1, dans lequel la série d'instruments financiers de (d) est déterminée de telle manière qu'au moins un instrument financier soit du genre où un paiement devient exigible à l'intérieur de la première période se présentant, dans laquelle une différence de solde maximum s'applique.

**3.** Procédé conforme à la revendication 1 ou la revendication 2, dans lequel la contrainte portant sur la différence de recette maximum est donnée par une condition de convergence pour la différence de recette, et/ou la contrainte portant sur une différence de taux d'intérêt maximum est donnée par une condition de convergence portant sur la différence de taux d'intérêt, et/ou la contrainte portant sur la différence de solde maximum est déterminée par une condition de convergence portant sur la différence de solde.

**4.** Procédé conforme à l'une quelconque des revendications 1 à 3, dans lequel lors du calcul, un ajustement est fait pour toute différence entre d'une part la durée du paiement de l'emprunt et/ou la date de remboursement et, d'autre part, la date de paiement des instruments financiers, de telle manière que l'ajustement soit fait en relation avec la partie déjà expirée ou avec la partie résiduelle de la période de paiement et de la période de remboursement, respectivement.

**5.** Procédé conforme à l'une quelconque des revendications 1 à 4, dans lequel le jeu de données sous (b) indique qu'un calcul doit être effectué dans le cas où un refinancement total de la dette résiduelle avec une période prédéterminée doit être effectué de manière périodique, laquelle période est inférieure à la durée jusqu'à l'échéance de l'emprunt, lequel procédé pour déterminer les volumes des instruments financiers indiqués à l'étape (g) comprend un calcul de la différence de recette pour les volumes calculés des instruments financiers appliqués pour le financement, et/ou un calcul d'un changement du taux d'intérêt portant sur le taux d'intérêt, ledit changement dans le taux d'intérêt étant de préférence calculé en prenant -en considération la différence calculée de recette, et le calcul est effectué de manière à ce que soit le changement du taux d'intérêt reste si petit que le taux d'intérêt satisfait à la contrainte portant sur la différence de taux d'intérêt maximum ou à une condition de convergence portant sur la différence de taux d'intérêt, soit le changement de taux d'intérêt est si petit que la contrainte portant sur une différence de recette maximum ou une condition de convergence pour la différence de recette est satisfaite.

**6.** Procédé conforme à la revendication 5, dans lequel, dans le cas où les contraintes ou les conditions relatives à la différence de recette ou la différence de taux d'intérêt ne sont pas satisfaites, les recalculs comprennent une ou plusieurs itérations portant sur le taux d'intérêt, chaque itération portant sur le taux d'intérêt comprenant

un calcul et un stockage, dans une mémoire ou un support de stockage de l'ordinateur, de données indiquant un nouveau taux d'intérêt, lequel est de préférence basé sur le précédent taux d'intérêt portant sur l'emprunt et le changement calculé du taux d'intérêt,
un calcul et un stockage, dans une mémoire ou un support de stockage de l'ordinateur, de données indiquant un nouveau profil de remboursement et d'intérêt et un nouveau profil de la dette résiduelle pour un débiteur, lequel nouveau profil de remboursement et d'intérêt et lequel nouveau profil de dette résiduelle sont calculés en prenant en considération le nouveau taux d'intérêt portant sur l'emprunt, le principal de l'emprunt, la durée jusqu'à son échéance, et le profil de remboursement chargé sous (a) et le profil de refinancement et/ou le profil de financement chargé(s) sous (b), et
un calcul et un stockage, dans une mémoire ou un support de stockage du système informatique, des données indiquant un nouveau jeu de volumes pour les instruments financiers appliqués pour le financement.

**7.** Procédé conforme à la revendication 5 ou à la revendication 6, dans lequel l'itération portant sur le taux d'intérêt est faite en appliquant un algorithme d'optimisation numérique ou par une technique de "recherche dans une grille".

**8.** Procédé conforme à la revendication 7, dans lequel l'algorithme d'optimisation est un algorithme de Gauss-Newton.

**9.** Procédé conforme à l'une quelconque des revendications 5 à 8, lequel procédé, lorsque la(les) contrainte(s) pertinente(s) portant sur une différence maximum de recette et/ou la contrainte portant sur une différence maximum de taux d'intérêt est/sont remplie(s), comprend en outre

une détermination pour déterminer si le signe de tous les volumes calculés des instruments financiers est positif, et
dans le cas où le jeu de volumes calculés comprend au moins un volume négatif, le procédé comprend en outre soit

i) une sélection d'un nouveau nombre d'instruments financiers parmi les instruments financiers enregistrés sous (d), un ou plusieurs des instruments dans le nouveau nombre des instruments étant déterminé(s) de manière telle que le paiement portant sur celui-ci/ceux-ci arrive à échéance relativement plus tard en relation au nombre d'instruments financiers originel, puis suit un recalcul conforme à l'une quelconque des revendications 5 à 8, ou

ii) le volume négatif ou les volumes négatifs est/sont rendu(s) égal(égaux) à zéro, puis suit un recalcul conforme à l'une quelconque des revendications 5 à 8.

10. Procédé conforme à l'une quelconque des revendications 1 à 4, dans lequel le jeu de données (b) indique un calcul dans le cas où un refinancement partiel de la dette résiduelle est effectué de manière périodique avec une période prédéterminée, laquelle période est plus courte que la durée jusqu'à l'échéance de l'emprunt, par exemple de telle manière que le refinancement soit équivalent à une fraction fixée de la dette résiduelle de l'emprunt, procédé par lequel le volume de certains ou de tous les instruments financiers appliqués pour le financement dans le premier calcul à l'étape (g) sont calculés de telle manière qu'ils suivent sensiblement un profil de niveau décalé de la dette résiduelle, des recalculs étant ensuite effectués, si cela est nécessaire, jusqu'à ce que les contraintes mentionnées sous (c) soient satisfaites.

11. Procédé conforme à la revendication 10, dans lequel le volume de certains ou de tous les instruments financiers appliqués au calcul à l'étape (g) sont calculés en appliquant une fonction, ajustée à un niveau de profil décalé de la dette résiduelle.

12. Procédé conforme à la revendication 11, dans lequel le volume de certains ou de tous les instruments financiers dans un ou plusieurs des recalculs effectués de manière optionnelle à l'étape (g) est calculé en appliquant une fonction ajustée à un profil de niveau décalé de la dette résiduelle.

13. Procédé conforme à la revendication 11 ou la revendication 12, dans lequel la fonction est une fonction polynomiale ayant un degré maximum correspondant au nombre d'instruments financiers appliqués.

14. Procédé conforme à la revendication 13, dans lequel la fonction polynomiale est calculée par l'utilisation d'un procédé d'accord avec une courbe statistique.

15. Procédé conforme à la revendication 14, dans lequel le procédé d'accord avec une courbe statistique est le procédé des moindres carrés.

16. Procédé conforme à l'une quelconque des revendications 10 à 15, dans lequel un recalcul de toutes ou de certaines des données mentionnées dans (f) et (g) et/ou un ou plusieurs des coefficients de fonction de la fonction représentant le profil de niveau décalé de la dette résiduelle et/ou du taux d'intérêt est effectué par l'utilisation d'une itération effectuée en appliquant des algorithmes d'optimisation numériques ou par une technique de recherche dans une grille.

17. Procédé conforme à la revendication 16, dans lequel l'algorithme d'optimisation est l'algorithme de Gauss-Newton.

18. Procédé conforme à l'une quelconque des revendications 10 à 17, dans lequel, dans le cas où les contraintes ou les conditions relatives à la différence de recette et/ou la différence de taux d'intérêt et/ou la différence de solde calculées en prenant en considération le profil de refinancement chargé sous (b) ne sont pas satisfaites, le recalcul comprend une ou plusieurs itérations, chaque itération comprenant

un calcul et un stockage de données en indiquant un nouveau taux d'intérêt et/ou
un calcul et un stockage de données en indiquant un nouveau profil de remboursement et d'intérêt et un nouveau profil de la dette résiduelle pour un débiteur, lequel nouveau profil de remboursement et d'intérêt et lequel nouveau profil de dette résiduelle sont calculés en prenant en considération le nouveau taux d'intérêt, le principal de l'emprunt, la durée jusqu'à son échéance et l'arrangement de remboursement chargé sous (a), et le profil de refinancement et/ou le profil de financement chargé(s) sous (b), et/ou
un calcul et un stockage de données indiquant un nouveau jeu de coefficients pour la fonction qui est ajustée au profil de niveau décalé de la dette résiduelle, et/ou
un calcul et un stockage de données indiquant un nouveau jeu de volumes d'instruments financiers appliqués pour le financement, lequel nouveau jeu de volumes est calculé sur la base des instruments financiers déjà déterminés pour le financement, et le nouveau profil de remboursement et d'intérêt et le profil de la dette résiduelle de même que la contrainte portant sur une différence maximum de solde.

19. Procédé conforme à l'une quelconque des revendications 10 à 18, lequel procédé à l'étape (g) comprend une détermination pour déterminer si les volumes calculés des instruments financiers satisfont à au moins deux parmi deux ou plusieurs conditions de convergence prédéterminées, de préférence en étant calculées en prenant en considération une différence calculée de recette et une différence de solde étant calculée en prenant en considération le profil de refinancement chargé sous (b) et dans le cas où ces volumes calculés des instruments financiers ne satisfont à ces conditions, les recalculs comprennent une ou plusieurs itérations portant sur les coefficients pour la fonction qui est ajustée au profil de niveau décalé de la dette résiduelle, chaque itération comprenant

un calcul et un stockage de données indiquant deux ou plusieurs nouveaux coefficients de fonction pour la fonction représentant le profil de niveau décalé de la dette résiduelle,
un calcul et un stockage de données indiquant un nouveau jeu de volumes pour les instruments financiers appliqués au financement, lequel nouveau jeu de volumes est calculé en prenant en considération la nouvelle fonction représentant le profil de niveau décalé de la dette résiduelle,
une détermination pour déterminer si le nouveau jeu de volumes calculés des instruments financiers satisfait au moins aux deux parmi deux ou plusieurs conditions de convergence prédéterminées, jusqu'à ce que le nouveau jeu de volumes calculés des instruments financiers satisfasse à ces conditions.

20. Procédé conforme à la revendication 19, dans lequel le(s) nouveau(x) coefficient(s) de fonction est(sont) calculé(s) en prenant en considération la différence calculée de recette et une différence de solde calculée en prenant en considération le profil de refinancement chargé sous (b).

21. Procédé conforme à la revendication 19 ou à la revendication 20 comprenant le calcul de la différence entre le taux d'intérêt portant sur l'emprunt et le taux d'intérêt portant sur les volumes calculés des instruments financiers, en déterminant si la différence de taux d'intérêt est si petite qu'elle satisfait à la contrainte portant sur une différence maximum de taux d'intérêt ou à une condition de convergence pour la différence de taux d'intérêt.

22. Procédé conforme à la revendication 21, dans lequel, au cas où les contraintes portant sur la différence de taux d'intérêt ne sont pas satisfaites, alors les recalculs incluent une ou plusieurs itérations portant sur le taux d'intérêt, chaque itération d'intérêt comprenant

un calcul et un stockage d'un changement du taux d'intérêt, le changement du taux d'intérêt étant de préférence calculé en prenant en considération la différence entre le taux d'intérêt portant sur l'emprunt et le rapport sur les volumes calculés sur les instruments financiers, par exemple par une utilisation d'un algorithme de Gauss-Newton,
un calcul et un stockage de données indiquant un nouveau taux d'intérêt, de préférence basé sur le taux d'intérêt antérieur et le changement calculé du taux d'intérêt par rapport au taux d'intérêt portant sur l'emprunt,
un calcul et un stockage de données indiquant un nouveau profil de remboursement et d'intérêt et un profil de la dette résiduelle pour un débiteur, lequel nouveau profil de remboursement et d'intérêt et lequel nouveau profil de dette résiduelle sont calculés en prenant en considération le nouveau taux d'intérêt, le principal de l'emprunt, la durée jusqu'à son échéance, et le profil de remboursement chargé sous (a), et le profil de refinancement, et/ou le profil de financement chargé(s) sous (b), et
un calcul et un stockage de données indiquant un nouveau jeu de coefficients pour la fonction ajustée au profil de niveau décalé de la dette résiduelle, et
un calcul et un stockage de données indiquant un nouveau jeu de volumes pour les instruments financiers appliqués pour le financement.

23. Procédé conforme à l'une quelconque des revendications 10 à 18, comprenant la détermination pour déterminer si les volumes calculés des instruments financiers satisfont à au moins trois parmi trois ou plusieurs conditions de convergence prédéterminées qui sont de préférence calculées en prenant en considération une différence calculée de recette, une différence de solde, calculées en prenant en considération le profil de refinancement chargé sous (b), et une différence maximum de taux d'intérêt, et dans le cas où les volumes calculés des instruments financiers ne satisfont pas à ces conditions, plusieurs itérations, chaque itération comprenant

un calcul et un stockage d'un changement du taux d'intérêt, le changement du taux d'intérêt étant de préférence calculé en prenant en considération la différence entre le taux d'intérêt portant sur l'emprunt et le rapport des instruments financiers,
un calcul et un stockage de données indiquant un nouveau taux d'intérêt de préférence basé sur le taux d'intérêt antérieur et le changement calculé du taux d'intérêt jusqu'au taux d'intérêt portant sur l'emprunt,
un calcul et un stockage de données indiquant un nouveau profil de remboursement et d'intérêt et un nouveau profil de la dette résiduelle pour un débiteur, lequel nouveau profil de remboursement et d'intérêt et lequel profil de dette résiduelle sont calculés en prenant en considération le nouveau taux d'intérêt, le principal de l'emprunt, la durée jusqu'à son échéance et le profil de remboursement chargé sous (a) et le profil de refinancement et/ou le profil de financement chargé(s) sous (b),

un calcul et un stockage de données indiquant un nouveau jeu de coefficients pour la fonction ajustée au profil de niveau décalé de la dette résiduelle, et

un calcul et un stockage de données indiquant un nouveau jeu de volumes pour les instruments financiers appliqués au financement, lequel nouveau jeu de volumes est calculé en prenant en considération la nouvelle fonction représentant le profil de niveau décalé de la dette résiduelle,

une détermination pour déterminer si le nouveau jeu de volumes calculés des instruments financiers satisfait à au moins trois parmi trois ou plusieurs conditions de convergence prédéterminées.

24. Procédé conforme à l'une quelconque des revendications 10 à 23, dans lequel le volume d'un ou de plusieurs instruments financiers, particulièrement le premier à échoir et/ou le dernier à échoir, n'est pas calculé par une utilisation de la fonction représentant le profil de la dette résiduelle, mais est déterminé séparément de manière à assurer que le profil réel de refinancement soit équivalent à celui chargé dans (b).

25. Procédé conforme à l'une quelconque des revendications 10 à 24 dans lequel, dans le cas où le jeu de volumes calculés comprend au moins un volume négatif,

le(les) volume(s) négatif(s) est(sont) rendu(s) égal(égaux) à zéro, les calculs continuant ensuite sur la base des volumes des instruments financiers déterminés de cette manière.

26. Procédé conforme à l'une quelconque des revendications 1 à 4, lequel procédé comprend un calcul pour calculer si le volume des instruments financiers dans le profil de financement mentionné sous la rubrique (b) satisfait à la contrainte portant sur une différence maximum de recette, et dans le cas où les volumes mentionnés ne satisfont à cette contrainte, alors un ou plusieurs changements des volumes des instruments financiers mentionnés antérieurement est/sont effectué(s), en effectuant des changements jusqu'à ce que le nouveau jeu de volumes des instruments financiers satisfasse à la contrainte portant sur la différence de recette.

27. Procédé conforme à la revendication 26, lequel procédé comprend un calcul pour calculer si le jeu trouvé de volumes d'instruments financiers satisfait à la contrainte portant sur la différence maximum de recette et dans le cas où les volumes trouvés ne satisfont pas à cette contrainte, le ou les calculs des nouveaux volumes pour l'un au moins des instruments financiers qui ne satisfait pas à la contrainte portant sur la différence maximum dans le solde est/sont effectué(s).

28. Procédé conforme à la revendication 27, dans lequel des nouveaux volumes sont calculés pour un ou plusieurs instruments financiers, auxquels des paiements doivent être effectués pendant une période dans laquelle la contrainte portant sur une différence maximum de solde n'est pas satisfaite.

29. Procédé conforme à la revendication 27 ou à la revendication 28, dans lequel des nouveaux volumes sont calculés pour un ou plusieurs instruments financiers, auxquels des paiements doivent être effectués pendant la dernière période dans laquelle la contrainte portant sur la différence maximum de solde n'est pas satisfaite.

30. Procédé conforme à la revendication 28 ou à la revendication 29, dans lequel les nouveaux volumes sont calculés sur la base de la différence de solde pour les périodes dans lesquelles les volumes équivalents, trouvés de manière antérieure ne satisfont pas à la contrainte portant sur la différence maximum de solde.

31. Procédé conforme à l'une quelconque des revendications 27 à 30, dans lequel un calcul est effectué pour déterminer si le nouveau jeu de volumes satisfait à la contrainte portant sur la différence maximum de recette, et au cas où les volumes mentionnés ne satisfont pas à cette contrainte, des changements sont effectués jusqu'à ce que le nouveau jeu de volumes satisfasse à la contrainte portant sur la différence maximum de recette, et dans le cas où le nouveau jeu de volumes ne satisfait pas aux contraintes relatives à la différence maximum de solde, de nouveaux volumes sont calculés pour au moins un des instruments financiers qui ne satisfait à la contrainte portant sur la différence maximum de solde, le changement et le calcul du nouveau jeu de volumes étant effectué jusqu'à ce que les contraintes portant sur la différence maximum de recette ainsi qu'à la différence maximum de solde soient satisfaites.

32. Procédé conforme à l'une quelconque des revendications 26 à 31, qui comprend un calcul de la différence de recette pour les volumes calculés des instruments financiers appliqués pour le financement et/ou le calcul d'un changement du taux d'intérêt au taux d'intérêt portant sur l'emprunt, le changement de taux d'intérêt étant de préférence calculé en prenant en considération la différence calculée de recette, en calculant si le changement de taux d'intérêt est suffisamment petit pour que le taux d'intérêt portant sur l'emprunt satisfasse à la contrainte portant sur la différence maximum de taux d'intérêt ou à une condition de convergence pour la différence de taux d'intérêt, ou si le changement de taux d'intérêt est suffisamment petit pour que la contrainte portant sur la différence maximum de recette ou une condition de convergence pour la différence de recette soit satisfaite.

33. Procédé conforme à l'une quelconque des revendications 26 à 32, dans lequel dans le cas où les contraintes ou les conditions portant sur la différence de recette ou la différence de taux d'intérêt ne sont pas satisfaites, alors le recalcul comprend une ou plusieurs itérations portant sur le taux d'intérêt, chaque itération portant sur le taux d'intérêt comprenant

un calcul et un stockage de données indiquant un nouveau taux d'intérêt, lequel est de préférence basé sur le taux d'intérêt antérieur et le changement calculé du taux d'intérêt,

un calcul et un stockage de données indiquant un nouveau profil de remboursement et d'intérêt et un nouveau profil de la dette résiduelle pour un débiteur, lequel nouveau profil de remboursement et d'intérêt et lequel nouveau profil de la dette résiduelle sont calculés en prenant en considération le nouveau taux d'intérêt, le principal de l'emprunt, la durée jusqu'à son échéance et l'arrangement de remboursement chargé sous (a), et le profil de refinancement et/ou le profil de financement chargé(s) sous (b), et

un calcul et un stockage de données indiquant un nouveau jeu de volumes pour les instruments financiers appliqués pour le financement, lequel nouveau jeu de volumes est calculé sur la base des instruments financiers déjà déterminés pour le financement, et le nouveau profil de remboursement et d'intérêt et le profil de la dette résiduelle ainsi que la contrainte portant sur la différence maximum de solde.

34. Système de traitement des données tel un système informatique pour calculer le genre, le nombre et le volume des instruments financiers pour financer un emprunt avec une recette équivalente pour un débiteur, l'emprunt étant conçu pour être refinancé au moins de manière partielle pendant la durée résiduelle jusqu'à son échéance, des contraintes ayant été imposées relativement à une différence maximum de solde entre d'une part des paiements de l'emprunt et un refinancement de la dette résiduelle et d'autre part des paiements nets effectués vers le propriétaire des instruments financiers appliqués pour le financement, des contraintes ayant été faites quant à la différence maximum de recette entre d'une part la somme au prix du marché du volume des instruments financiers appliqués pour le financement de l'emprunt et d'autre part le principal de l'emprunt, et des contraintes ayant été déterminées quant à la différence maximum entre le taux d'intérêt portant sur l'emprunt et le rapport des instruments financiers appliqués pour le financement, lequel système de traitement des données comprend

(a) des moyens de chargement et de stockage pour charger et stocker un premier jeu de données indiquant les paramètres : le principal de l'emprunt, la durée jusqu'à son échéance, et l'arrangement de remboursement de l'emprunt.

(b) des moyens de chargement et de stockage pour charger et stocker un deuxième jeu de données indiquant un profil souhaité/ voulu de refinancement, tel un ou plusieurs points dans le temps auxquels un refinancement doit être effectué, et lequel profil indique une partie de la dette résiduelle à refinancer au(x) dit(s) point(s) dans le temps,

et/ou lequel deuxième jeu de données indiquant un profil de financement souhaité/ voulu tel un certain nombre d'instruments financiers appliqués pour le financement et/ou le genre et le volume desdits tels instruments financiers,

(c) des moyens de chargement et de stockage pour charger et stocker un troisième jeu de données indiquant les contraintes relatives à la différence maximum déterminée de solde dans une période prédéterminée, des contraintes portant sur la différence maximum déterminée de recette et des contraintes portant sur la différence maximum déterminée entre le taux d'intérêt portant sur l'emprunt et le rapport des instruments financiers appliqués pour le financement,

(d) des moyens de chargement et de stockage pour charger et stocker un quatrième jeu de données indiquant un nombre sélectionné d'instruments financiers avec leurs caractéristiques inhérentes telles le genre, le prix/ rapport, et la date du prix/ rapport,

(e) des moyens de chargement et de stockage pour charger et stocker un cinquième jeu de données représentant un premier taux d'intérêt portant sur l'emprunt,

(f) des moyens de calcul et de stockage pour calculer et stocker un sixième jeu de données représentant un premier profil du remboursement et d'intérêt équivalent à un intérêt et un remboursement pour un débiteur ainsi qu'un premier profil de la dette résiduelle, lesdits moyens étant conçus pour le calcul du premier profil de remboursement et d'intérêt et du premier profil de la dette résiduelle sur la base du principal de l'emprunt, de la durée jusqu'à son échéance, et du profil de remboursement chargé sous (a), du profil de refinancement et/ou du profil de financement chargé(s) sous (b), et du premier taux d'intérêt portant sur l'emprunt déterminé sous (e),

(g) des moyens de sélection conçus pour sélectionner un certain nombre d'instruments financiers parmi les instruments financiers stockés sous (d), et lesquels moyens sont conçus pour calculer et stocker un septième jeu de données indiquant les instruments financiers sélectionnés avec leurs volumes pour l'utilisation dans le financement de l'emprunt, lesquels moyens sont, en outre, conçus pour calculer le septième jeu de données sur la base du premier profil de remboursement et d'intérêt et du premier profil de la dette résiduelle déterminés sous (f), du profil de refinancement indiqué sous (b), et/ou du profil de financement indiqué sous (b) ainsi que les contraintes portant sur une différence maximum de solde, une différence maximum de recette, et/ ou une différence maximum de taux d'intérêt indiquées sous (c), et, dans le cas d'un refinancement dans lequel des instruments financiers issus d'un financement antérieur ne sont pas encore arrivés à échéance, le genre, le nombre et le volume de ces instruments financiers, les moyens de calcul étant conçus, si cela est nécessaire, pour effectuer un ou plusieurs recalculs en incluant, si cela est nécessaire, la sélection d'un nouveau nombre d'instruments financiers stockés sous (d), les moyens étant en outre conçus pour stocker, après chaque recalcul, le taux d'intérêt recalculé portant sur l'emprunt, le profil recalculé de remboursement et d'intérêt, le profil recalculé de la dette résiduelle, et les instruments financiers sélectionnés avec leurs volumes calculés, jusqu'à ce que toutes les conditions indiquées sous (c) soient satisfaites,

des moyens de transcription pour transcrire la combinaison du genre, du nombre, et du volume des instruments financiers pour le financement de l'emprunt déterminé ci-dessus, de préférence ensemble avec le taux d'intérêt calculé, de préférence ensemble avec le profil calculé de remboursement et d'intérêt et de préférence ensemble avec le profil calculé de la dette résiduelle ou des moyens de transfert pour transférer la combinaison vers un support de stockage ou pour l'envoyer vers un autre système de traitement des données.

Fig. 1

EP 0 838 063 B1

Fig. 2

Fig. 3

EP 0 838 063 B1

EP 0 838 063 B1

2. Determine debtor's repayment and interest

3. Determine the funding principals

4. Determine the function of proceeds

1. Determine initial interest rate

7. Adjust the interest rate

No

6. Has the condition of proceeds been fulfilled?

5. Calculate the change in the interest rate

Yes

8. Are all funding principals positive?

No

Yes

9. Change to F+

10. Interest rate funding, repayments and interest can be used.

## Fig. 4

**Fig. 5**

EP 0 838 063 B1

```
┌ ─ ─ ─ ─ ─ ┐     ┌───────────┐     ┌───────────┐     ┌───────────┐
┆ Step 9 of ┆ ──▶ │ 1. Calculate │ ──▶ │ 2. Calculate │ ──▶ │ 3. Determine │
┆ the F model ┆    │ funding    │     │ the interest │     │ debtor's   │
└ ─ ─ ─ ─ ─ ┘      │ principal  │     │ rate       │     │ repayment  │
                                                          │ and interest │
         9 S                                              └─────┬─────┘
                                                                │
                                                                ▼
                                                          ┌───────────┐
                                                          │ S4. The model │
                                                          │ is finished. The │
                                                          │ result can be used │
                                                          └───────────┘
```

```
┌ ─ ─ ─ ─ ─ ┐     ┌───────────┐     ┌───────────┐
┆ Step 9 of ┆ ──▶ │ 1. Calculate │ ──▶ │ 2. Calculate │
┆ the F model ┆    │ funding    │     │ the interest │
└ ─ ─ ─ ─ ─ ┘      │ principal  │     │ rate       │
                                      └─────┬─────┘
         9 A                                │
                                            ▼
                          ┌───────────┐     ┌───────────┐
                          │ 3. Determine │ ──▶ │ A4. Calculate │
                          │ debtor's   │     │ a change in │
                          │ repayment  │     │ the interest │
                          │ and interest │     │ rate       │
                          └─────▲─────┘     └─────┬─────┘
                                │                 │
                                │                 ▼
                ┌───────────┐   No  ┌───────────┐
                │ A6. Adjust │ ◀─────│ A5. Have  │
                │ the interest │     │ the balance │
                │ rate       │       │ criteria been │
                └───────────┘        │ fulfilled? │
                                     └─────┬─────┘
                                           │ Yes
                                           ▼
                                     ┌───────────┐
                                     │ A7. The model │
                                     │ is finished. The │
                                     │ result can be │
                                     │ used       │
                                     └───────────┘
```

# Fig. 6

EP 0 838 063 B1

84

```
┌─────────────────────┐                              ┌──────────────────────┐
│ 1.  Determine an    │      ┌────────────────────┐  │ 3.a.  As to m>2      │
│     interest rate   │─────▶│ 2.  Determine      │─▶│       continue       │
│                     │      │     debtor's       │  │       in step 4      │
└─────────────────────┘      │     profile of     │  └──────────────────────┘
                             │     repayment      │
                             │     and interest   │  ┌──────────────────────┐
                             └────────────────────┘─▶│ 3.b.  As to m<2      │
                                                      │       continue       │
                                                      │       in step 21     │
                                                      └──────────────────────┘
```

# Fig. 7

**Fig. 8**

EP 0 838 063 B1

**Fig. 9**

Fig. 10

EP 0 838 063 B1

**Fig. 11**

Fig. 12

EP 0 838 063 B1

| Memory (RAM) | | Screen | | Printer |
| 57 | | 52 | | 53 |

| Hard disc | 56 | CPU with means for control and connection | | |

| Disc drive | 55 | Keyboard | 51 | Network 54 |

50

**Fig. 13**